# EUROPEAN PATENT APPLICATION

(11) **EP 4 296 929 A1**
(43) Date of publication of application: **27.12.2023**
(21) Application number: 23180618.3
(22) Date of filing: 21.06.2023
(51) Int. Cl.: G06Q 30/01

(54) **SYSTEMS AND METHODS FOR GENERATING EXPLAINABLE PREDICTIONS**

(30) Priority: 23.06.2022 US 202263354720 P; 28.06.2022 US 202263356329 P
(71) Applicant: Odaia Intelligence Inc., Toronto ON M5C 1C4 (CA)
(72) Inventor: ZAK, Beharie, Oakville, Ontario L6H 2J7 (CA); ZHI FEI Zou, Mississauga, Ontario, L5B 4J7 (CA); MOHYNEEN Mehdi, North York, Ontario, M3H 0A7 (CA)
(74) Representative: Dehns

(57) **Abstract**

Provided are computer-implemented systems and methods for providing explainable predictions, including receiving a prediction objective from a user; providing at least one data set from at least one data source; determining, at a processor, at least one activity from the at least one data set, the at least one activity comprising a feature of the corresponding data set; generating, at the processor, at least one attribution model from the at least one feature, the at least one attribution model operative to provide a prediction and an associated explanation; generating an explainable prediction comprising a prediction rationale based on the prediction objective received from the user and the at least one attribution model.

## Description

### Field

The described embodiments relate generally to systems and methods for generating explainable predictions for customer relationship management, and specifically to generating explainable predictions that include attribution data associated with each prediction.

### Background

Customer relationship management (CRM) systems and methods are conventionally used by businesses and other organizations to administer interactions with customers. These systems and methods typically use data analysis to study large amounts of information and to provide reports and analyses for users.

CRM systems compile data from a range of different communication channels, including a company's website, telephone, email, live chat, marketing materials and more recently, social media. They allow businesses to learn more about their target audiences and how to best cater for their needs, thus retaining customers and driving sales growth. CRM systems may be used with past, present or potential customers. The concepts, procedures and rules that a corporation follows when communicating with its consumers are referred to as CRM. This complete connection covers direct contact with customers, such as sales and service-related operations, forecasting, and the analysis of consumer patterns and behaviors, from the perspective of the company.

Conventional CRM systems may provide for segmentation of customers. This segmentation may review backward looking data (such as purchase history) for a particular customer and identify a segment for that customer. Conventional CRM systems however lack advanced systems for predictive segmentation.

Conventional CRM systems may provide different reports and analyses. The reports and analyses may be backward looking, and may provide information relating to top customer targets based on historical data. These conventional CRM systems do not produce predictions that provide an explanation and/or a rationale behind their predictions.

Conventional CRM systems that function across multiple channels (i.e., different advertising or communication methods) also do not provide for attribution. That is to say, conventional systems do not evaluate or identify an event in a user's history of many potential events as a causal event.

### Summary

Provided are systems and methods for generating explainable predictions.

These predictions may include predictive segmentation, attribution, and may be accompanied by an explanation.

The predictive segmentation may include "lookalike" subject populations. Other predictions can include next best audience predictions, and next best channel predictions. These predictions each may be accompanied by an explanation, as previously indicated. The predictions may be in the form of a report and each item of the report may include an associated score. The associated score may enable a user to compare the relative ranking of the different audiences and channels in the predictive report.

In a first aspect, there is provided a computer-implemented method for providing explainable predictions, comprising: receiving a prediction objective from a user; providing, at a memory, at least one data set from at least one data source; determining, at a processor in communication with the memory, at least one activity from the at least one data set, the at least one activity comprising at least one feature of the corresponding data set; generating, at the processor, at least one attribution model from the at least one feature of the at least one activity, the at least one attribution model operative to provide a prediction and at least one prediction rationale; and generating, at the processor, an explainable prediction comprising the prediction and the at least one prediction rationale corresponding to the prediction, the at least one prediction rationale determined based on the prediction objective received from the user and the at least one attribution model.

In one or more embodiments, the determining the at least one activity may further comprise: determining at least one activity label corresponding to the at least one activity, the at least one activity label comprises a time-series activity label based on time series data in the at least one data set; and associating the at least one activity label with an initiating subject, wherein the initiating subject may optionally be a healthcare provider.

In one or more embodiments, the at least one activity label may comprise: a static activity label based on the at least one data set, the static activity label comprising one of a trend label, a frequency label, a market driver label, a loyalty label; a prediction outcome determined from the prediction objective, the prediction outcome may comprise one of market share, sales volume, and patient count; and a metric of the prediction outcome, the metric may comprise a numerical value corresponding to an increase value, a decrease value, or a neutral value of the prediction outcome.

In one or more embodiments, the generating the at least one attribution model from the at least one feature of the at least one activity may comprise: determining a plurality of time-indexed activity sequences associated with the prediction outcome; identifying at least one matching activity sub-sequence in the plurality of time-indexed activity sequences, the at least one matching activity sub-sequence may include a preceding sequence of actions based on a candidate activity label; and generating an attribution model based on the at least one matching activity sub-sequence associated with the prediction outcome.

In one or more embodiments, the preceding sequence of actions may be a variable length activity window.

In one or more embodiments, the identifying the at least one matching activity sub-sequence may comprise: determining a plurality of candidate subsequences in a plurality of time-indexed activity sequences, each of the plurality of candidate subsequences based on the candidate activity label and the preceding sequence of actions; generating a trend model based on the at least one matching activity sub-sequence; wherein the determined metric may be a lift metric associated with each of the plurality of candidate subsequences; and wherein the at least one matching activity sub-sequence may be selected based on the lift metric associated with each of the plurality of candidate subsequences.

In one or more embodiments, the method may further include executing a SPMF algorithm.

In one or more embodiments, the method may further include generating a binary classification model based on the at least one matching activity sub-sequence and the associated lift metric; wherein the generating the at least one attribution model from the at least one feature of the at least one activity comprises generating the at least one attribution model based on an output of the SPMF algorithm, the binary classification model, and the trend model; and wherein the attribution model may be one of a Shapley model, a Markov model and a causal model.

In one or more embodiments, the method may further include: determining an initiation model for each of a plurality of initiating subjects, each initiation model based on the at least one activity of the corresponding initiating subject and comprising a regression model; generating a predicted metric for a future time period based on the initiation model for the corresponding initiating subject; using an explanatory algorithm to generate a prediction explanation based on the at least one attribution model; and wherein the predicted metric may include a numerical prediction and the prediction explanation.

In one or more embodiments, the explanatory algorithm may include at least one of a Local Interpretable Model-Agnostic Explanation algorithm or a SHapley Additive exPlanations (SHAP) algorithm.

In one or more embodiments, the regression model may be one of an ARIMA model, an XGBoost model, or a time series forecasting model.

In one or more embodiments, the method may further include determining a segment label for each corresponding initiating subject based on the predicted metric for the future time period.

In one or more embodiments, the segment label may be determined based on an odds ratio model.

In one or more embodiments, the segment label may be determined based on a classifier.

In one or more embodiments, the segment label may include a rising star label, a grower label, a shrinker label, or a switcher label.

In one or more embodiments, the determining the segment label may include: determining an embedding vector based on data from the at least one data source associated with the initiating subject; and generating at least one matching seed, the at least one matching seed based on the embedding vector, the at least one matching seed corresponding to a predicted segment label.

In one or more embodiments, the method may further include identifying a distance metric for each of the at least one matching seed; and ranking the at least one matching seed based on the distance metric.

In one or more embodiments, the predicted segment label may be a lookalike segment label for the initiating subject based on the at least one matching seed.

In one or more embodiments, the method may further include performing a semi-supervised learning algorithm.

In one or more embodiments, the prediction objective from the user may be received in a prediction request at a network device in communication with the processor, and the method may further include: transmitting, using the network device, a prediction response comprising the explainable prediction to the user.

In a second aspect, there is provided a computer-implemented system for providing explainable predictions, comprising: a memory, the memory storing at least one attribution model; a network device; a processor in communication with the memory and the network device, the processor configured to: receive a prediction objective from a user via the network device; receive at least one data set from at least one data source via the network device; determine at least one activity from the at least one data set, the at least one activity comprising at least one feature of the corresponding data set; generate at least one attribution model from the at least one feature of the at least one activity, the at least one attribution model operative to provide a prediction and at least one prediction rationale; and generate an explainable prediction comprising the prediction and the at least one prediction rationale based on the prediction objective received from the user and the at least one attribution model.

In one or more embodiments, the determining the at least one activity may further include: determining at least one activity label corresponding to the at least one activity, the at least one activity label comprises a time-series activity label based on time series data in the at least one data set; and associating the at least one activity label with an initiating subject, wherein the initiating subject may optionally be a healthcare provider.

In one or more embodiments, the at least one activity label may comprise a static activity label based on the at least one data set, the static activity label comprising one of a trend label, a frequency label, a market driver label, a loyalty label; a prediction outcome determined from the prediction objective, the prediction outcome may comprise one of market share, sales volume, and patient count; and a metric of the prediction outcome, the metric may comprise a numerical value corresponding to an increase value, a decrease value, or a neutral value of the prediction outcome.

In one or more embodiments, the generating the at least one attribution model from the at least one feature of the at least one activity may include: determining a plurality of time-indexed activity sequences associated with the prediction outcome; identifying at least one matching activity sub-sequence in the plurality of time-indexed activity sequences, the at least one matching activity sub-sequence including a preceding sequence of actions based on a candidate activity label; and generating an attribution model based on the at least one matching activity sub-sequence associated with the prediction outcome.

In one or more embodiments, the preceding sequence of actions may be a variable length activity window.

In one or more embodiments, the identifying the at least one matching activity sub-sequence may include: determining a plurality of candidate subsequences in the plurality of time-indexed activity sequences, each of the plurality of candidate subsequences based on the candidate activity label and the preceding sequence of actions; generating a trend model based on the at least one matching activity sub-sequence; wherein the determined metric may be a lift metric associated with each of the plurality of candidate subsequences; and wherein the at least one matching activity sub-sequence may be selected based on the lift metric associated with each of the plurality of candidate subsequences.

In one or more embodiments, the processor may be further configured to execute an SPMF algorithm to determine a length of a window of the preceding sequence of actions.

In one or more embodiments, the processor may be further configured to: generate a binary classification model based on the at least one matching activity sub-sequence and the associated lift metric; wherein the generating the at least one attribution model from the at least one feature of the at least one activity may comprise generating the at least one attribution model based on an output of the SPMF algorithm, the binary classification model, and the trend model; and wherein the attribution model may be one of a Shapley model, a Markov model and a causal model.

In one or more embodiments, the processor may be further configured to: determine an initiation model for each of a plurality of initiating subjects, each initiation model based on the at least one activity of the corresponding initiating subject and comprising a regression model; generate a predicted metric for a future time period based on the initiation model for the corresponding initiating subject; use an explanatory algorithm to generate a prediction explanation based on the at least one attribution model; and wherein the predicted metric may comprise a numerical prediction and the prediction explanation.

In one or more embodiments, the explanatory algorithm may include at least one of a Local Interpretable Model-Agnostic Explanation algorithm or a SHapley Additive exPlanations algorithm.

In one or more embodiments, the regression model may be one of an ARIMA model, an XGBoost model, or a time series forecasting model.

In one or more embodiments, the processor may be further configured to: determine a segment label for each corresponding initiating subject based on the predicted metric for the future time period.

In one or more embodiments, the segment label may be determined based on an odds ratio model.

In one or more embodiments, the segment label may be determined based on a classifier.

In one or more embodiments, the segment label may include a rising star label, a grower label, a shrinker label, or a switcher label.

In one or more embodiments, the determining the segment label may comprise: determining an embedding vector based on data from the at least one data source associated with the initiating subject; and generating at least one matching seed, the at least one matching seed based on the embedding vector, the at least one matching seed corresponding to a predicted segment label.

In one or more embodiments, the processor may be further configured to: identify a distance metric for each of the at least one matching seed; and rank the at least one matching seed based on the distance metric.

In one or more embodiments, the predicted segment label may be a lookalike segment label for the initiating subject based on the at least one matching seed.

In one or more embodiments, the processor may be further configured to perform a semi-supervised learning algorithm.

In one or more embodiments, the prediction objective from the user may be received in a prediction request at the network device; and the processor may be further configured to transmit, using the network device, a prediction response comprising the explainable prediction to the user.

In a third aspect, there is provided a computer-implemented method for explainable audience reporting, comprising: providing, at a display device of a user device, an audience reporting interface; receiving, from a user input device of the user device, an audience prediction objective; transmitting, at a network device of the user device to an explainable prediction system, an audience prediction request comprising the audience prediction objective; receiving, at the network device of the user device from the explainable prediction system, an audience prediction response corresponding to the audience prediction request, the audience prediction response comprising a plurality of audience predictions, each audience prediction comprising a prediction and at least one prediction rationale corresponding to the prediction; and displaying, at the display device of the user device, the audience reporting interface comprising the plurality of audience predictions and the corresponding at least one prediction rationale.

In one or more embodiments, each of the plurality of audience predictions may include an audience score; and the audience reporting interface may display the plurality of audience predictions in a ranked list ranked based on the corresponding audience scores.

In one or more embodiments, each of the plurality of audience predictions may correspond to an initiating subject and may optionally be a healthcare provider.

In one or more embodiments, each of the plurality of audience predictions may include one or more audience segments, further comprising: displaying, at the display device of the user device, the one or more audience segments on the ranked list on the audience reporting interface.

In one or more embodiments, the method may further include displaying, at the display device of the user device, a change in the audience score of a changing audience prediction in the plurality of audience predictions.

In one or more embodiments, the audience score may be a numerical score corresponding to an audience subject.

In one or more embodiments, the audience score may be a categorical score corresponding to an audience subject.

In one or more embodiments, each of the plurality of audience predictions may include an audience identifier, and the method may further comprise: receiving, from the user input device of the user device, a selection of a candidate audience prediction in the plurality of audience predictions; and displaying, at the display device of the user device, the audience reporting interface comprising audience data corresponding to the audience identifier associated with the candidate audience prediction.

In one or more embodiments, the method may further include: displaying, at the display device of the user device, the audience reporting interface comprising the at least one prediction rationale corresponding to the candidate audience prediction.

In one or more embodiments, the at least one prediction rationale may include at least one explanation for the candidate audience prediction.

In one or more embodiments, the method may further include: receiving, from the user input device of the user device, a selection of a candidate audience prediction in the plurality of audience predictions; and displaying, at the display device of the user device, the audience reporting interface comprising contact timeline data corresponding to an audience identifier associated with the candidate audience prediction.

In one or more embodiments, the method may further include: receiving, from the user input device of the user device, a note input corresponding to an entry of the contact timeline data; and transmitting, from the network device to the explainable prediction system, the note input corresponding to the entry of the contact timeline data.

In one or more embodiments, each of the plurality of audience predictions may include at least two corresponding audience scores, the at least two corresponding audience scores may include a first audience score for a prior time period and a second audience score for a current time period, and the method may further include: receiving, from the user input device of the user device, a selection of a candidate audience prediction in the plurality of audience predictions; and displaying, at the display device of the user device, the audience reporting interface comprising the first audience score for the prior time period and the second audience score for the current time period.

In one or more embodiments, the audience reporting interface may further comprise a channel communication prediction, the channel communication prediction corresponding to the audience identifier associated with the candidate audience prediction.

In one or more embodiments, the channel communication prediction may comprise one of a face-to-face meeting activity prediction, a telephone call activity prediction, an email activity prediction, an advertisement activity prediction, a lunch and learn activity prediction, a learning channel prediction, a sample drop channel prediction and any other channel that the customer might utilize.

In a fourth aspect, there is provided a computer-implemented system for explainable audience reporting, comprising: a display device for displaying an audience reporting interface; a user input device receiving an audience prediction objective from a user; a network device; a processor configured to: transmit, using the network device, an audience prediction request to an explainable prediction system, the audience prediction request comprising the audience prediction objective; receive, using the network device, an audience prediction response corresponding to the audience prediction request from the explainable prediction system, the audience prediction response comprising a plurality of audience predictions, each audience prediction comprising a prediction and at least one prediction rationale corresponding to the prediction; and display, using the display device, the audience reporting interface comprising the plurality of audience predictions and the corresponding at least one prediction rationale.

In one or more embodiments, each of the plurality of audience predictions may include an audience score; and the audience reporting interface may display the plurality of audience predictions in a ranked list ranked based on the corresponding audience scores.

In one or more embodiments, each of the plurality of audience predictions may correspond to an initiating subject, and optionally may be a healthcare provider.

In one or more embodiments, each of the plurality of audience predictions may include one or more audience segments, and the processor may be further configured to display, at the display device, the one or more audience segments on the ranked list on the audience reporting interface.

In one or more embodiments, the system may further include displaying, at the display device, a change in the audience score of a changing audience prediction in the plurality of audience predictions.

In one or more embodiments, the audience score may be a numerical score corresponding to an audience subject.

In one or more embodiments, the audience score may be a categorical score corresponding to an audience subject.

In one or more embodiments, each of the plurality of audience predictions may include an audience identifier, and the processor may be further configured to: receive, from the user input device, a selection of a candidate audience prediction in the plurality of audience predictions; and display, at the display device, the audience reporting interface comprising audience data corresponding to the audience identifier associated with the candidate audience prediction.

In one or more embodiments, the system may further include: displaying, at the display device the audience reporting interface comprising at least one prediction rationale corresponding to the candidate audience prediction.

In one or more embodiments, the at least one prediction rationale may include at least one explanation for the candidate audience prediction.

In one or more embodiments, the processor may be further configured to: receive, from the user input device, a selection of a candidate audience prediction in the plurality of audience predictions; and display, at the display device, the audience reporting interface comprising contact timeline data corresponding to an audience identifier associated with the candidate audience prediction.

In one or more embodiments, the processor may be further configured to: receive, from the user input device, a note input corresponding to an entry of the contact timeline data; and transmit, from the network device to the explainable prediction system, the note input corresponding to the entry of the contact timeline data.

In one or more embodiments, each of the plurality of audience predictions may include at least two corresponding audience scores, the at least two corresponding audience scores may include a first audience score for a prior time period and a second audience score for a current time period, and the processor may be further configured to: receive, from the user input device, a selection of a candidate audience prediction in the plurality of audience predictions; and display, at the display device, the audience reporting interface comprising the first audience score for the prior time period and the second audience score for the current time period.

In one or more embodiments, the audience reporting interface may further comprise a channel communication prediction, the channel communication prediction corresponding to the audience identifier associated with the candidate audience prediction.

In one or more embodiments, the channel communication prediction may comprise one of a face-to-face meeting activity prediction, a telephone call channel prediction, an email channel prediction, an advertisement channel prediction, a lunch and learn channel prediction, a learning channel prediction and a sample drop channel prediction. Other channels may be included in the prediction, as are known.

In a fifth aspect, there is provided a computer-implemented method for providing explainable predictions, comprising: receiving a prediction objective from a user; providing, at a memory, at least one data set from at least one data source; determining, at a processor in communication with the memory, at least one activity from the at least one data set, the at least one activity comprising at least one feature of the corresponding data set; generating, at the processor, at least one channel attribution model from the at least one feature of the at least one activity, the at least one channel attribution model operative to provide a channel prediction and at least one prediction rationale; and generating, at the processor, an explainable prediction comprising the channel prediction and the at least one prediction rationale corresponding to the channel prediction, the at least one prediction rationale determined based on the prediction objective received from the user and the at least one channel attribution model.

In one or more embodiments, the generating the at least one channel attribution model from the at least one feature of the at least one activity may comprise: determining a time-indexed activity sequence associated with the prediction outcome; determining a lift metric of each of at least two channels, each of the at least two channels corresponding to an activity from the time-indexed activity sequence; and generating the channel attribution model based on the at least one matching activity sub-sequence associated with the prediction outcome.

In one or more embodiments, the determining a lift metric of each of at least two channels may comprise: determining a subject conversion ratio for each of the at least two channels; determining a control subject group; determining a control conversion ratio for each of the at least two channels based on the control subject group; and determining the lift metric for each of the at least two channels based on the subject conversion ratio and the control conversion ratio.

In one or more embodiments, the lift metric for each of the at least two channels may comprise a weighted combination including a 65% weighting of the subject conversion ratio and a 35% weighting of the control conversion ratio.

In one or more embodiments, the determining a control subject group may comprise: determining a lookalike subject group based on the subject identifier and a lookalike subject model; determining the control subject group based on the lookalike subject group and a propensity score determined for each subject of the lookalike subject group.

In one or more embodiments, each of the at least two channels may comprise one of a face-to-face meeting channel, a telephone call channel, an email channel, an advertisement channel, a lunch and learn channel, a learning channel, a sample drop channel.

In one or more embodiments, the time-indexed activity sequence may be a predetermined length of time.

In one or more embodiments, the predetermined length of time may be 6 months.

In one or more embodiments, the prediction objective from the user may be received in a prediction request at a network device in communication with the processor, and the method may further comprise: transmitting, using the network device, a prediction response comprising the explainable prediction to the user.

In a sixth aspect, there is provided a computer-implemented system for providing explainable predictions, comprising: a user input device, the user input device receiving a prediction objective from a user; a memory, the memory comprising at least one data set from at least one data source; a processor in communication with the user input device and the memory, the processor configured to: determine at least one activity from the at least one data set, the at least one activity comprising at least one feature of the corresponding data set; generate at least one channel attribution model from the at least one feature of the at least one activity, the at least one channel attribution model operative to provide a channel prediction and at least one prediction rationale; and generate an explainable prediction comprising the channel prediction and the at least one prediction rationale corresponding to the channel prediction, the at least one prediction rationale determined based on the prediction objective received from the user and the at least one channel attribution model.

In one or more embodiments, the generating the at least one channel attribution model from the at least one feature of the at least one activity may comprise: determining a time-indexed activity sequence associated with the prediction outcome; determining a lift metric of each of at least two channels, each of the at least two channels corresponding to an activity from the time-indexed activity sequence; and generating the channel attribution model based on the at least one matching activity sub-sequence associated with the prediction outcome.

In one or more embodiments, the determining a lift metric of each of at least two channels may comprise: determining a subject conversion ratio for each of the at least two channels; determining a control subject group; determining a control conversion ratio for each of the at least two channels based on the control subject group; and determining the lift metric for each of the at least two channels based on the subject conversion ratio and the control conversion ratio.

In one or more embodiments, the lift metric for each of the at least two channels may comprise a weighted combination including a 65% weighting of the subject conversion ratio and a 35% weighting of the control conversion ratio.

In one or more embodiments, the determining the control subject group may comprise: determining a lookalike subject group based on the subject identifier and a lookalike subject model; determining the control subject group based on the lookalike subject group and a propensity score determined for each subject of the lookalike subject group.

In one or more embodiments, each of the at least two channels may comprise one of a face-to-face meeting channel, a telephone call channel, an email channel, an advertisement channel, a lunch and learn channel, a learning channel, a sample drop channel.

In one or more embodiments, the time-indexed activity sequence may be a predetermined length of time.

In one or more embodiments, the predetermined length of time may be 6 months.

In one or more embodiments, the prediction objective from the user may be received in a prediction request at a network device in communication with the processor, and the processor may be further configured to: transmit, using the network device, a prediction response comprising the explainable prediction to the user.

### Brief Description of the Drawings

A preferred embodiment of the present invention will now be described in detail with reference to the drawings, in which:
FIG. 1 is a system diagram showing a system for explainable predictions in accordance with one or more embodiments;
FIG. 2 is another system diagram in accordance with one or more embodiments;
FIG. 3 is a data schema diagram in accordance with one or more embodiments;
FIG. 4 is a predictive modelling method and segmentation method diagram in accordance with one or more embodiments;
FIG. 5 is a prediction reporting method diagram in accordance with one or more embodiments;
FIG. 6 is a high-level system diagram in accordance with one or more embodiments;
FIG. 7 is an authentication diagram in accordance with one or more embodiments;
FIG. 8 is a data ingestion diagram in accordance with one or more embodiments;
FIG. 9 is a system diagram for data labelling in accordance with one or more embodiments;
FIG. 10 is a data labelling diagram in accordance with one or more embodiments;
FIG. 11 is an analysis pipeline diagram in accordance with one or more embodiments;
FIG. 12 is an objective preprocessing labelling diagram in accordance with one or more embodiments;
FIG. 13 is another objective labelling diagram in accordance with one or more embodiments;
FIG. 14 is an objective labelling output diagram in accordance with one or more embodiments;
FIG. 15 is a user segmentation diagram in accordance with one or more embodiments;
FIG. 16 is a predictive user segmentation diagram in accordance with one or more embodiments;
FIG. 17 is an audience reporting diagram in accordance with one or more embodiments;
FIG. 18 is an audience reporting simulation diagram in accordance with one or more embodiments;
FIG. 19 is an audience reporting recommendation diagram in accordance with one or more embodiments;
FIG. 20 is a prediction model diagram in accordance with one or more embodiments;
FIG. 21 is another predictive user segmentation diagram in accordance with one or more embodiments;
FIG. 22 is a predictive scoring diagram in accordance with one or more embodiments;
FIG. 23 is a segmentation, attribution, and labelling diagram in accordance with one or more embodiments;
FIG. 24 is an example causal window estimation diagram in accordance with one or more embodiments;
FIG. 25 is another causal window estimation diagram in accordance with one or more embodiments;
FIG. 26 is another causal window estimation diagram in accordance with one or more embodiments;
FIG. 27 is another causal window estimation diagram in accordance with one or more embodiments;
FIG. 28 is another causal window estimation diagram in accordance with one or more embodiments;
FIG. 29 is another causal window estimation diagram in accordance with one or more embodiments;
FIG. 30 is another causal window estimation diagram in accordance with one or more embodiments;
FIG. 31 is another causal window estimation diagram in accordance with one or more embodiments;
FIG. 32 is another causal window estimation diagram in accordance with one or more embodiments;
FIG. 33 is another causal window estimation diagram in accordance with one or more embodiments;
FIG. 34 is another causal window estimation diagram in accordance with one or more embodiments;
FIG. 35 is another causal window estimation diagram in accordance with one or more embodiments;
FIG. 36 is a binary classification evaluation diagram in accordance with one or more embodiments;
FIG. 37 is a binary classification based window and sub-sequence detection diagram in accordance with one or more embodiments;
FIG. 38 is another binary classification evaluation diagram in accordance with one or more embodiments;
FIG. 39 is another binary classification evaluation diagram in accordance with one or more embodiments;
FIG. 40 is another binary classification evaluation diagram in accordance with one or more embodiments;
FIG. 41 is another binary classification evaluation diagram in accordance with one or more embodiments;
FIG. 42 is a segmentation diagram in accordance with one or more embodiments;
FIG. 43 is a segmentation evaluation diagram in accordance with one or more embodiments;
FIG. 44 is another segmentation diagram in accordance with one or more embodiments;
FIG. 45 is another segmentation diagram in accordance with one or more embodiments;
FIG. 46 is another segmentation diagram in accordance with one or more embodiments;
FIG. 47 is a user interface diagram in accordance with one or more embodiments;
FIG. 48 is a predictive segmentation diagram in accordance with one or more embodiments;
FIG. 49 is a predictive segmentation model training diagram in accordance with one or more embodiments;
FIG. 50 is an audience reporting diagram in accordance with one or more embodiments;
FIG. 51 is another user interface diagram in accordance with one or more embodiments;
FIG. 52 is another user interface diagram in accordance with one or more embodiments;
FIG. 53 is another user interface diagram in accordance with one or more embodiments;
FIG. 54 is another user interface diagram in accordance with one or more embodiments;
FIG. 55 is another user interface diagram in accordance with one or more embodiments;
FIG. 56 is another user interface diagram in accordance with one or more embodiments;
FIG. 57 is another user interface diagram in accordance with one or more embodiments;
FIG. 58 is another method diagram in accordance with one or more embodiments;
FIG. 59 is another method diagram in accordance with one or more embodiments; and
FIG. 60 is another method diagram in accordance with one or more embodiments.

### Description of Exemplary Embodiments

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example, and without limitation, the programmable computers (referred to below as computing devices) may be a server, network appliance, embedded device, computer expansion module, a personal computer, laptop, personal data assistant, cellular telephone, smart-phone device, tablet computer, a wireless device or any other computing device capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented such as hardware, software, and combinations thereof.

Program code may be applied to input data to perform the functions described herein and to generate output information. The output information is applied to one or more output devices, in known fashion.

Each program may be implemented in a high-level procedural or object-oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g., ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloads, magnetic and electronic storage media, digital and analog signals, and the like. The computer useable instructions may also be in various forms, including compiled and non-compiled code.

As described herein, the term "real-time" refers to generally real-time feedback from a user device to a user. The term "real-time" herein may include a short processing time, for example 100 ms to 1 second, and the term "real-time" may mean "approximately in real-time" or "near real-time".

The described systems and methods can allow an entity to augment available data with additional information. For example, an entity may have customer data like first name, last name and location, available for its customers. The entity may also have available 3rd party survey data that includes demographic and additional user information. The described systems and methods can be used to generate matching users in the 3rd party data corresponding to the entity's customers. The available customer data can then be augmented based on the data corresponding to the matching users in the 3rd party data. The augmented data can include, for example, demographic data and user behavior data. The described systems and methods can be used to generate reports based on the augmented data that provide demographic and behavioral insights to the entity.

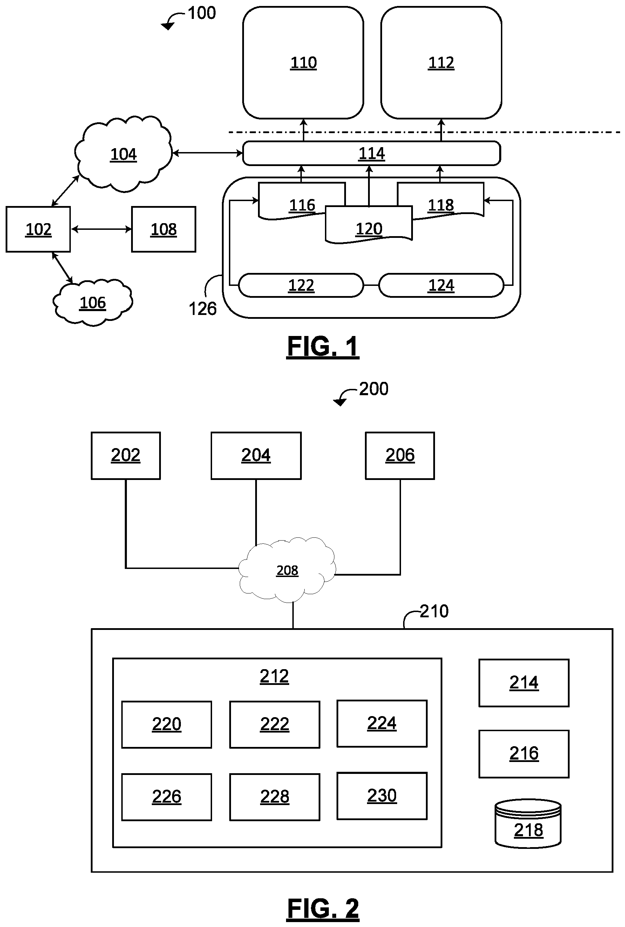

Reference is first made to FIG. 1, showing a system diagram 100 including a platform 126 for generating explainable predictions for customer relationship management. The system diagram 100 includes platform 126, data sources 102, 106 and 108, a network 104, user applications 110 and 112, Application Programming Interfaces (APIs) 114, microservices 116, 118 and 120 and capabilities 122 and 124.

The data sources 102, 106 and 108 may be existing user systems such as existing CRM systems. The data sources 102, 106 and 108 may be, for example, Salesforce^{®}, Veeva^{®} or a client specific data source. The data sources 102 may be accessible via an Application Programming Interface (API) integration at network 104. A user of the system 112 may configure communication between the platform 126 with the explainable prediction service and the data from the particular user may be provided.

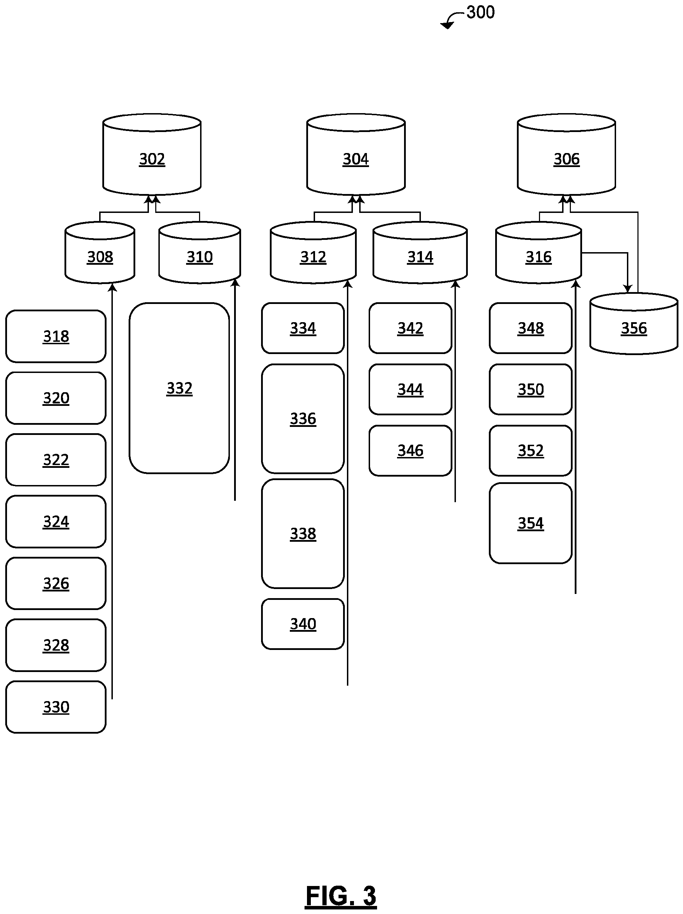

The data sources 102, 106 and 108 may include data sources having a variety of data sets. The data sets can include entity based data, event based data, or time series data as described in FIG. 3.

Network 104 may be any network or network components capable of carrying data including the Internet, Ethernet, fiber optics, satellite, mobile, wireless (e.g. Wi-Fi, WiMAX), SS7 signaling network, fixed line, local area network (LAN), wide area network (WAN), a direct point-to-point connection, mobile data networks (e.g., Universal Mobile Telecommunications System (UMTS), 3GPP Long-Term Evolution Advanced (LTE Advanced), Worldwide Interoperability for Microwave Access (WiMAX), etc.) and others, including any combination of these.

The data sources 102, 106 and 108 may provide data sets to the platform 126 via explainable prediction service APIs 114 and network 104. The data sources 102, 106 and 108 may transmit information to the explainable prediction service 114 using an Application Programming Interface (API) such as APIs 114 which may either push data to the platform 126 or pull from the data sources 102, 106 and 108. The format of the data provided using the API at data sources 102, 106 and 108 may be XML, JSON, or another interchange format as known. The data sources 102, 106 and 108 may transmit information to the platform 126 via API 114 using a periodic file transfer, for example, using secure File Transfer Protocol (sFTP), in either a push or a pull manner. The data may include customer relationship management data of a set of customers or users of a convention CRM such as Salesforce^{®}. In some embodiments, the data comprises volume data, static label data, time series data and user data.

While the data sources 102, 106 and 108 are described herein as providing customer data from a customer relationship management platform such as Salesforce^{®}, it is understood that the data sources 102, 106 and 108 may provide user information from a variety of different platforms where such data is available. This may include data from another customer relationship management platform such as Veeva^{®}, or data from another platform.

The data sources 102, 106 and 108 may include a database for storing the data set. The data sources 102, 106 and 108 may include a Structured Query Language (SQL) database such as PostgreSQL or MySQL or a not only SQL (NoSQL) database such as MongoDB, or Graph Databases, etc.

The user application 110 may be an application for marketing or sales professionals who interact with members of a market. For example, the marketing and sales professionals may be pharmaceutical sales professionals who interact with healthcare providers involved in prescribing pharmaceutical products. The user application 110 may provide reporting interfaces and predictions (including associated prediction explanations) from platform 126 to marketing or sales professionals.

The user application 112 may be an application for administration of platform 126, such as by a head-office. For example, user application 112 may be provided to users from a pharmaceutical company, which has their sales and marketing users accessing user application 110 in parallel. The user application 112 may allow users to configure predictions and identify business objectives at the platform. The user application 112 may provide an aggregated dashboard view of all insights (e.g. omni-channel attribution, prescription performance, competitive behaviors and of the like) per geography or territory and per segment or predictive segment. The user application 112 may also provide a table view of the population of a particular segment in a particular geography such that the user can filter, search and sort the data as needed. The user application 112 may further provide omni-channel specific segments which can be exported or integrated with a marketing platform to drive campaigns to the best suited segment. The user may be able to build segments and generate a dynamic dashboard view in user application 112. The user application 112 may report return on investment data and plat form usage data by territory.

The APIs 114 may include a plurality of interfaces for integration with data sources 102, 106 and 108. The APIs 114 may include a plurality of interfaces supporting the operation of user applications 110 and 112, for example to expose functionality in platform 126 to users of the user applications.

The APIs 114 may be a RESTful API which may communicate over network 104 using known data formats, such as JSON, XML, etc.

Platform capabilities may include system capabilities 122 and machine learning capabilities 124 which may provide the explainable prediction features. The capabilities 122 and 124 may be operate in microservices 116, 118 and 120. Microservices 116, 118 and 120 may be deployed in the explainable prediction platform 126 to perform specific functions as described herein.

The user accessing user applications 110 or 112 may do so using a user device (not shown) which may be any two-way communication device with capabilities to communicate with other devices. The user device may include, for example, a personal computer, a workstation, a portable computer or a mobile phone device. The user device may be used by a user to access reports and user interfaces provided by user applications 110 and 112 based on data from explainable prediction platform 126. User applications 110 and 112 may include an application for use in the field by a user device or an application for use in an office by a user. The user applications 110 and 112 may be web applications accessible over a network by various user devices or may be client-server applications including a mobile app available through the Google^{®} Play Store^{®} or the Apple^{®} AppStore^{®}. The user applications 110 and 112 may enable access to the explainable prediction platform 126 via APIs 114 to the user.

The user devices (not shown) using user applications 110 and 112 may request predictions relating to audiences and channels. The user devices using user applications 110 and 112 may provide configuration information for campaigns run by sales and marketing professionals. For example, the user at a user device may request predictions for the next best audience (i.e., the target for marketing and sales activities) and next best channel (i.e. the medium through which the target for marketing and sales activities should be conducted).

The explainable prediction platform 126 may run on a server such as the one described in FIG. 2, or it may operate on a service such as Amazon@ Web Services^{®}.

Reference is next made to FIG. 2, which shows a block diagram 200 for a server 210 in accordance with one or more embodiments. The server 210 includes a network unit 214, a processor unit 216, a memory unit 212. The server 210 may further include an I/O unit (not shown) providing input/output at the server 210 and a power unit (not shown) powering server 210.

The network unit 214 operates to send and receive data via network 208. This can include wired or wireless connection capabilities. The network unit 214 can be used by the server 210 to communicate with other devices or computers. For example, the server 210 may use the network unit 214 to communicate via network 208 with a data source 202 (e.g. data sources 102, 106 and 108 in FIG. 1), a user device for a sales and marketing user 204 (e.g. to access user application 110), and a user device for a head office administrator 206 (e.g. to access user application 112).

The processor unit 216 controls the operation of the server 210. The processor unit 216 can be any suitable processor, controller or digital signal processor that can provide sufficient processing power depending on the configuration, purposes and requirements of the server 210 as is known by those skilled in the art. For example, the processor unit 216 may be a high-performance general processor. In alternative embodiments, the processor unit 216 can include more than one processor with each processor being configured to perform different dedicated tasks. In alternative embodiments, it may be possible to use specialized hardware to provide some of the functions provided by the processor unit 216. For example, the processor unit 216 may include a standard processor, such as an Intel^{®} processor, or an AMD^{®} processor.

The data sets may be received at network unit 214, ingested at processor unit 216, and stored in database 218. The data sets can include user data such as customer datasets associated with a store, retail outlet, etc. and may be provided automatically by a data connector.

The processor unit 216 can also generate various user interfaces. The user interfaces may be user interfaces such as user applications 110 and 112 providing user access to the features of platform 126 (see FIG. 1).

Database 218 may store data including the ingested data sets from data sources 102, 106 and 108 (see FIGs. 1 and 3). The database 218 may include a Structured Query Language (SQL) database such as PostgreSQL or MySQL or a not only SQL (NoSQL) database such as MongoDB, or Graph Databases, etc. The database 218 may run on the server 210 as shown or may also run independently on a database server in network communication with the server 210. The database 218 may be provided by server 210 as shown or may also run independently on a computing service such as Amazon^{®} Web Services (AWS^{®}) or Microsoft^{®} Azure^{®}.

The server 210 may include a display (not shown) that may be an LED or LCD based display and may be a touch sensitive user input device that supports gestures.

The I/O unit (not shown) can include at least one of a mouse, a keyboard, a touch screen, a thumbwheel, a track-pad, a track-ball, a card-reader, voice recognition software and the like again depending on the particular implementation of the server 210.

The power unit (not shown) can be any suitable power source that provides power to the server 210 such as a power adaptor or a rechargeable battery pack depending on the implementation of the server 210 as is known by those skilled in the art.

The memory unit 212 comprises software code for implementing an operating system, various programs, feature generation 220, attribution modelling engine 222, prediction engine 224, segmentation engine 226, lookalike engine 228 and reporting engine 230.

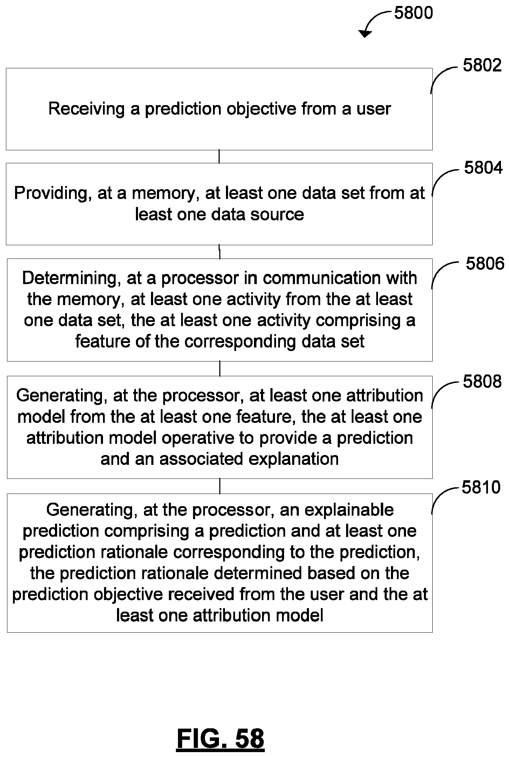

The memory unit 212 may include software code corresponding to the methods described herein. For example, software code corresponding to FIGs. 58 - 60 may be stored in the memory unit 212 and executed on processor unit 216.

The memory unit 212 can include RAM, ROM, one or more hard drives, one or more flash drives or some other suitable data storage elements such as disk drives, etc. The memory unit 212 is used to store an operating system and programs as is commonly known by those skilled in the art. For instance, the operating system provides various basic operational processes for the server 210. For example, the operating system may be an operating system such as Windows^{®} Server operating system, or Red Hat^{®} Enterprise Linux (RHEL) operating system, or another operating system.

The programs include various programs so that the server 210 can perform various functions such as, but not limited to, receiving data sets from the data sources, providing APIs, providing user applications, and other functions as necessary.

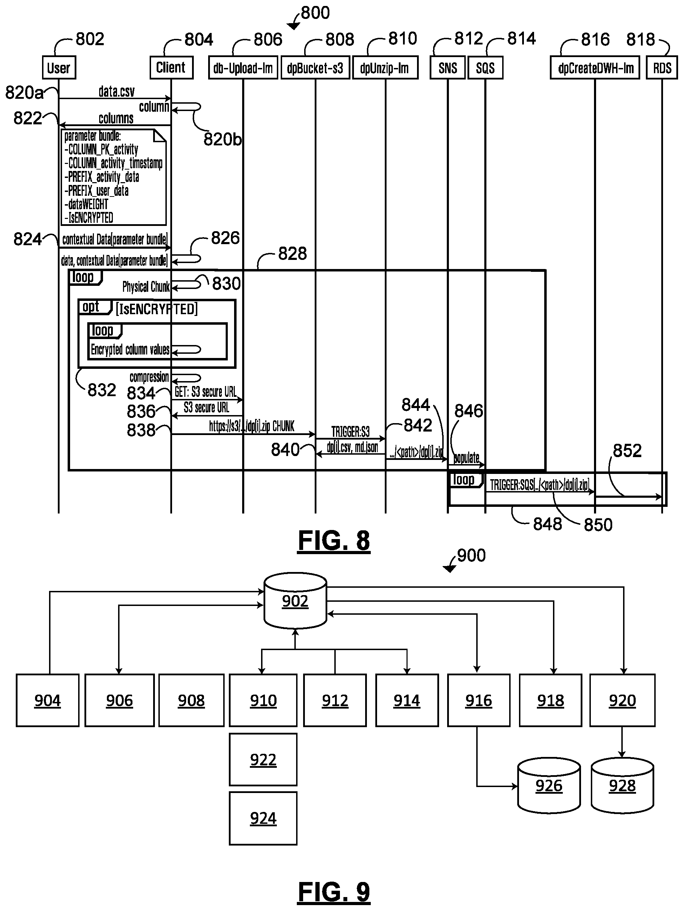

The feature generation 220 may implement methods as described herein to determine features from the data sets stored in database 218. The feature generation 220 is described in further detail below, including at FIGs. 9 - 14.

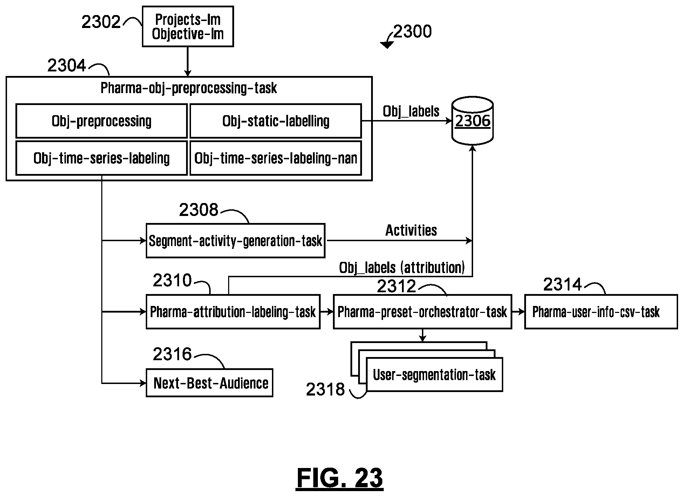

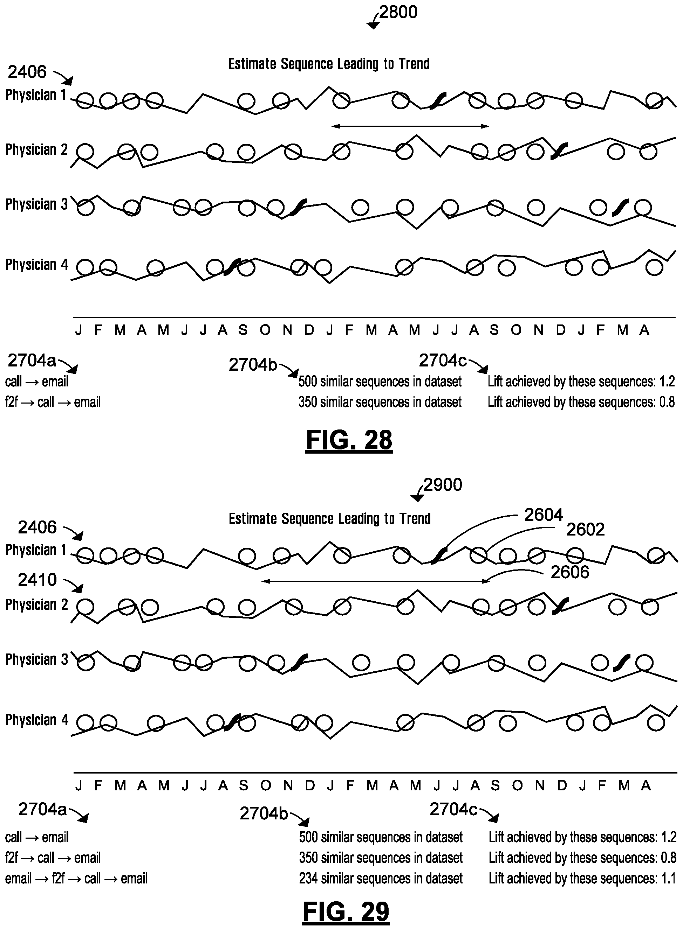

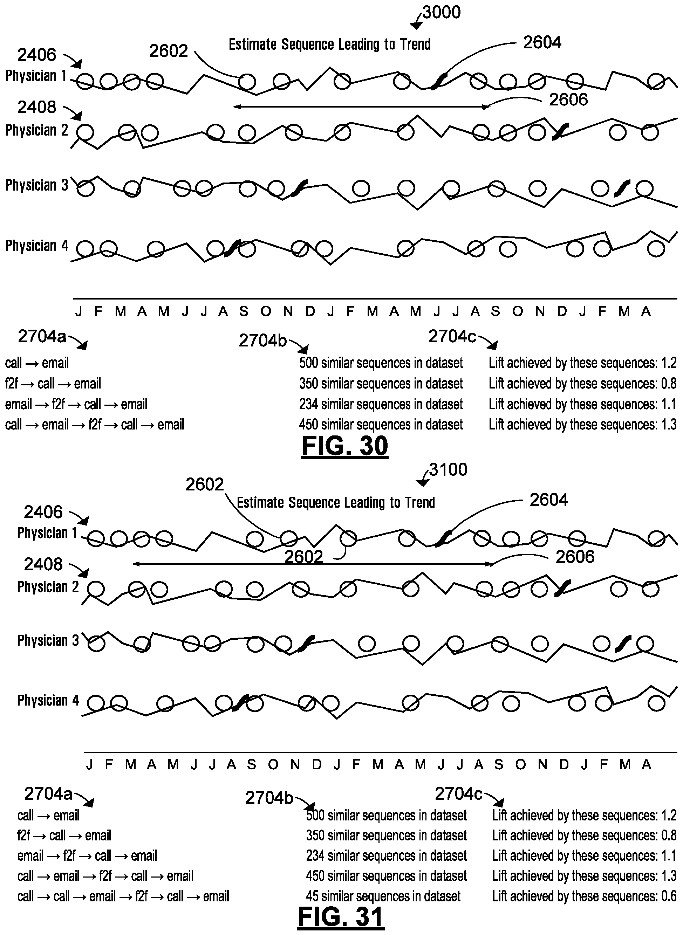

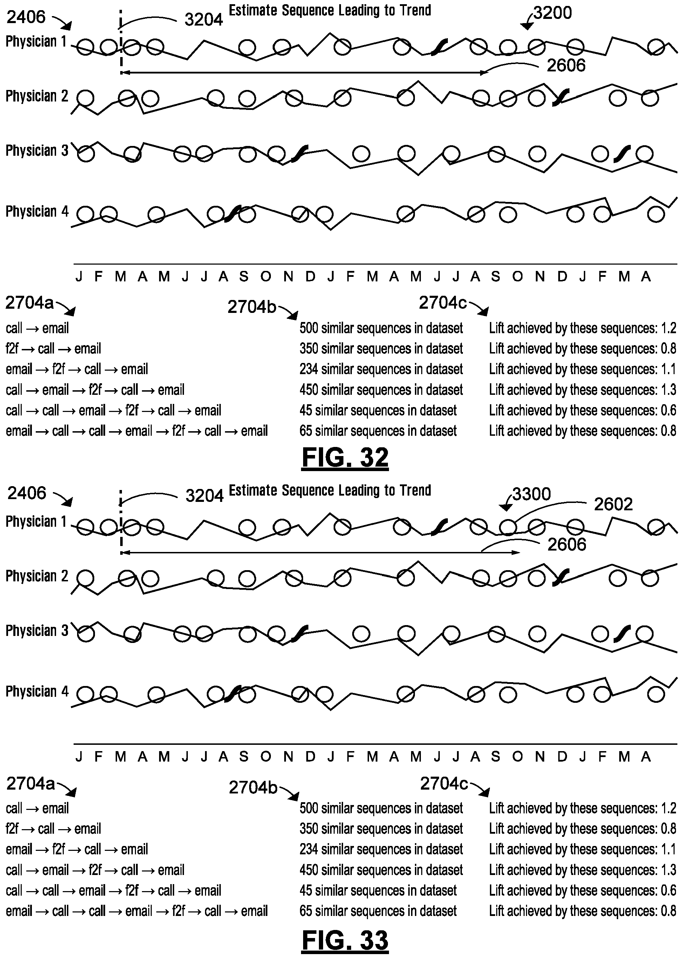

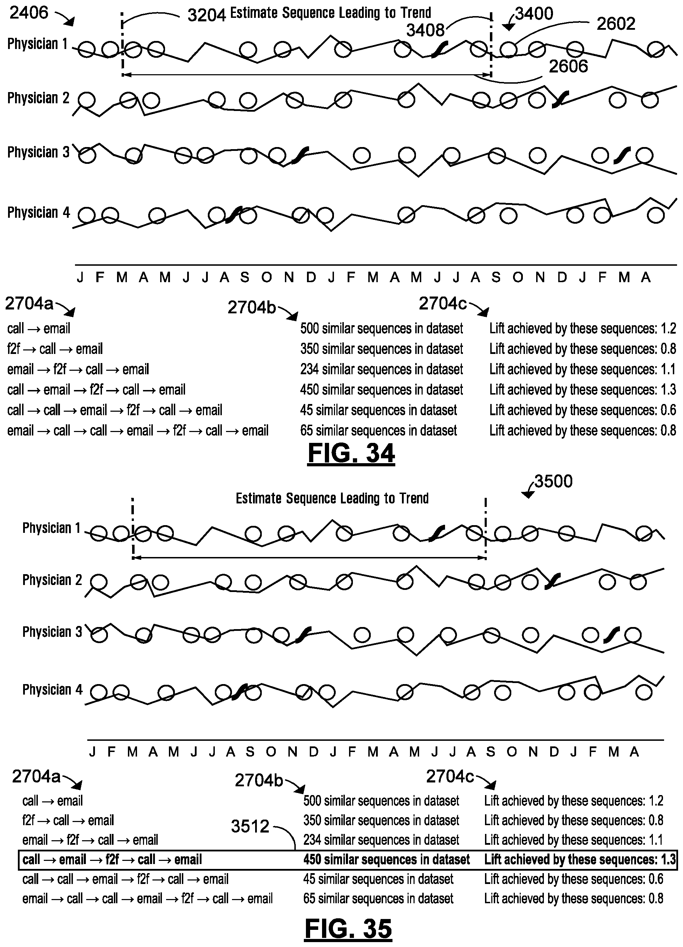

The attribution modelling engine 222 may implement methods as described herein to generate at least one attribution model that may be stored in database 218, or elsewhere. The attribution modelling engine 222 may be described in further detail at FIGs. 23 - 41.

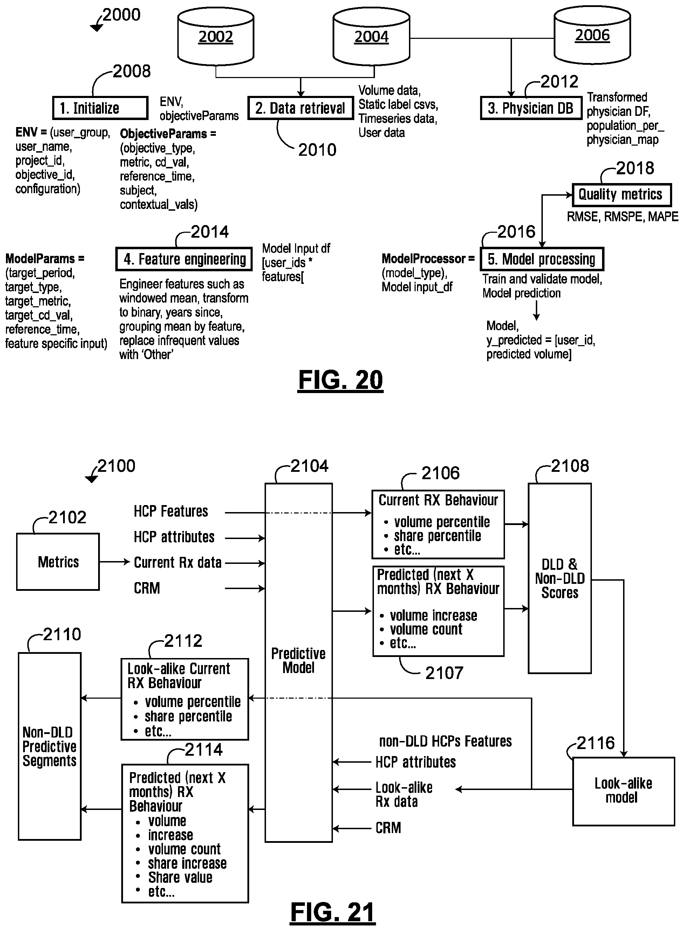

The prediction engine 224 may implement methods as described herein to generate numerical models for initiating subjects and generate predicted metrics for a future time period, as described herein. The prediction engine 224 is described in further detail at FIG. 20.

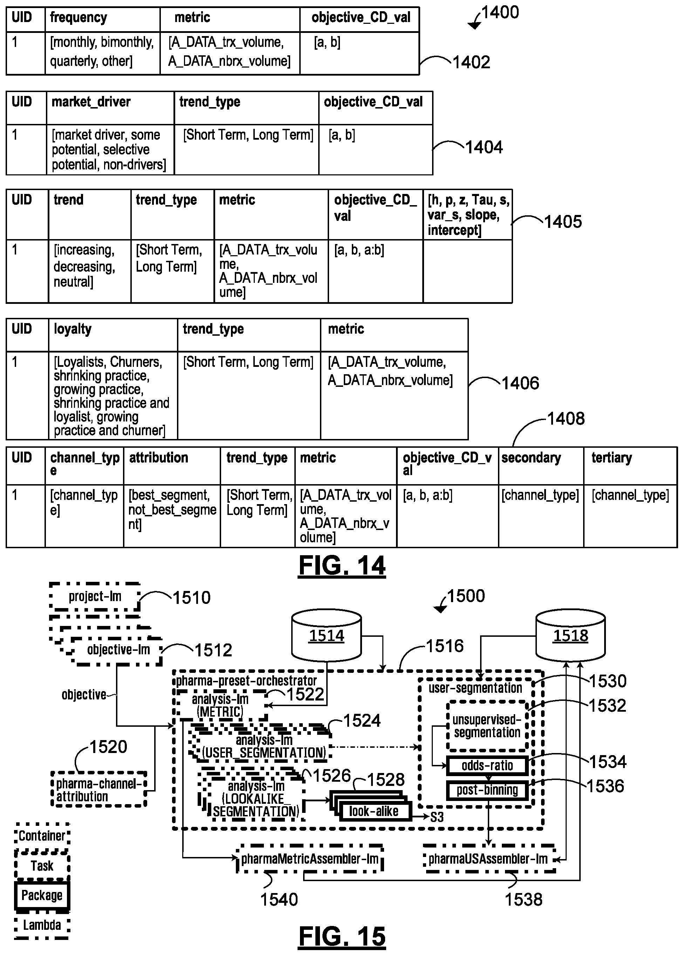

The segmentation engine 226 may implement methods as described herein to generate user segments, and other segmentation associated with the data sets and the initiating subjects. The segmentation engine 226 is described in further detail at FIGs. 15, 42 - 44 and 46 - 47.

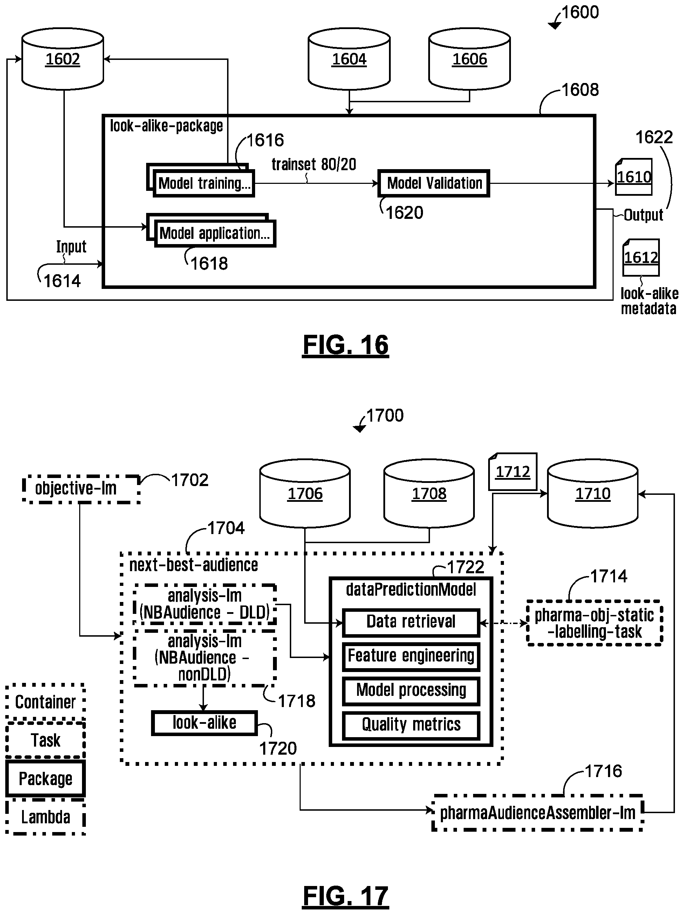

The lookalike engine 228 may implement methods as described herein to generate lookalike user segments, and other predictive segmentation associated with the data sets and the initiating subjects. The lookalike engine 228 is described in further detail at FIGs. 16, 21 and 45.

The lookalike engine 228 may have a seed generation engine, matching engine and neural network.

The seed generation engine 234 may generate seed entries corresponding to the initiating users (or other entities) provided in the customer data sets. Each seed entry may correspond to one or more user features of the initiating subject. For example, the seed generation engine 234 may generate seed entries corresponding to matching lookalike subjects of the initiating subject. In some embodiments, the seed generation engine 234 may generate the seed entries by generating an identifier comprising a hash value from the one or more features of the corresponding initiating subject. For example, the seed generation engine 234 can generate an identifier comprising a hash value from data in the one or more data sets corresponding to the initiating subject.

The seed generation engine 234 may store the seed entries in database 218.

The seed generation engine 234 may generate a candidate seed corresponding to an initiating subject, or other entity. The candidate seed can be generated based on the corresponding subject data of the initiating subject. For example, the seed generation engine 234 may generate a candidate seed based on location data, and gender and ethnicity data. The seed generation engine 234 can generate an identifier for the candidate seed comprising a hash value from the gender, ethnicity and location data.

The matching engine may generate one or more matching seeds, for a candidate seed, from among the seed entries generated by the seed generation engine 234. The matching seeds may be generated based on the data feature for the candidate seed, determined by the seed generation engine 234 based on the lookalike model. For example, the matching seeds may be generated based on the embedding vector for the candidate seed.

The matching engine can generate a matching score for each seed entry indicating matching between the seed entry and the candidate seed. If the matching score for a seed entry is above a threshold score, the seed entry can be associated with the candidate seed as a matching seed. The matching engine can store the association in a seed match database, for example, a seed match database included in database 218.

The report generation engine 230 may implement methods as described herein to generate user reports based on the data sets, the features, the attribution models, and the various segments (including predictive segments) associated with the data sets and the initiating subjects. The report generation engine 230 may also provide predictions to the users for next best channel and next best audience. The report generation engine 230 is described in more detail in FIGs. 17 - 19 and 50 - 57.

Reference is next made to FIG. 3, which shows a data schema diagram 300 in accordance with one or more embodiments. The data schema may include data sets such as entity based data set 302, event based data set 304 and time series based data set 306. Other types of data may also be included as known.

The data sets, including data sets 302, 304, and 306 may be received over a network from a variety of data sources. The data sets 302, 304 and 306 may be stored in database 218 (see e.g. FIGs. 1 and 2) and may store data including the ingested data sets from data sources 102, 106 and 108. The data sets 302, 304, and 306 may be stored in the database 218 (see e.g. FIG. 2) and may be provided by server 210 or may also run independently on a computing service such as Amazon^{®} Web Services (AWS^{®}) or Microsoft^{®} Azure^{®}.

The entity data set 302 may include entity data related to many different entities associated with the CRM. This could include users of the CRM, clients and customers within the CRM data, sales and marketing staff in the CRM data, organizational units in the CRM, etc. The entity data set 302 may include user accounts, marketing campaigns, contacts, leads, opportunities, incidents, initiating subjects such as healthcare providers, products, patients, etc. These entities may be used to track and support sales, marketing, and service activities. An entity may have a set of attributes and each attribute may represent a data item of a particular type. For example, an account entity may have name, address, and owner identifier attributes.

The entity based data 302 may include different entity type data 308 and entity contextual data 310 associated with the entity type data 308. Entity data may include accounts data 318, subject data (for example, for subjects such as health-care provider data) 320 and 322, patient data 324, internal team data 326, territories and geographical units data 328, and other unique ID data 330. An instance of entity contextual data 332 may include any contextual data related to the entity data 308. Entities may be referred to herein as subjects, initiating subjects, audience members, patients, internal team members, territories and geographical units. Entities may correspond to entity identifiers, subject identifiers, audience identifiers, etc.

The entity type data 308 may include data from a variety of entities. Accounts data 318 may include data about hospitals, clinics, labs, corporations and research groups. HCP data 320 and 322 may include data about physicians, nurses, pharmacists and midwives. Patient data 324 may be non-identifiable and may include patient population data, disease registries, health surveys and electronic health records. Internal team data 326 may include data about sales representatives, medical science liaisons and clinical representatives. Territories and geographical units data 328 may include data about geographical areas of interest such as medical centers, cities, provinces, states and countries. Other unique ID data 330 may include any entity data that is relevant to generating explainable predictions such as external team data, product data and disease data.

The entity contextual data 332 may include descriptive data associated with an entity such as a physician. This contextual data 332 may include metadata associated with the entities 308. The entity contextual data 332 may further include data related to gender, geography, locational demographics, specializations, education history and Key Opinion Leader (KOL) status.

The event based data 304 may include time stamped data 312 and time-stamped contextual data 314. Time stamped data 312 may include CRM data 334, prior recommendation data 336 (for example, historical predictions or scores generated for entities), other generated events data 338 and other event data 340. The time stamped contextual data 314 may include metadata associated with the timestamped data 312. Time stamped contextual data 314 may include CRM topics and content data 342, scoring context data 344 and any other event contextual data 346.

The time stamped data 312 refers to data that is associated with a time stamp such as data about an interaction between a sales representative and a customer. CRM data 334 may include data from a range of communication channels, including a company's website, telephone, email, live chat, marketing materials and social media materials. Recommendation or scoring data 336 may include a numerical score associated with a customer to enable a user to compare the relative ranking of the different audiences and channels in the predictive report. The recommendation or scoring data 336 may include historical predictions and scores associated with each entity. The historical predictions may identify particular scores associated with the entities in entity data set 302 at different time stamps. The recommendation or scoring data 336 may be associated entity data. For example, a numerical score may be assigned to a physician at a certain time based on the data available up until that point. If the numerical score changes due to the introduction of new data, a new time stamped datapoint may be created. Other generated events data 338 may include the latest updated data. Other event data 340 may include interaction data between sales representatives and customers or clients, joining or leaving a particular segment or predictive segment, a change in HCP priority, patient referral, lab ordering, educational events, speaking arrangements and physician expenses with pharmaceutical companies.

The time stamped contextual data 314 may be categorical or numerical and may include descriptive data associated with time stamped data such as CRM data. CRM topics and content data 342 may include labels of CRM interactions such as "cold call" or "follow-up call". Scoring context data 344 may include query history that led to the score generation and score calculation data. The scoring context data 344 may include information about whether the physician can be influenced to have a positive outcome for the objective based on the combination of channel and messaging topic. Other event contextual data 346 may include any contextual data associated with the variety of other event data 340.

The time series based data 306 may include time series data 316 and time series features data 356. Time series data 316 may include transaction data 348 such as prescription data, claims data 350 converted to time series data, patient data 352 converted to time series data and engagement data 354.

The time series data 316 may include data that is tracked over a period of time. This can include transaction data 348 such as prescription data. The prescription data may include patient support program (PSP) data, third party data, prescription drug provider data and prescription device data. Converted claims data 350 may include data from independent instances of submitted claims that are converted into time series data. Converted patient data 352 may include data from independent instances of patient data that are converted into time series data. Converted claims data 350 and converted patient data 352 may include data about insurance claims or patient journey touchpoints that indicate the objectives in the project are being achieved. For example, converted claim data 352 may indicate that a pharmaceutical product is being bought. Engagement data 354 may include data for medical science liaisons and other non-prescription use cases. Engagement data 354 in the context of medical science liaising may include CRM interactions with an HCP. For example, this could be a face to face visit, an e-mail, or a speaking event.

The time series features data 356 may be extracted from the time series data 316 and may correspond to business objectives. The time series features data 356 may include features such as objective trend labels and window detection information. The time series features data 356 may be extracted automatically from the time-series data.

The entity based data 302, event based data 304 and time series data 306 are gathered through a data ingest process and stored in a database 218 (see FIG. 2). This data is used to generate dynamically engineered data features which are, in turn, used to generate explainable predictions for customer relationship management.

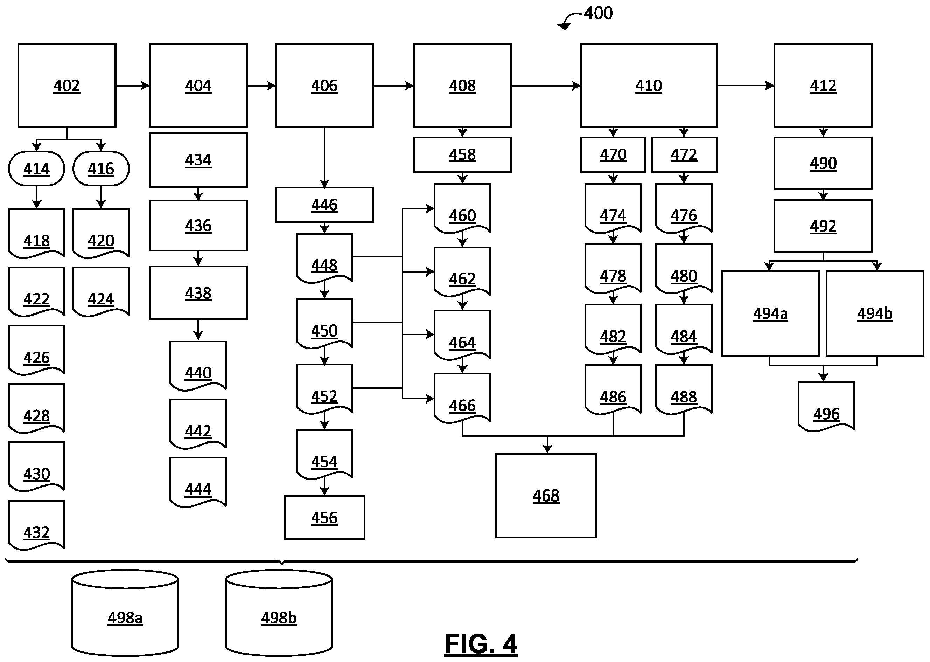

Reference is next made to FIG. 4, which shows an explainable prediction method diagram 400 in accordance with one or more embodiments. The explainable prediction method includes feature generation 402, attribution modeling 404, prediction 406, predictive micro-segmentation 408, historical micro-segmentation and static segmentation 410 and lookalike segmentation 412.

The output of feature generation 402, attribution modeling 404, prediction 406, predictive micro-segmentation 408, historical micro-segmentation and static segmentation 410 and lookalike segmentation 412 may be stored in scoring database 498b and may be used as input data to a recommendation or scoring system. System preference database 498a may store one or more configuration settings for the explainable prediction system. The databases 498a and 498b may be stored in database 218 (see e.g. FIG. 2) and may be provided by server 210 or may also run independent on a computing service such as Amazon^{®} Web Services (AWS^{®}) or Microsoft^{®} Azure^{®}.

Feature generation 402 may generate at least one feature from the data sets of data schema diagram 300 (see e.g. FIG. 3) and may be input into attribution modeling 404. Feature generation 402 may include account specific features 414 and project specific features 416. Account specific features 414 may include time series features 418, HCP static features 422, embeddings 426, demographic features 428, time stamp features 430, and other account specific features 432. Project specific features 416 may include frequency labels 420 and change point labels 424.

Feature generation 402 may include individual measurable properties or characteristics of the data in data schema diagram 300. Data features may be numeric, structural, categorical, etc. Feature generation 402 may include features that are generated to facilitate final end-user outputs, for example, features used in reports to users.

Time series features 418 may include one or more data features associated with the time series data sets (for example, time series data sets 306).

HCP static features 422 may include one or more data features associated with the entity data sets (for example, entity data sets 302).

One or more embeddings 426 may be identified from the data sets (see e.g. FIG. 3). An embedding is a mapping of a discrete (that is, categorical) variable to a vector of continuous numbers. In the context of neural networks, embeddings are low-dimensional, learned continuous vector representations of discrete variables. Neural network embeddings are helpful because they can reduce the dimensionality of categorical variables and meaningfully represent categories in the transformed space. Categorical variables are commonly represented as one-hot encoded vectors. This becomes unmanageable however once the number of categories increases.

The one or more embeddings 426 may be determined from the data sets by one or more machine learning models, include a neural network. Embeddings 426 may include vectors created from categorical features that are then used to train prediction models. For example, a location embedding may be used to replace a categorical feature such as a postal code with a four-dimensional vector.

One or more demographic features 428 may be generated based on the entity based data sets (see e.g. 302 in FIG. 3). This can include features generated based on age, race, gender, ethnicity, religion, income, education, marital status, etc.

One or more time stamp features 430 may include one or more data features associated with the time-stamped event based data sets (for example, event data sets 304).

One or more other account specific features 432 may be generated based on the entity based data sets (see e.g. 302 in FIG. 3).

One or more frequency labels 420 may be generated based on the event based data sets 304 and the time series data sets 306.

One or more change point labels 424 may be generated based on the event based data sets 304 and the time series data sets 306.

Attribution modeling 404 may take received data features 402 and the data sets (see FIG. 3) and perform causal window estimation 434, lift determination 436, and attribution model generation 438.

Causal window estimation 434 may provide input to the incremental lift-based algorithm 436. The output of the incremental lift-based algorithm may be used to generate attribution models 438. Attribution models 438 may include omni-channel based attribution 440, message topic or type based attribution 442 and sequence attribution 444. Attribution models may be used to make predictions 406.

Causal window estimation 434 may determine a recommended window size for determining causal sequences in the event-based or time-series datasets such that those actions can be causally linked to the outcome. For example, causal window estimation 434 may determine that 3 months is a recommended causal window for causally linking a call made to an HCP to a prescription written by the HCP. Causal window estimation 434 may employ techniques such as mining cost-effective sequential patterns and mining lift-based sequential patterns with fuzzy similarity.

The incremental lift-based algorithm 436 may calculate the ratio of response in entities receiving one kind of action to those receiving another. For example, the incremental lift-based algorithm 436 may generate the per physician gain related to a channel in units of prescription per physician per month by subtracting the mean number of prescriptions for physicians who did not receive the channel per month from the mean number of prescriptions who received the channel per month.

Attribution models 438 may be generated and may be used to isolate the effect of single channels where multiple channels are in use. The attribution models 438 may also include attribution models for isolating the effect of single actions when many engagement actions with an HCP may exist. For example, attribution models 438 may isolate the effect of a channel of marketing data where multiple channels serve ads simultaneously and where a channel of marketing data could include e-mail, phone calls, social media, television and websites. Attribution models 438 may give attribution to single action only or to multiple actions. Attribution models 438 may use Shapley Value-based Attribution, Modified Shapley Value-Based Attribution, Markov Attribution, CIU, Counterfactuals, and the like.

Omni-channel based attribution 440 may generate attribution models for all communication channels with a customer (HCP) that lead to a conversion.

Message topic or type based attribution 442 may generate attribution models for different message topics or types of messages with a customer (HCP) that lead to a conversion.

Sequence attribution 444 may generate attribution models for different sequences of actions with a customer (HCP) that lead to a conversion.

Predictions 406 may be made using the results of attribution modeling 404 and may be used to generate predictive micro-segments 408. Predictions 406 may include numerical predictions 446. Numerical predictions 446 may be generated through predictive models such as XGBoost, Light GBM, CatBoost, linear regression and LSTM. The predictive model chosen for a given application may depend on the data availability. Numerical predictions 446 may refer to a prescription volume prediction 448, a prescription share prediction 450, an active patient prediction 452 and other numerical predictions 454. For example, using historical data, predictions 406 and models may be generated for the prescription behavior of an individual HCP. These models may be referred to as initiation models for subjects (such as HCPs).

Numerical predictions 446 may be analyzed to generate a regressor output explanation 456. The regressor output explanation 456 may identify the features that contribute more to the predictions 406. For example, the regressor output explanation 456 may identify the average prescription value as a feature of higher importance when predicting the final predicted prescription value of an HCP. Statistical methods used to generate the regressor output explanation 456 may include LIME, SHAP, Permutation Importance, Context Importance and Utility (CIU), and Anchors.

Predictive segmentation 408 may be generated using data from the predictions 406 and may be used to generate historical micro-segments and static segments 410. Predictive micro-segments 408 may include segment labels based on predictions 458. Segment labels may be based on predictions 458 including numerical predictions. Segment labels may identify changes in the behavior, and for example may refer to predictive growers and shrinkers 460, predictive rising stars 462, predictive switchers 464 and predictive starters 466. The segment labels based on predictions 458 may be derived from historical and/or predicted values representing a shift in an entity's behavior. For example, segment labels may be derived from volume values and share values representing a shift in HCP's prescribing behavior.

Historical segmentation and static segmentation 410 may include historical segmentation 470 and static segmentation 472.

Historical segments 470 may include historical growers and shrinkers 474, historical rising stars 478, historical switchers 482, and historical starters 486.

Static segments 472 may include KOL segment 476, and static segments 480 that may relate, for example, to HCPs who work in the same hospital or who went to the same school, retirement status 484 and other static segments 488.

A classification explanation 468 may be generated using data from the predictive segmentation 408 and the historical segmentation and static segmentation 410. The classification explanation 468 may be used to determine the correlation between the data features and the segment classification. For example, the classification explanation 468 may determine the correlation between the features in the subject database (e.g. a physician database) and the predictive or historical switchers score. The classification explanation 468 may use explanation methods including odds ratio, log odds ratio, r-squared and relative risk.

A segment memberships look-alike recommendation 412 may be generated using data from historical micro-segments and static segments 410. A segment memberships look-alike recommendation 412 may be used to find a set of users that are similar in both static and dynamic features to a given set of users. A segment memberships look-alike recommendation 412 may be generated with access only to user attributes and contextual data, and no access to behavioral data of the users. For example, given the membership data of young growers in one population, a segment memberships look-alike recommendation 412 may find matching young growers in a different population.

The segment memberships look-alike recommendation 412 may be generated through a process involving feature generation 490, followed by vector generation 492, followed by distance measurement 494a and/or semi-supervised learning 494b. The output of this process may be look-alike segments 496. Feature selection 490 may use statistical methods such as SHAP and LIME. Vector generation 492 may use methods such as embeddings. Distance measurement 494a may use methods such as NN-Search, SCANN and FAISS. Semi-supervised learning 494b may use methods such as PU Learning.

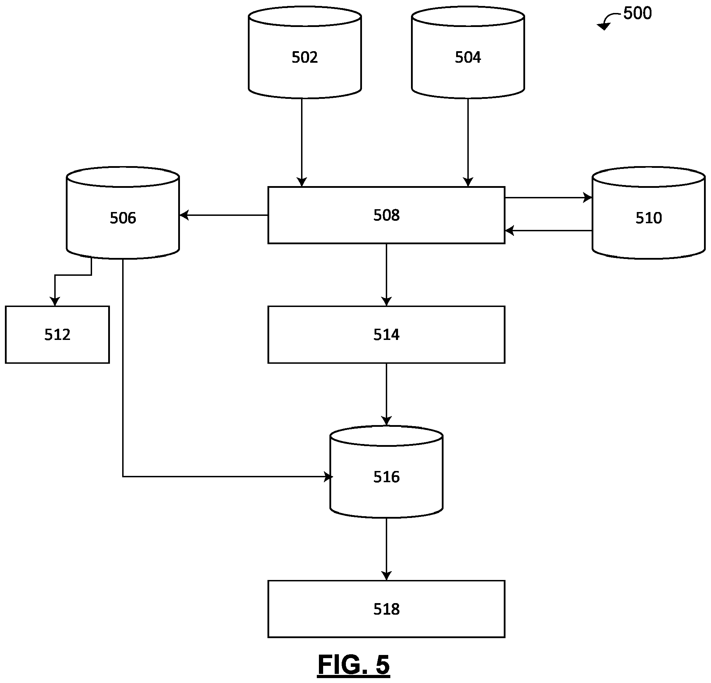

Reference is next made to FIG. 5, which shows a prediction reporting method diagram 500 in accordance with one or more embodiments. The prediction reporting method includes system preferences database 502, scoring database 504, decision point database 506, scoring package 508, weighting database 510, notification system 512, instrumentation package 514, scoring output database 516, and reporting system 518.

The system preference database 502 (see e.g. system preference database 498a) may store one or more configuration settings for the scoring of predictions of the explainable system.

The scoring database 504 may store the generated features, predictions, and segments (e.g. the outputs of 402, 404, 406, 408, 410 and 412 in FIG. 4). The scoring database 504 may provide the generated features, predictions, and segments to the scoring package 508, including common statistical values of these generated features, predictions, and segments. The scoring database 504 can store volume values, volume prediction values, share values, share prediction values, and other such data from the explainable prediction system in FIG. 4. This can include a mean, a median, an average, a lower bound of confidence interval (CI), an upper bound of confidence interval (CI), a prediction provided by final bootstrapping model, an impressionability value (i.e. the maximum lift value of a HCP), a segment label (i.e. name of a segment that an HCP belongs to), prediction objective (i.e. the value of interest such as change in prescription volume, change in prescribing share, volume or share), a percentile and the standard deviation (STD) of the volume/share value.

The decision point database 506 may include one or more decision points associated with reporting method 500.

The scoring package 508 may identify a score based on criteria associated with the entities (for example, the HCPs). This may include a set of bins. For example, five bins may be used as follows. A first bin may have criteria such as a CI width < 1, impressionability in 80-100 percentile in segment, and where prediction is < 0.5*STD from target.

A second bin may have criteria such as 1 < CI width < 2, impressionability in top 60-80 percentile in segment, where the prediction is > 0.5*STD and <0.75*STD from target.

A third bin may have criteria such as 2 < CI width < 3, impressionability in top 40-60 percentile in segment, and where the prediction is > 0.75*STD and <1.0*STD from target.

A fourth bin may have criteria such as 3 < CI width < 4, impressionability in top 20-40 percentile in segment, and where the prediction is > 1.0*STD and <1.5*STD from target.

A fifth bin may have criteria such as 1 CI width > 4, impressionability in 0-20 percentile in segment, and where the prediction is > 1.5*STD from target.

Finally, a NULL HYPOTHESIS may exist having 0 impressionability with 0 CI width.

The scoring bins may be split up further to create a larger number of bins. For example, 10 bins could be used and a score from 1-10 may be provided. Other numbers of bins may be used.

Other apriori ranking of entities (such as HCPs) may be provided as "in-domain" knowledge and may be used to create segment labels.

The instrumentation package 514 may evaluate the scoring predictions of the score package 508. This may include assessing the quality of the score predictions including fluctuations in scoring, and stability of scoring (over a particular interval).

The scoring output database 516 may store the generated entity scores. For example, the scores generated for HCPs may be stored. The scoring output database 516 may store the historical scores generated for entities, and may be used to query the historical scores for a given entity.

The reporting system 518 may generate a user interface for users of the explainable prediction system. This may include, for example, next best audience reports and next best channel reports as described herein.

The databases 502, 504, 506, 510, and 516 may be stored in database 218 and may be provided by server 210 or may also run independently on a computing service such as Amazon^{®} Web Services (AWS^{®}) or Microsoft^{®} Azure^{®}.

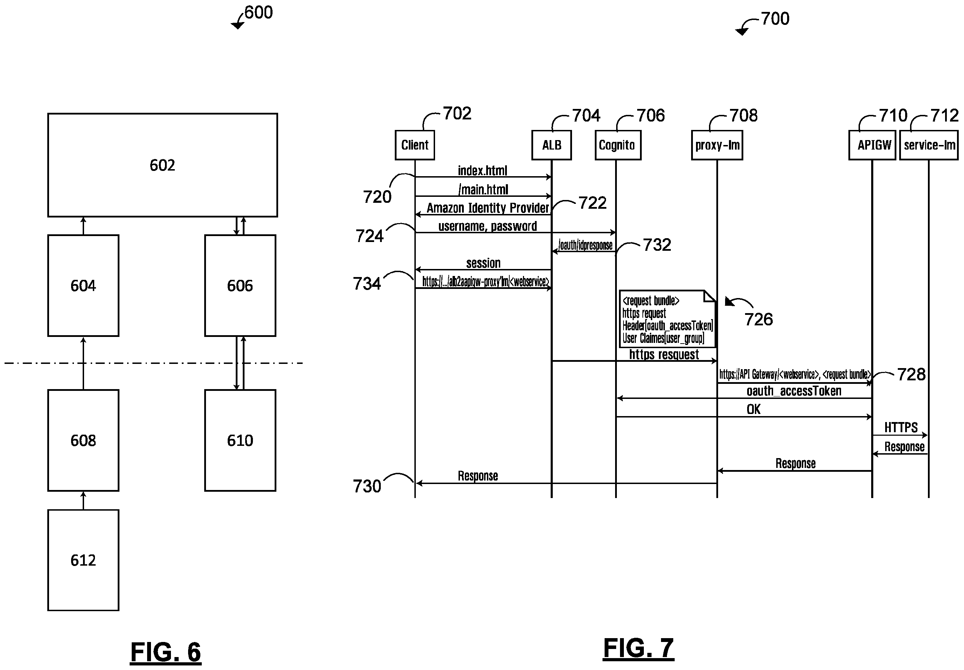

Reference is next made to FIG. 6, which shows a high-level system diagram 600 of an explainable prediction system in accordance with one or more embodiments. The explainable prediction system may include an explainable prediction platform 602, user authentication 612, data ingestion 608, data labelling 604, analytics APIs 606 and a reporting package 610.

The explainable prediction platform 602 may be, for example, the explainable prediction system as described in FIG. 4.

The user authentication 612, data ingestion 608 and the reporting package 610 may execute on a client-side, including in a web application provided to a user and accessible via a browser.

The data labelling 604, explainable prediction platform 602, and the analytics APIs 606 may be server-based software that may provide functionality over a network connection to a user, or programmatically via APIs.

The user authentication 612 may enable a user accessing the explainable prediction platform 602 to authenticate themselves, as described in further detail in FIG. 7. The user authentication 612 may be performed by a user in a browser accessing a web application (such as applications 110 and 112 in FIG. 1). Alternatively, the user authentication 612 may be performed programmatically in order to upload data sets via data ingestion 608.

The data ingestion 608 may include a client-based software application for collecting data sets from data sources at a client. For example, the data ingestion 608 may include a data connector system for sending data to the server system from an existing CRM system such as Salesforce^{®}.

The data labelling 604 may include the segment labelling, historical segmentation, static segmentation, and lookalike segmentation as described herein.

The analytics APIs 606 may provide analysis and predictions via APIs for users at the client. This can include the reporting package 610.

The reporting package 610 may be a web application provided by the platform 602 that may provide analysis information, predictions, and reporting from the platform 602. This can include user interfaces delivered via client-server software systems (e.g. App-based systems), or using web-based software systems. The reports provided by the reporting package 610 may include next best audience and next best channel reports as described herein.

### Data Ingestion

Reference is next made to FIG 7, which shows an authentication diagram 700 in accordance with one or more embodiments. The authentication diagram 700 may describe authentication by a user using a software application (either client-server such as an app or using a web-browser to connect to a web application). Alternatively, the authentication diagram 700 may describe programmatic authentication by a software application, for example, by a client application involved in data ingestion from a client.

Herein, many different client systems may act as data sources for the explainable prediction system. The different client systems may be configured with data ingestion clients that may query, export, or otherwise prepare data for transmission and ingestion by the explainable prediction system. The client systems may include existing CRMs, transaction record keeping systems, client data warehouses, databases, or internal client APIs that may be data sources that can provide data sets for ingestion by the explainable prediction system.

At 720, a client 702 (that is, a client software application or a user using a web browser) accesses an application load balancer 704. The application load balancer may set a session cookie associating the client with a particular instance of the running application, that is, proxy 708, API gateway 710, and service 712. The load balancer 704 may function as known. The load balancer 704 may respond at 722 with information for an identity provider such as Amazon@ Cognito^{®}.

At 724, the client 702 may transmit an authentication request to the identity provider 706 including a username and password. In an alternate embodiment, a signed certificate may be sent instead of a username/password.

At 732, the identity provider 706 may respond to the load balancer 704 with authentication information such as a session identifier (or token), which is then sent to the client 702 by the load balancer 704.

At 734, the client may send an application request (e.g. request bundle 726) to load balancer 704, which is forwarded to proxy 708, then API gateway 710. The API gateway may further check the session identifier (or token) with identity provider 706, and upon a successful check, forwards the request to the service 712 for processing. The application response from the service 712 may be forwarded via API gateway 710 and proxy 708 to client 702 in response 730.

Reference is next made to FIG. 8, which shows a data ingestion diagram 800 in accordance with one or more embodiments. The data ingestion diagram 800 may describe programmatic data ingestion initiated by a user 802 using a data ingestion application client 804.

The user 802 submits a data.csv file at 820a to the data ingestion client 804 which extracts the columns from the data.csv file at 820b and returns them to the user 802 at 822.

The user 802 may receive the columns 822 and incorporate contextual data to the listing of columns in a parameter bundle, and may send the parameter bundle to the ingestion client 804 at 824.

The data ingestion client 804 may be a small software package that may operate in a client's network environment. It may push to the explainable prediction system, or the explainable prediction system may pull from it.

The data ingestion client 804 may then process the rows of the data.csv file at 826.

A loop 828 may execute over each row, or over each group of rows. The loop receives a chunk of the data.csv file at 830, optionally decrypts the chunk 832, optionally compresses the chunk, triggers an upload 806 with an upload API call 806, and sends the chunk of the data.csv file to an upload service 808 (such as Amazon^{®} S3^{®}).

At 842, the upload to the upload service 808 may trigger decompression by a decompression service 810, and the uncompressed chunk may be received by the upload service 808 at 840.

At 844, the ingestion proceeds by optionally sending a notification via notification service 812, and then enqueuing the chunk of the data.csv file with queue service 814 at 846.

At 848, a loop may execute with a data warehouse service 816, which receives each dequeued chunk of the data.csv file at 850.

At 852, the data warehouse service 816 may then materialize or hydrate the chunk of the data.csv file it receives and insert the hydrated or materialized records into a database system 818. These hydrated and materialized records may form the data sets as described herein that provide the data for the explainable prediction system.

### Data Labelling and Feature Generation

The data labelling and feature generation embodiments of this section may generally correspond to data features and labelling 402 in FIG. 4, and the corresponding related steps in this portion of the pipeline in FIG. 4 (i.e. 414 - 432).

Reference is next made to FIG. 9, which shows a system diagram 900 for a data labelling pipeline in accordance with one or more embodiments.

A database 902 stores the data sets received by the data ingestion client 904. Database 902 may be a data warehouse system that stores highly structured information from various sources. Data warehouses may store current and historical data from one or more systems. The goal of using a data warehouse is to combine disparate data sources in order to analyze the data, look for insights, and create business intelligence (Bl) in the form of reports and dashboards.

The data ingestion client 904 may execute the method as described in FIGs. 6 - 8 in order to ingest at least one data set from a client into the database 902.

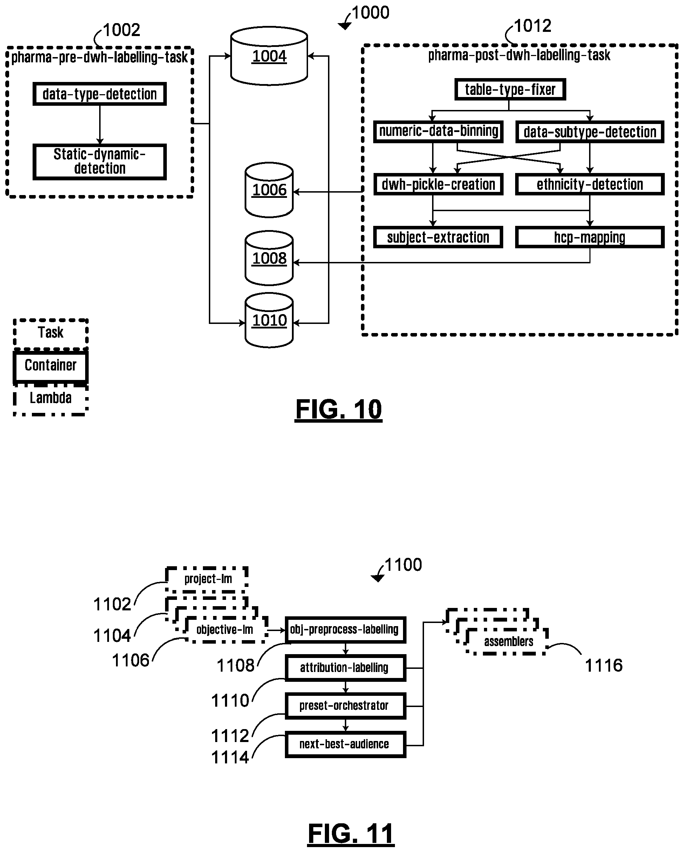

At 906, a data type detection task may be executed as part of a pre-labelling process, as described in FIG. 10.

At 908, a static/dynamic detection task may be executed as part of a pre-labelling process, as described in FIG. 10.

At 910, subject value including a value metric may be generated and stored in database 902 for understanding your customers. The value metric may be a prediction of the value of the relationship with a subject to a business. This value metric approach may allow organizations to measure the future value of marketing initiatives.

At 912, a data subtype detection task may be executed as part of a post-labelling process, as described in FIG. 10.

At 914, the incoming data and associated labels may be serialized and stored in database 902 as part of a post-labelling process, as described in FIG. 10.

At 916, at least one subject (or entity) may be extracted from the incoming data and stored in either or both of database 902 and database 926. Database 926 may be used to support Online Transaction Processing (OLTP), and may be a Database Management System (DBMS) for storing data and enabling users and applications to interact with the data.

At 918, a reporting system may be provided for reporting predictions to a user as described herein. For example, the reporting may include providing reports based on the data in database 902.

At 920, a subject mapping may be used to populate a subject database 928 based on the database 902 including ingested data sets. The ingested data sets in database 902 may be mapped into matching subject entities in subject database 928 for further processing by the explainable prediction system downstream.

At 922 one or more subject engagement metrics may be determined and stored in database 902.

At 924 demographic information about a subject, including age information, ethnicity information, etc. may be generated and stored in database 902.

The databases 902, 926 and 928 may be stored at database 218 (see e.g. FIG. 2) and may be provided by server 210, or may also run independent on a computing service such as Amazon^{®} Web Services (AWS^{®}) or Microsoft^{®} Azure^{®}.

Reference is next made to FIG. 10, which shows a data labelling diagram 1000 in accordance with one or more embodiments. The data labelling diagram 1000 includes a pre-database labelling task 1002, a database 1004 (see e.g. data warehouse 902 in FIG. 9), an object storage service 1006, a subject database 1008 (e.g. a physician database including the subject database 928 in FIG. 9), a database 1010 (see e.g. database 926 in FIG. 9), and a post-database labelling task 1012.

The pre-database labelling task 1002 may perform data type detection. The pre-database labelling task 1002 may also cleanse and map data in the proper schema to prepare it for use in the downstream labelling task. The output of the data type detection may be used to perform static-dynamic detection. The data type detection and static-dynamic detection may identify the appropriate data types such as entity based data, event based data, or time series data (see FIG. 3). The data from the pre-database labelling task 1002 may be sent to the database 1004 and the database 1010.

The database 1004 may receive data from the pre-database labelling task 1002 and the database 1010. The database 1004 may integrate data from disparate source systems and provision them for analytical use.

The database 1010 may receive data from the pre-database labelling task 1002 and the database 1004. The database 1010 may include Amazon@ DynamoDB, Azure^{®} Cosmos DB, MongoDB, Redis, Google^{®} Cloud Firestore.

The post-database labelling task 1012 may involve fixing a table type, followed by numeric data binning and data subtype detection. The output of the numeric data binning and the data subtype detection may be serialized, and the ethnicity of the subject detected. The output of serialization and the ethnicity detection may be used for subject extraction and health care provider mapping.

The data from the post-database labelling task 1012 may be sent to an object storage service 1006. The object storage service 1006 may include Amazon^{®} Simple Storage Service (Amazon S3), Azure^{®} Blob, DigitalOcean, DreamObjects, Wasabi, Backblaze B2, Google^{®} Cloud and IBM^{®} Cloud Object Storage.

The data from the post-database labelling task 1002 may further be sent to the subject database 1008 (e.g. a physician database). The subject database 1008 may be a database for a particular country that provides default entity or static data about the subject independent from the information provided by the customer. For example, the subject database 1008 may include the HCP's name, address, specialty, ID, and of the like.

The database 1004, the object storage service 1006, the subject database (e.g. physician database) 1008, and the database 1010 may be provided in database 218 shown in FIG 2. The database 1004, the object storage service 1006, the subject database (e.g. physician database) 1008, and the database 1010 may be provided by a server at the explainable prediction system, or may be provided as services by, for example, Microsoft^{®} Azure^{®} or Amazon@ AWS^{®}.

Reference is next made to FIG. 11, which shows an analysis pipeline diagram 1100 in accordance with one or more embodiments. The analysis pipeline diagram 1100 includes event-driven processes 1102, 1104 and 1106, an objective preprocess labelling task 1108, an attribution labelling task 1110, a preset orchestrator task 1112, a reporting task 1114 and assemblers 1116.

The event-driven processes 1102, 1104 and 1106 may include a project-driven process 1102 and an objective-driven process 1104. The project-driven process 1102 may be executed when the user creates a new project through user applications 110 and 112 shown in FIG. 1. The project-driven process 1102 may be a lambda service that handles the creation, downstream triggering and other logistics. The project-driven process 1102 may orchestrate a set of objectives. The objective-driven process 1106 may be executed when the user creates a new objective through user applications 110 and 112 shown in FIG. 1. The objective-driven process 1104 may be a lambda service that manages the creation and logistics of an objective including all data required by the objective and downstream pipeline triggering. There may be other objective-driven processes 1104. The project-driven process 1102 and the objective-driven process 1106 may be executed on a cloud service (not shown) such as AWS^{®} Lambda, Fission, Azure^{®} Functions and Google^{®} Cloud Functions.

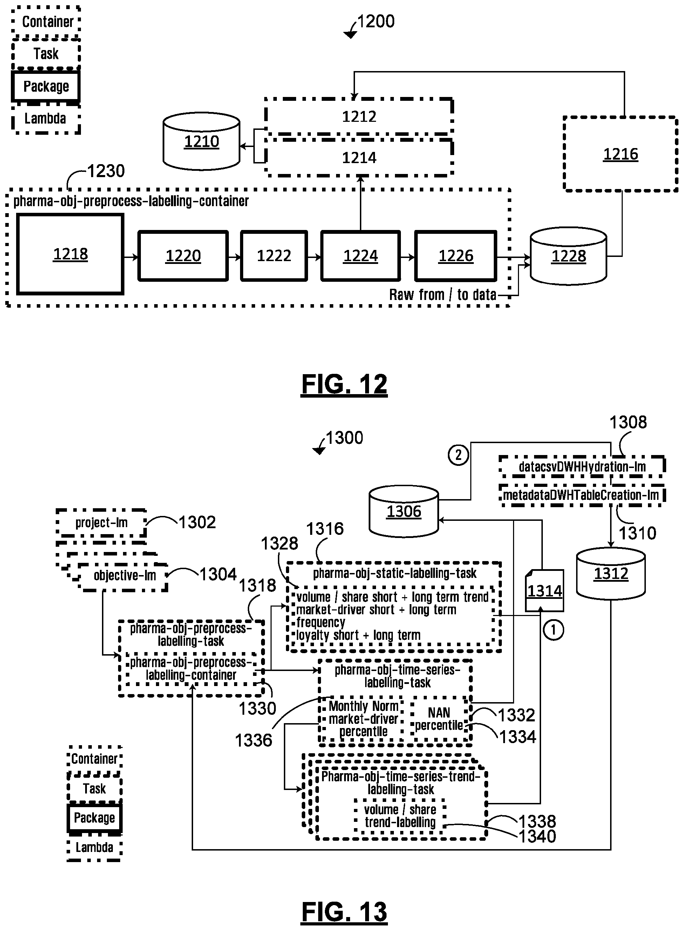

The event-driven processes 1102, 1104 and 1106 may send data to the objective preprocess labelling task 1108. The objective preprocess labelling task 1108 may get the details of the objective from the database 1008 shown in FIG. 10 and will begin the preprocessing stage. The objective preprocess labelling task 1108 may be described in further detail at FIGs. 12 - 13.

The objective preprocess labelling task 1108 may send data to the attribution labelling task 1110. The attribution labelling task 1110 may generate a label needed for the reporting task 1213 to perform causal or correlational modeling. The attribution labelling task 1110 may be performed by the attribution modelling engine 222 shown in FIG. 2. The attribution labelling task 1110 may be described in further detail at FIG. 23.

The attribution labelling task 1110 may send data to the preset orchestrator task 1112. The preset orchestrator task 1112 may generate the presets required for further analyses. The preset orchestrator task 1112 may create all segments. The preset orchestrator task 1112 may send data to the reporting task 1114.

The reporting task 1114 may be a next best audience task (i.e. it may identify an entity or subject) or a next best channel task (i.e. it may identify a channel to use). For example, where the reporting task 1114 is a next best audience task it may generate data about the next best target for marketing and sales activities. The reporting task 1114 when a next best audience task, may generate a current next best audience or a predicted next best audience. The reporting task 1114 may be performed on the reporting engine 230 shown in FIG. 2.

The assemblers 1116 may receive data from the attribution labelling task 1110, the preset orchestrator task 1112 and the reporting task 1114. The assemblers 1116 may be event-driven processes that integrate data to prepare for further analyses. The assemblers 1116 may assemble insights and results from various pipeline components to build out the finalized physician list and detailed physician insights eventually viewed by the user applications 110 and 112 (see FIG. 1). The assemblers 1116 may be executed on a cloud service (not shown) such as AWS^{®} Lambda, Fission, Azure^{®} Functions and Google^{®} Cloud Functions.

Reference is next made to FIG. 12, which shows an objective preprocessing labelling diagram 1200 in accordance with one or more embodiments. The objective preprocessing labelling diagram 1200 includes a data warehouse 1210, a data hydration-driven process 1212, a metadata table creation-driven process 1214, an objective time series trend labeling task 1216, a frequency detection package 1218, a de-seasonality package 1220, a smart zero imputation package 1222, a trend label metadata creation package 1224, a monthly normalization package 1226, an object storage service 1228 and an objective preprocess labelling container 1230.

The objective preprocess labeling container 1230 may include the frequency detection package 1218, the de-seasonality package 1220, the smart zero imputation package 1222, the trend label metadata creation package 1224 and the monthly normalization package 1226. The objective preprocess labelling container 1230 may receive data from the database service 1010 shown in FIG. 10 based on the project-driven process 1102 and objective-driven process 1106 shown in FIG. 11.

The objective preprocess labelling container 1230 may output a variety of labels that are used for subsequent feature analysis.

The frequency detection package 1218 may convert the non-binary frequency of an action to a binary frequency. The frequency detection package 1218 may determine multiple frequency values. For example, the frequency detection package 1218 may determine a binary frequency for each product group. The frequency detection package 1218 may send data to the de-seasonality package 1220.

The de-seasonality package 1220 may remove the seasonal component from data. For example, the de-seasonality package 1220 may remove the variations that occur at regular intervals from time series based data 306 shown in FIG. 3. The de-seasonality package 1220 may send data to the smart zero imputation package 1222.

The smart zero imputation package 1222 may be used to determine when there is a real zero value and when there is simply no data. The smart zero imputation package 1222 may send data to the trend label metadata creation.

The trend label metadata creation package 1224 may generate metadata relevant to the objective time series trend labelling task 1216. The trend label metadata creation package 1224 may generate metadata such as creation date, file size and author. The trend label metadata creation package 1224 may send data to the metadata table creation-driven process 1214 and the monthly normalization package 1226.

The monthly normalization package 1226 may adjust data to remove the effects of unusual or one-time influences. The monthly normalization package 1226 may send data to an object storage service 1228.

The object storage service 1228 may receive data from the monthly normalization package 1226 and from a raw data source. The object storage service 1228 may include Amazon^{®} Simple Storage Service (Amazon S3), Azure^{®} Blob, DigitalOcean, DreamObjects, Wasabi, Backblaze B2, Google^{®} Cloud and IBM^{®} Cloud Object Storage. The object storage service 1228 may be the same as the object storage service 1006 shown in FIG 10. The object storage service 1228 may send data to the objective time series trend labelling task 1216.

The objective time series trend labelling task 1216 may generate labels for trends in the data. The objective time series trend labelling task 1216 may label data as an increase, decrease or neutral trend and it may label the magnitude and duration of trends. The objective time series trend labelling task 1216 may interpret the data in a classified manner. The objective time series trend labelling task 1216 may send data to the data hydration-driven process 1212.

The data hydration-driven process 1212 may import data into an object. For example, the data hydration-driven process 1212 may populate a csv file with trend label data received from the objective time series trend labelling task 1216. The data hydration-driven process may send data to the database 1210.

The metadata table creation-driven process 1214 may receive data from the trend label metadata creation package and create a dimension table to store the data. The metadata table creation-driven process 1214 may send data to the database 1210.

The database 1210 may integrate data from disparate source systems and provision them for analytical use. The database 1210 may be the same as database 1004 shown in FIG 10. The database 1210 may be hosted on database 218 as shown in FIG. 2 or on a cloud service such as Microsoft^{®} Azure^{®} or Amazon^{®} AWS^{®}.

Reference is next made to FIG. 13, which shows another objective labelling diagram 1300 in accordance with one or more embodiments. The objective labelling diagram 1300 includes a project-driven process 1302, an objective-driven process 1304, an objective preprocess labelling task 1318, an objective static labelling task 1316, an objective time series labelling task 1332, an objective time series trend labelling task 1338, a file 1314, an object storage service 1306, a data hydration-driven process 1308, a metadata table creation-driven process 1310 and a database 1312.

The project-driven process 1302 may be executed when the user creates a new project through user applications 110 and 112 shown in FIG 1. The project-driven process 1302 may be the same as project-driven process 1102 shown in FIG. 11.

The objective-driven process 1304 may be executed when the user creates a new objective through user applications 110 and 112 shown in FIG. 1. The objective-driven process 1304 may receive an objective from the user that includes fields such as user group, an objective identifier, an entity code (such as a subject code or an HCP code or identifier), one or more values corresponding to the entity code, one or more metrics, a window length, and a time interval. The entity code may be for a product, a product class, a geographic area, a subject (also referred to herein as an initiating subject). The one or more values corresponding to the entity code may be identified values of the entity code, for example, product a and product b. The time period may be daily, monthly, quarterly, yearly, etc. The metric may be volume, volume change, market share, market share change, etc. as described herein. There may be multiple objective-driven processes 1304. The objective-driven process 1304 may be the same as objective-driven process 1106 shown in FIG. 11.

The project-driven process 1302 and the objective-driven process 1304 may be executed on a cloud service (not shown) such as AWS^{®} Lambda, Fission, Azure^{®} Functions and Google^{®} Cloud Functions. The objective-driven process 1304 may send an objective to the objective preprocess labelling task 1318.

The objective preprocess labelling task 1318 may include an objective preprocess labelling container 1330. The objective preprocess labelling container 1330 may receive data from the database 1312. The objective preprocess labelling container 1330 may generate data related to the frequency of an entity per user and monthly normalized time series for different entities per user. The objective preprocess labelling container 1330 may include the frequency detection package 1218, the de-seasonality package 1220, the smart zero imputation package 1222, the trend label metadata creation package 1224 and the monthly normalization package 1226 as shown in FIG 12. The objective preprocess labelling task may send data to the objective static labelling task 1316 and the objective time series labelling task 1332.

The objective static labelling task 1316 may generate static labels 1328 such as volume short term trend, volume long term trend, share short term trend, share long term trend, market driver short term trend, market driver long term trend, frequency, loyalty short term trend and loyalty long term trend. The objective static labelling task 1316 may store the static labels 1328 in file 1314.

The objective time series labelling task 1332 may generate time series labels 1334 and 1336. The time series labels 1334 and 1336 may include monthly normalized market-driver percentile and NAN percentile. The objective time series labelling task 1332 may send data to the object storage service 1306 and to the objective time series trend labelling task 1338.

The objective time series trend labelling task 1338 may generate time series trend labels 1340. The time series trend labels 1340 may include volume and share trend labels. There may be more than one objective time series trend labelling task 1338. The objective time series trend labelling task 1338 may store the time series trend labels 1340 in file 1314.

File 1314 may store data such as the data generated by the objective static labelling task 1316 and the objective time series trend labelling task 1338. File 1314 may be in the format of a CSV file, ORC file, JSON file, Avro file, Parquet file or a Pickle file. File 1314 may be stored on the object storage service 1306.

The object storage service 1306 may include Amazon^{®} Simple Storage Service (Amazon S3), Azure^{®} Blob, DigitalOcean, DreamObjects, Wasabi, Backblaze B2, Google^{®} Cloud and IBM^{®} Cloud Object Storage. The object storage service 1306 may be object storage service 1006 (see FIG. 10). The object storage service 1306 may send data to the data hydration-driven process 1308 and the metadata table creation-driven process 1310.

The data hydration-driven process 1308 may import data into an object. The data hydration-drive process 1308 may be data hydration-drive process 1212 (see FIG 12).

The metadata table creation-driven process 1310 may create a dimension table to store the data. The metadata table creation-driven process 1310 may be the metadata table creation-driven process 1214 (see FIG 12).

The data hydration-driven process 1308 and the metadata table creation-driven process 1310 may send data to the database 1312.

The database 1312 may be hosted on database 218 as shown in FIG. 2 or on a cloud service such as Microsoft^{®} Azure^{®} or Amazon^{®} AWS^{®}.

Reference is next made to FIG. 14, which shows an objective labelling output diagram 1400 in accordance with one or more embodiments. The objective labelling output diagram 1400 includes a frequency labelling output table 1402, a market driver labelling output table 1404, a trend labelling output table 1405, a loyalty labelling output table 1406 and a channel type labelling output table 1408.

The frequency labelling output table 1402 includes examples of frequency labels, associated metrics, and associated objective values. Frequency labels may include monthly, bimonthly, quarterly and other. Frequency-associated metrics may include total prescription volume and new to brand prescriptions. The frequency-associated objective value may be a or b.

The market driver labelling output table 1404 includes examples of market driver labels, associated trend types and associated objective values. Market driver labels may include market driver, some potential, selective potential and non-driver. Market driver-associated trend types may include short term and long term. The market driver-associated objective value may be a or b.

The trend labelling output table 1405 includes examples of trend labels, associated trend types, associated metrics, and associated objective values. Trend labels may include increasing, decreasing and neutral. Trend-associated trend types may include short term and long term. Trend-associated metrics may include total prescription volume and new to brand prescriptions. The trend-associated objective value may be a, b or a:b (share).

The loyalty labelling output table 1406 includes examples of loyalty labels, associated trend types and associated metrics. Loyalty labels may include loyalists, churners, shrinking practice, growing practice, shrinking practice and loyalist, and growing practice and churner. The loyalty-associated trend type may include short term or long term. The loyalty-associated metric may include total prescription volume and new to brand prescriptions.

The channel type labelling output table 1408 includes examples of channel type labels, attribution labels, associated trend types, associated metrics, associated objective values, secondary channel labels and tertiary channel labels. The channel type labelling output table 1508 may be a mapping table to categorize all generated labels so that the system can locate the labels for a specific capability, insight or calculation.

### Attribution

The attribution embodiments of this section may generally correspond to attribution modelling 404 in FIG. 4 and related steps (i.e. 434 - 444).

Reference is next made to FIG. 23, which shows a segmentation, attribution, and labelling diagram 2300 in accordance with one or more embodiments. The segmentation, attribution and labelling diagram 2300 includes event-driven processes 2302, an objective preprocessing task 2304, a segment activity generation task 2308, an attribution labelling task 2310, a preset orchestrator task 2312, a user information task 2314, a user segmentation task 2318, a next best audience task 2316 and a database 2306 (see e.g. data warehouse 902 in FIG. 9).

The event-driven processes 2302 may include a project-driven process and an objective-driven process. The project-driven process may be executed when the user creates a new project through user applications 110 and 112 shown in FIG. 1.

The objective-driven process may be executed when the user creates a new objective through user applications 110 and 112 shown in FIG. 1. The objective-driven process may receive an objective from the user that includes fields such as user group, an objective identifier, an entity code (such as a subject code or an HCP code or identifier), one or more values corresponding to the entity code, one or more metrics, a window length, and a time interval. The entity code may be for a product, a product class, a geographic area, a subject (also referred to herein as an initiating subject). The one or more values corresponding to the entity code may be identified values of the entity code, for example, product a and product b. The time period may be daily, monthly, quarterly, yearly, etc. The metric may be volume, volume change, market share, market share change, etc. as described herein. The event-driven processes 2302 may be executed on a cloud service (not shown) such as AWS^{®} Lambda, Fission, Azure^{®} Functions and Google@ Cloud Functions. The event-driven processes 2302 may be the event-driven processes 1102, 1104 and 1106 (see FIG. 11). The event-driven processes 2302 may send data to the objective preprocessing task 2304.

The objective preprocessing task 2304 may include an objective preprocessing package, an objective static labelling package, an objective time series labelling package and an objective time series trend labelling package. The objective preprocessing task 2304 is explained in further detail in FIG 12.

The objective preprocessing task 2304 may send objective labels to database 2306. The objective preprocessing task 2304 may further send data to the segment activity generation task 2308, the attribution labelling task 2310 and the next best audience task 2316.

The segment activity generation task 2308 may generate at least one activity from the data received from the objective preprocessing task 2304. The activity may include marketing and sales activities such as a call or an e-mail. The segment activity generation task 2308 may send activities to the database 2306.

The attribution labelling task 2310 may generate labels that describe the effect of channels in the dataset. Channels in marketing data may refer to channels where advertisements are served such as a call or an e-mail. The attribution labelling task 2310 may output the number of conversions resulting from an action and the change in conversion rate caused by an action. The attribution labelling task may be performed using Shapley value attribution, feature importance or permutation importance. The attribution labelling task 2310 may send objective attribution labels to database 2306. The attribution labelling task 2310 may further send data to the preset orchestrator task 2312.

The preset orchestrator task 2312 may generate presets used in further analyses. The preset orchestrator task 2312 may generate the presets required for further analyses. The preset orchestrator task 2312 may create all segments. The preset orchestrator task 2312 may send data to the user information task 2314 and the user segmentation task 2318.

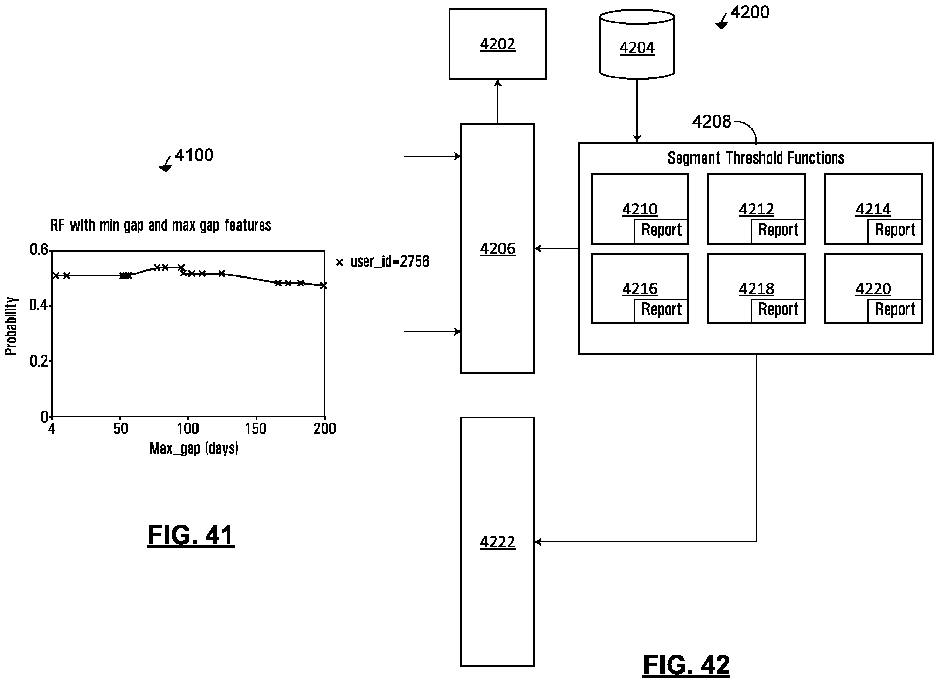

The user segmentation task 2318 may execute the user segmentation process 1530 to identify one or more segments from the at least one data set in database 1514 (see FIG. 15). The generated one or more segments may include one or more predetermined user segments, with thresholds or conditions established by a user. The predefined user segments can include, for example, switchers, shrinkers, growers, rising stars, etc. as described in FIG. 42. The user segmentation task 2318 is described in further detail in FIGs. 15 - 16 and 21.

The user information task 2314 may generate details about the user analysed in the user segmentation task 2318. The user information task 2314 may store data in a file such as a CSV file, ORC file, JSON file, Avro file, Parquet file or a Pickle file.

The next best audience task 2316 may generate data about the next best target for marketing and sales activities. The next best audience task 2316 may generate a current next best audience or a predicted next best audience. The next best audience task 2316 may be performed on the reporting engine 230 shown in FIG. 2.

The database 2306 may integrate data from disparate source systems and provision them for analytical use. The database 2306 may include Amazon^{®} DynamoDB, Azure^{®} Cosmos DB, MongoDB, Redis, Google@ Cloud Firestore. The database 2306 may be hosted on database 218 as shown in FIG. 2 or on a cloud service such as Microsoft@ Azure^{®} or Amazon^{®} AWS^{®}.

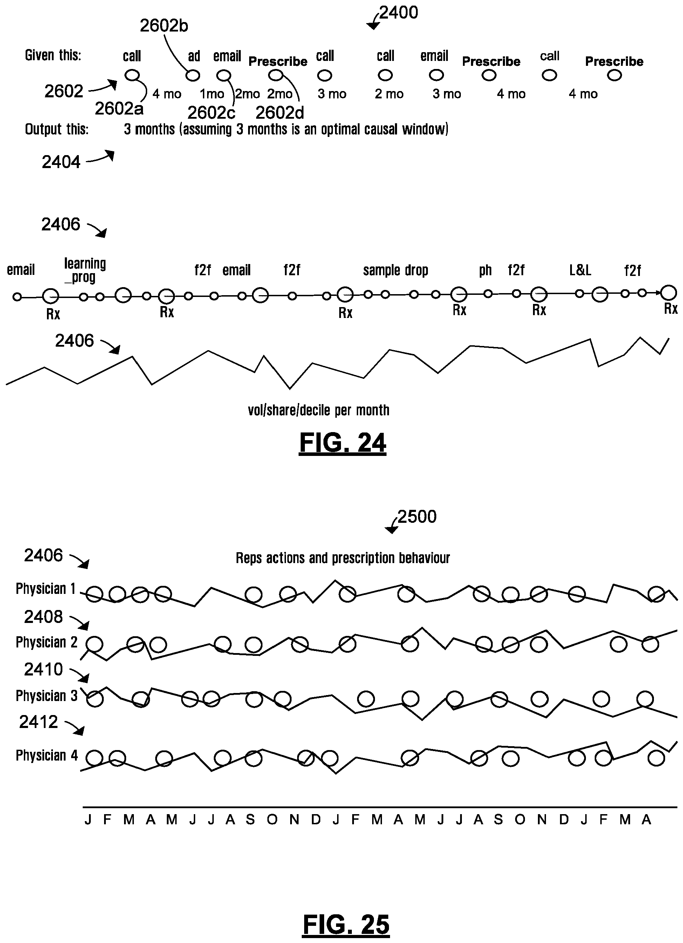

Referring to FIGs. 24 - 35 together, there is shown a series of journey diagrams 2500, 2600, 2700, 2800, 2900, 3000, 3100, 3200, 3300, 3400 and 3500. The journey diagrams show the determination of an optimal window size for actions such that those actions can be causally linked to the outcome, given a sequence of actions and outcomes.

An event 2602 may include an action such as a call 2602a, an advertisement 2602b, an e-mail 2602c or an outcome such as a prescription 2602d. Other events 2602 may include a learning program, a face-to-face meeting, a sample drop and a lunch and learn. The causal window estimation output 2404 may be a period of time such as 3 months. At 2406, a sequence of sales and marketing actions and physician prescriptions and a trendline depicting a metric per month are shown. The metric may include volume, share and decile.

At journey diagram 2500, sequences and trendlines 2406, 2408, 2410 and 2412 are shown for four physicians over a 28-month time period. Each physician may have an independent sequence and trendline.

A statistically significant local trend 2604 may be detected in the journey diagram. An estimate sequence leading to the trend 2606 may be identified around the statistically significant local trend 2604.

Estimate sequences 2704a, the number of instances of estimate sequences 2704b and the lift values achieved by estimate sequences 2704c are shown. Estimate sequences 2704a may include "call, e-mail", "face-to-face meeting, call, e-mail", "e-mail, face-to-face meeting, call, e-mail", "call, e-mail, face-to-face meeting, call, e-mail", "call, call, e-mail, face-to-face meeting, call, e-mail", and "email, call, call, e-mail, face-to-face meeting, call, e-mail". The number of instances of estimate sequences 2704b may refer to the number of similar sequences in the dataset. Lift values are the ratio of response in physicians receiving one kind of action to those receiving another. For example, overall lift for physicians who received an email compared to physicians overall may be 2.7, meaning that physicians who received an email are 2.7 times more likely to have a positive label than physicians overall. The start point of an estimate sequence 3204 and the end point of an estimate sequence 3408 are shown.

For each estimate sequence 2704a, a lift value 2704c may be calculated. The estimate sequence that achieves the highest lift in the dataset 3512, compared to neighbouring sequences, may be selected as a cause of the statistically significant local trend 2604. By analyzing all estimate sequences 2704a that cause a trend and similar sequences that failed to cause a trend, a conversion ratio for each journey and a conversion ratio of a control group of matched users may be generated. A conversion ratio may be the proportion of physicians receiving a particular action who have a positive label. The conversion ratios may be used to build an attribution model that outputs the attributed lift per action. The attribution model may be a Shapley Model, a Markov Model, and the like.

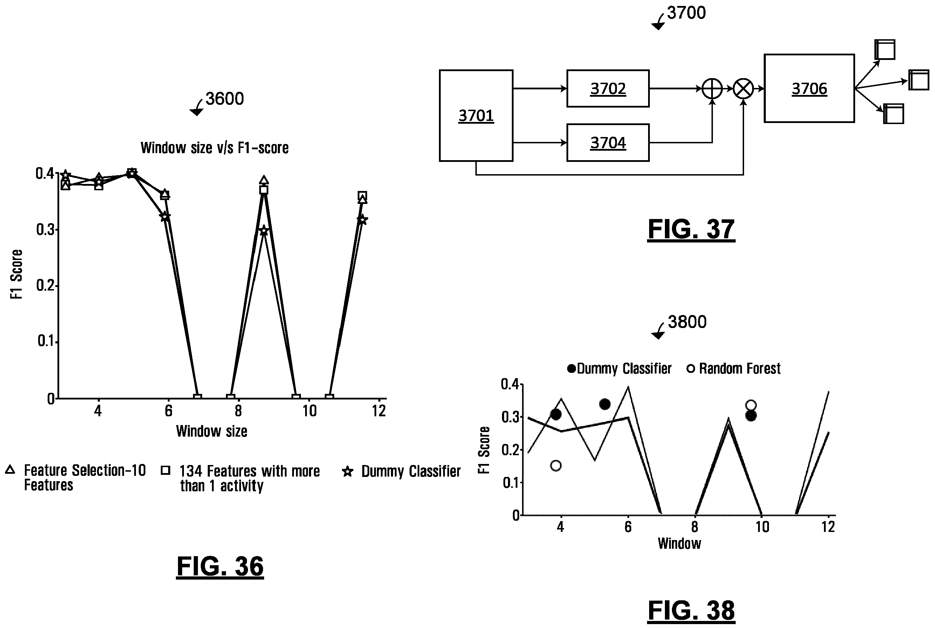

Reference is next made to FIG. 36, which shows a binary classification evaluation diagram 3600 in accordance with one or more embodiments. The binary classification evaluation diagram 3600 compares the F1 score of a dummy classifier, a model based on data with 134 features and more than one activity, and a model based on feature selection with 10 features. The F1-score may combine the precision and recall of a classifier into a single metric by taking their harmonic mean.

Reference is next made to FIG. 37, which shows a binary classification-based window and sub-sequence detection diagram 3700 in accordance with one or more embodiments. The binary classification-based window and sub-sequence detection diagram 3700 includes long term trend data 3701, a pattern mining package 3702, a binary classification package 3704 and an attribution model 3706.

The long term trend data 3701 may include change point labels 424 (see FIG. 4). The long term trend data 3701 may be in an ensemble model.

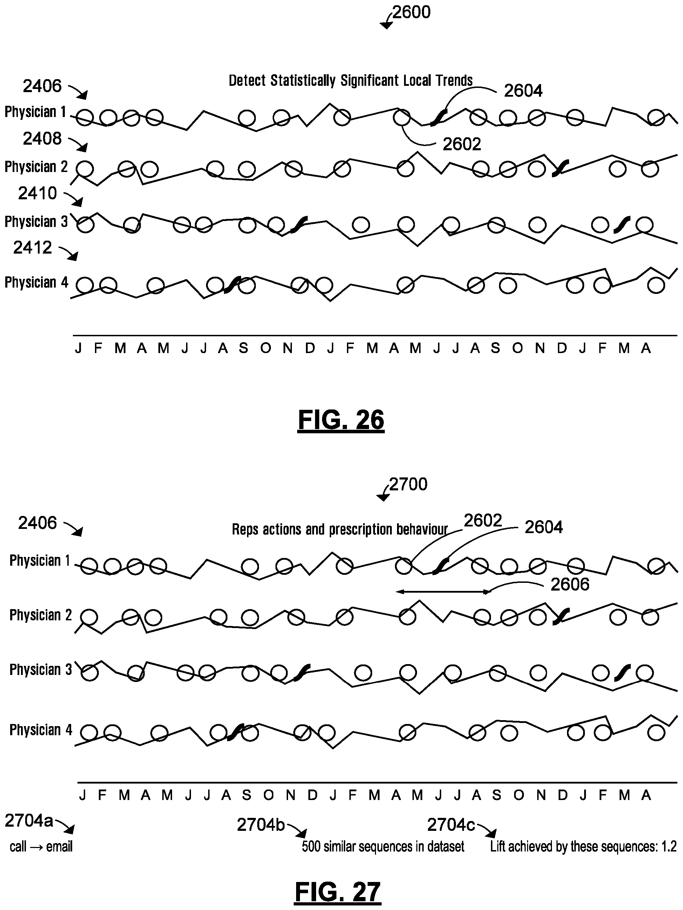

The binary classification package 3704 receives long term trend data 3700. For a given user, the binary classification package 3704 may identify a change point and the estimate sequences that took place in a predetermined window around the change point. The estimate sequences may be estimate sequences 2704a (see FIGs. 27 - 35). The binary classification package 3704 may use a classifier, such as a random forest classifier, to identify a desired sequence. The desired sequence may be converted into a vector using a vector-conversion method such as SGT or count vectorizer. The output of the binary classification package 3704 may be sent to the attribution model 3706.

The pattern mining package 3702 may identify a desired sequence and send an output to the attribution model 3706. The pattern mining package 3702 may discover sequential patterns in a set of sequences. The pattern mining package 3702 be an SPMF package.

The attribution model 3706 may generate an explainable prediction comprising a prediction rationale based on the prediction objective received from the user and an attribution model. The attribution model 3706 may use Shapley Value-based Attribution, Modified Shapley Value-Based Attribution, Markov Attribution, CIU, Counterfactuals, and the like. The attribution model 3706 may generate attributions for each activity.

Reference is next made to FIG. 38, which shows another binary classification evaluation diagram 3800 in accordance with one or more embodiments. The binary classification evaluation diagram 3800 compares the F1 score of a dummy classifier and a random forest classifier.

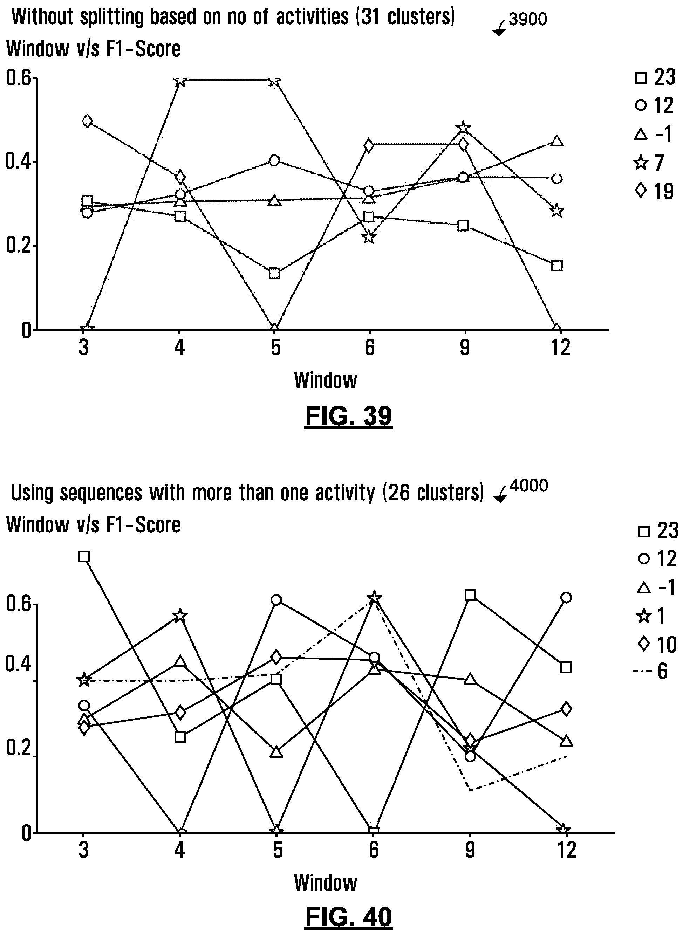

Referring to FIGs. 39 and 40 together, there is shown a series of binary classification evaluation diagrams 3900 and 4000 in accordance with one or more embodiments. Binary classification evaluation diagrams 3900 and 4000 compare the F1 score of a random forest classifier run on data segregated by clustering similar sequences together. Binary classification evaluation diagram 3900 includes single activity sequences. Binary classification evaluation diagram 4000 excludes single activity sequences.

Reference is next made to FIG. 41, which shows another binary classification evaluation diagram 4100 in accordance with one or more embodiments. Binary classification evaluation diagram 4100 shows the probability of a changepoint for a range of maximum gaps for a given user. The maximum gap is the gap between the last activity and the change point and is introduced as a feature to the random forest classifier.

Binary classification evaluation diagrams 3600, 3700, 3800, 3900, 4000 and 4100 are analyzed to determine the optimal window size. The window or cluster with the highest score is shortlisted and its corresponding sequence is used as an input for the attribution model.

### Prediction

The prediction embodiments of this section may generally correspond to prediction portion 406 in FIG. 4 and related tasks (i.e. 446 - 456). The predictions may include initiating subject volume predictions, initiating subject market share predictions, initiating subject active patient predictions and other numerical predictions for the set of initiating subjects.

Once attribution modelling is completed, models are generated to predict the initiating behaviors of one or more subjects. This could include the prescribing behavior of one or more HCPs. To build the initiating model, approaches can include baseline approaches, to compare effectiveness of predictive models. Non-parametric models may be used for instances when a client of the explainable prediction system have data with one variable (usually prescriptions).

Predictive models such as XGBoost, linear regression, LSTM etc. may also be used to generate an initiating model depending on the data availability.

An AutoRegressive Integrated Moving Average (ARIMA) model may be used to generate at least one initiating model based on volume data from a plurality of initiating subjects. The ARIMA model may produce volume prediction for a target subject for a target future time period. The ARIMA model may use a non-parametric baseline prediction approach to compare regression and tree based approaches.

An XGBoost Regression model may be used to generate at least one initiating model based on volume data from a plurality of initiating subjects. This may be done by stacking volume data based on a sliding window of 1-month, the volume data including geographical data about the initiating subject and CRM data related to the initiating subject. The XGBoost model may produce a volume prediction for an initiating subject for a future target time period.

Alternatively, as a fallback a time series forecasting model may be used as an initiating model.

The generated initiating models may be trained and validated through a time-series cross validation approach. This may include splitting historical data into multiple train-test data sets. For each train-test data set, models are trained and evaluated based on different effectiveness metrics such as RMSE, MAPE, and precision/recall (classification).

The numerical predictions 446 may be generated by models generated by predictive models such as XGBoost, Light GBM, CatBoost, linear regression and LSTM. These predictions 446 may provide a plurality of prediction models for a plurality of initiating subjects.

The regressor output explanation 456 may identify the features that contribute more to the predictions 406. For example, the regressor output explanation 456 may identify the average prescription value as a feature of higher importance when predicting the final predicted prescription value of an HCP. Statistical methods used to generate the regressor output explanation 456 may include LIME, SHAP, Permutation Importance, Context Importance and Utility (CIU), and Anchors.

The regressor output explanation 456 may be provided in two ways.

First, a Local Feature Importance may be determined which describes how features affect the prediction at an individual level (i.e. a single HCP) and gives a sense of the individual and output explanation at an individual level.

Second, a Global Feature Importance may be determined which describes how features affect the prediction on an aggregate or average and yields a high-level interpretation of the model.

The Local Feature Importance and the Global Feature Importance of the regressor output explanation 456 may be determined based on Local interpretable model-agnostic explanations (LIME) and SHapley Additive explanations (SHAP). Furthermore, Permutation Importance may be used, and Context Importance and Utility (CIU) may be used.

When SHAP is used for Local Feature Importance, a specific subject (HCP) may have an itemized list of the top important features, and for each feature a LFI value including the contribution in addition from the average prescription value into final predicted prescription value. The higher the LFI value, the higher the importance for the feature.

When SHAP is used for Global Feature Importance, it can provide an additive list that allows for the summation of local feature importance values for all subjects (HCP) to get global feature importance values for the model itself.

When Permutation Importance is used in order to find a list of important features and corresponding LFI values, this may be performed by measuring an increase in a loss function such as root-mean-square error (RMSE) by randomly shuffling a single feature value. A decrease in RMSE means more importance for a particular feature.

Context Importance and Utility (CIU) may be used for Local Feature Importance. CIU measures the fluctuation range from a target value as a feature value is changed.

In order to provide an explanation from the Local and Global Feature importance listings, attribution scores may be used.

An attribution score may be identified for each unique explanation technique described above, i.e. one for LIME, SHAP, Permutation Importance, CIU, etc.

A higher attribution score represents a more reliable explanation result for a technique. A lower attribution score represents a less reliable explanation result for the technique. The attribution score may be a range from 0 to 100%, and may provide a comparison method for the explanations of various explanation techniques together.

For example, for each initiating subject (i.e. for an HCP), an attribution score for LIME/SHAP/etc may be determined. The highest ranking technique (by attribution score) may be used to decide which technique is used for providing an explanation of a prediction.

One potential advantage for this explainable prediction technique is that it is model-agnostic, which means it may work on any type of ML model (not only XGBoost but also LSTM, etc.).

### Segmentation

The segmentation embodiments of this section may generally correspond to the predictive micro-segmentation 408 (and related tasks 458 - 468), historical micro-segmentation 410 (and related tasks 470 - 488 and 468), and lookalike segmentation 412 (and related tasks 490 - 496) of FIG. 4.

Reference is next made to FIG. 15, which shows a user segmentation diagram 1500 in accordance with one or more embodiments. The user segmentation diagram 1500 includes a project-driven process 1510 and an objective-driven process 1512. The project-driven process 1510 may be executed when the user creates a new project through user applications 110 and 112 shown in FIG. 1.

The objective-driven process 1512 may be executed when the user creates a new objective through user applications 110 and 112 shown in FIG. 1. The objective-driven process 1512 may receive an objective from the user that includes fields such as user group, an objective identifier, an entity code (such as a subject code or an HCP code or identifier), one or more values corresponding to the entity code, one or more metrics, a window length, and a time interval. The entity code may be for a product, a product class, a geographic area, a subject (also referred to herein as an initiating subject). The one or more values corresponding to the entity code may be identified values of the entity code, for example, product a and product b. The time period may be daily, monthly, quarterly, yearly, etc. The metric may be volume, volume change, market share, market share change, etc. as described herein. There may be multiple objective-driven processes 1512. The project-driven process 1510 and the objective-driven process 1512 may be executed on a cloud service (not shown) such as AWS^{®} Lambda, Fission, Azure^{®} Functions and Google@ Cloud Functions.

The objective-driven process 1512 may send an objective to an orchestrator 1516. The orchestrator 1516 receives the objective, channel attribution information 1520, at least one data set from database 1514, data from object storage service 1518. The orchestrator 1516 may produce output to the metric assembler 1540 and the user segment assembler 1538, which may collect and store the output in object storage service 1518. The segment assembler 1538 may create JSON objects that are returned as responses to the client through user applications 110 and 112 (see FIG. 1). The database 1514 may be the database 1004 (see FIG. 10). The object storage service 1518 may be object storage service 1006 (see FIG. 10).

The orchestrator 1516 may perform a metric analysis process 1522, one or more user segmentation analysis processes 1524, and one or more lookalike segmentation processes 1526 which may generate one or more lookalike segments 1528 which may be stored in object storage service 1518, and a user segmentation process 1530 having unsupervised segmentation process 1532, odds ratio process 1534 and post-binning process 1536.

The channel attribution information 1520 may include attribution models (such as those generated at 438 in FIG. 4 and described herein) and numerical predictions (such as those generated at 446 in FIG. 4 and described herein). The numerical predictions in the channel attribution information 1520 may refer to one or more of a prescription volume prediction 448, a prescription share prediction 450, an active patient prediction 452 and other numerical predictions 454 (see FIG. 4). The numerical predictions may be generated for the prescription behavior of individual HCPs.

Metric analysis process 1522 may include the determination of one or more metrics from the at least one dataset in database 1514 based on the objective and the channel attribution information 1520.

The one or more user segmentation analysis processes 1524 may execute the user segmentation process 1530 to identify one or more segments from the at least one data set in database 1514. The generated one or more segments may include one or more predetermined user segments, with thresholds or conditions established by a user. The predefined user segments can include, for example, switchers, shrinkers, growers, rising stars, etc. as described in FIG. 42.

The odds ratio process 1534 may explain how a group of subjects is different from another group based on the difference in distribution of certain data features.

The post-binning process 1536 may explain how a segment is different from another segment after the segment is formed.

The one or more lookalike segmentation processes 1526 may generate one or more lookalike segments 1528 which may be stored on object storage system 1518. The lookalike segmentation processes 1526 and lookalike labels 1528 are described in further detail in FIGs. 16 and 21.

Reference is next made to FIG. 16, which shows a predictive user segmentation diagram 1600 in accordance with one or more embodiments.

The predictive user segmentation package 1608 may communicate with storage system 1602 (see e.g. storage system 1518 in FIG. 15), database 1604 (see e.g. database 1004 in FIG. 10), and database 1606 (see e.g. database 1008 in FIG. 10).

The predictive user segmentation package 1608 may receive input 1614, generate output 1622 and output lookalike metadata 1612.

The predictive user model training task 1616 generates a lookalike model 1618 for use in predicting a set of users that are similar in both static and dynamic features to a given set of subjects. The lookalike model 1618 may be validated 1620 using a split of one or more data sets. The split may be 80/20. The model validation 1620 may generate an evaluation file 1610 that describes the quality of the generated model 1618.

When used to generate lookalike predictions, the lookalike model 1618 may receive input 1614, generate a predicted lookalike output based on the lookalike model 1618 and the input 1614, and generate an output 1622 and output lookalike metadata 1612.

The predictive user model training task 1616 may generate the lookalike model 1618 based on the initiation behaviour (i.e. for HCPs, their prescribing behaviour) based on similar users.

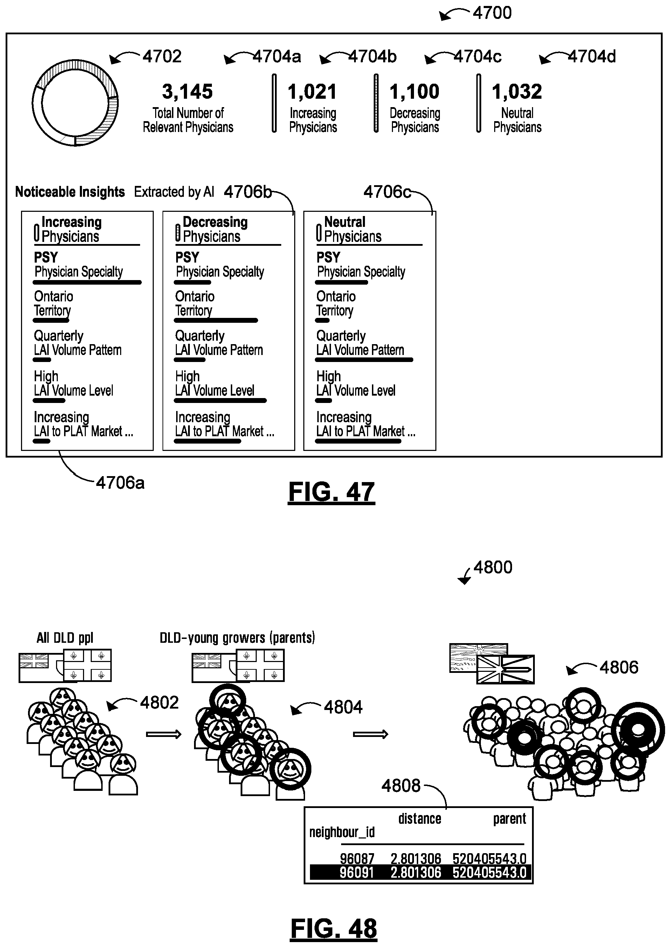

Referring to FIGs. 16 and 48 together, in one embodiment, the training task 1616 may train the lookalike model 1618 using a nearest neighbours method. This may include using the one or more data sets as a search space set (i.e. All doctor level data "DLD" subjects) 4802, generate features identified from the one or more data sets as numeric or nominal (i.e. segment labels for "grower" identified for subjects at set 4804), and generate a Scalable Nearest Neighbors (ScANN) search space using the search set.

The lookalike model 1618 receives input 1614 which may be a query, applies encoding/scaling models on the input query 1614 (e.g. non doctor level data "non-OLD" subject) and then searches the feature space for other subjects. The output 1622 and output lookalike metadata 1612 can include a plurality of lookalike subjects in the search space (i.e. the "matching young growers among non DLD people" 4806). The output 1622 and output lookalike metadata 1612 can include distances and neighbouring subject identifiers.

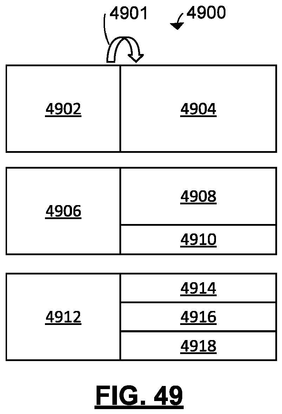

Referring to FIG. 16 and 49 together, in another embodiment, the training task 1616 may train the lookalike model 1618 using positive or unlabelled learning (PU learning). This may include building a data set including training and test data (unseen data) in a data set. The training task 1616 may use weight of evidence (WoE) encoding on categorical data, apply encoding/scaling models on a test set, assign each instance of the positive class (P) 4902 as 1, rest as 0 i.e. the Unlabeled class (U) - 4904, and at 4901 build a classifier (CatBoostClassifier) using P 4902 and U 4904.

The training task 1616 may further use the classifier to predict the probabilities of instances in U 4904 itself. The instances in U 4904 identified during prediction with lowest predicted probabilities may be classified as reliable negative class (RN) 4910.

Finally, in training task 1616, a classifier (CatBoostClassifier) may be trained using P 4906 and RN 4910.

To perform predictions using lookalike model 1618 using PU Learning, the classifier (CatBoostClassifier) may be used to predict the Positive class 4914 from the remaining Unlabelled class 4916 that were not tagged as RN 4918 based on the input query. Feature importance may be generated for output 1622 using SHAP (SHapley Additive exPlanations).

Reference is next made to FIG. 42, which shows a segmentation diagram 4200 in accordance with one or more embodiments. The segmentation diagram includes a data materialization process 4202, a database 4204 (for example, database 1514 in FIG. 15), a segment activity generator 4206, one or more segment threshold functions 4208, and a segment label generator 4222.

The hydration or data materialization process 4202 may receive serialized objects from one or more data sources, and may generate objects in memory corresponding to the user segments. Alternatively, the hydration or data materialization process 4202 may populate the generated segment labels with domain data.

The database 4204 may be for example, the database 1514 in FIG. 15.

One or more segments may be identified using segment threshold functions 4208. The segment threshold functions 4208 may include various functions of identifying segment labels in the one or more data sets. The segment threshold functions 4208 may include, for example, a switcher function 4210, a shrinker function 4212, a grower function 4214, a rising star function 4216, and other functions 4218 and 4220. These segment threshold functions 4208 may be used by the segment label generator 4222 to identify a segment label of the entities in the one or more data sets in database 4204. The segment threshold functions 4208 may use the individualized subject initiation models to generate predictions and identify matching subjects.

The switcher function 4210 may identify entities (for example, HCPs) gaining in volume/share.

The shrinker function 4212 may identify entities (for example, HCPs) decreasing in prescription volume/share.

The grower function 4214 may identify (for example, HCPs) gaining share in one brand, while simultaneously declining in competing brand.

The rising star function 4216 may identify (for example, HCPs) who currently have a small market but which are likely to grow to a bigger market within a future time period (e.g. 2 years). The identification may include predicting if total market (total prescriptions for product a and for product b) grows by at least double (or another factor) compared to data in a prior period. The predicted total market (total prescriptions for product a and for product b) is at least more than the median predicted total market of all subjects (HCPs).

The rising star function 4216 may use the subject initiation volume prediction model (which may be product or drug specific), and sum up predictions for total number of prescriptions for any products in a market (e.g. product a and b) to determine a total market prediction. The rising star function 4216 may operate for a particular date range. The rising star function 4216 may use an XGBoost regressor, stacked temporal data (prescriptions), static features, and other information associated with the initiating subject in the one or more data sets.

The segment label generator 4222 may generate associations in the database 4204 identifying subjects with an applied label based on the one or more segment threshold functions 4208.

Reference is next made to FIGs 42 - 46 together, which shows several segmentation evaluation diagrams for evaluation of the segment threshold functions 4208 in accordance with one or more embodiments.

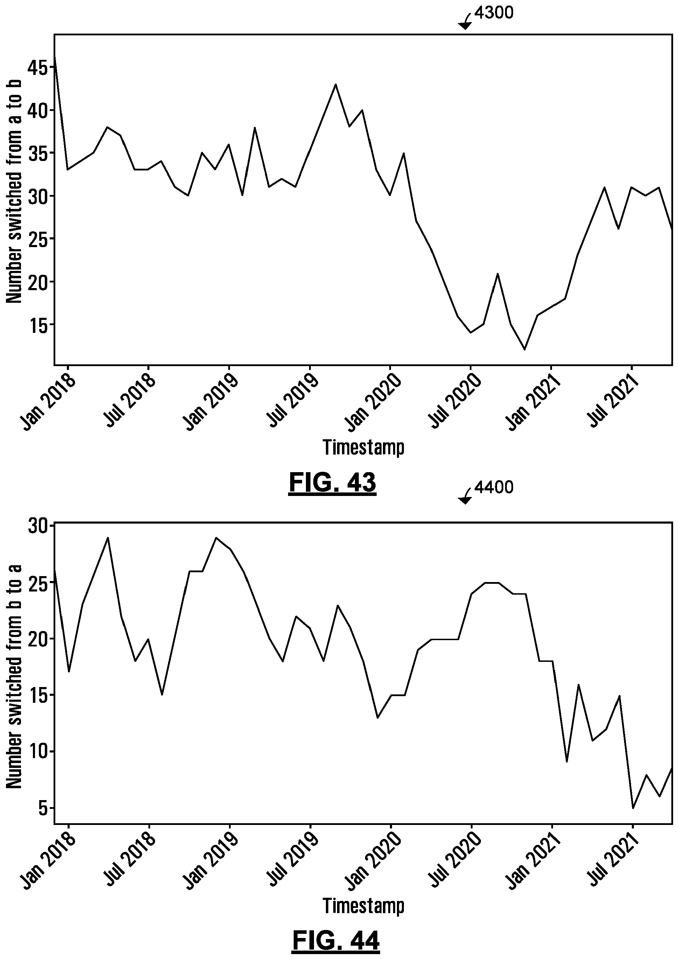

The segmentation evaluation diagram 4300 may be for instrumentation of the switcher function 4210 and may report on the number of entities (for example, HCPs) that have shown a trend to switch in one direction (see FIG. 43: from a competing productive to the objective brand) or in an opposite direction (see FIG. 44: from the objective brand to a competing brand).

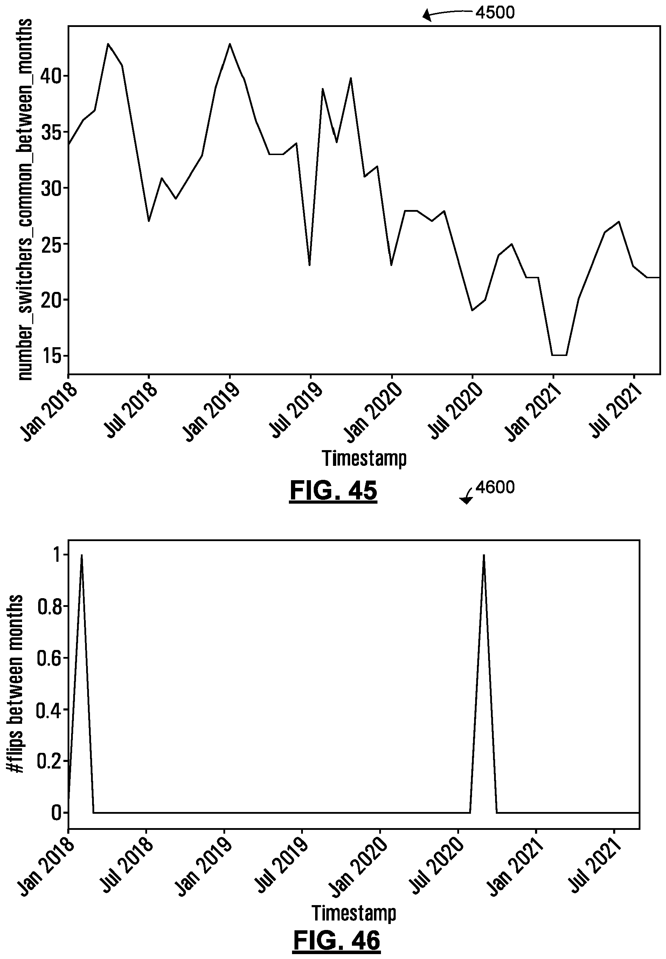

In FIGs. 45 and 46, another report is shown identifying the number of entities (HCPs) who are shown to continue their trend of switching from one product set (FIG. 45) or shown to reverse their direction of switch behaviour (FIG. 46).

### Explanations

Reference is next made to FIG. 20, which shows a prediction model diagram 2000 in accordance with one or more embodiments.

The prediction model diagram 2000 shows a database 2002, an object storage service 2004, and a subject database 2006.

The prediction model diagram further shows an initialization step 2008, data retrieval step 2010, subject database transformation 2012, feature engineering 2014, and model processing 2016.

At initialization 2008, a user supplies an objective request including parameters to the explainable prediction system. The objective request can include an environment including a user group identifier, a user name, a project identifier, an objective identifier, and configuration information. The objective parameters may include information relating to a request prediction objective of the user, such as objective type, one or more metrics, a value, a reference timestamp, a subject, and contextual information. The parameters included in the initialization may be a subset of the objective parameters above.

At data retrieval 2010, the explainable prediction system queries the database 2002 and the object storage service 2004 for information relating to the object request. This can include volume data, labels, time-series data, user data, and subject data.

At subject database 2012, data relating to a subject may be generated or transformed. This can include the creation of subject data in the object storage service 2004. This can further include generating data features based on the subject (i.e. HCPs) in the subject database 2006, geographic or other related features associated with the subject (e.g., population per physician determined based on geographic information of the HCP).

Feature engineering 2014 occurs that can include generating features (or datapoints) associated with the data sets in the explainable prediction system. These features can include engineered features for subject, engineering features for subject journeys, engineering features for subjects, engineered features for geography, etc. For example, the subject journey features can include windowed mean, binary transformations, length of time since a window, mean value grouped by feature, removing or identifying outliers.

Model processing 2016 may involving model training and validation of one or more machine learning models as described herein. Validation may include the generation of quality metrics 2018 including root mean square error (RMSE), root mean squared percentage error (RMSPE), and mean absolute percentage error (MAPE). Model processing 2016 may allow for manual or automatic model tuning based on the quality metrics 2018.

Reference is next made to FIG. 21, which shows another predictive user segmentation diagram 2100 in accordance with one or more embodiments. Predictive segments may be generated for the one or more data sets in the explainable prediction system. The segmentation of the data may be performed in order to identify different groups, or segments of a particular data set. Subject segmentations as traditionally understood is the process of separating subjects into distinct groups or segments based on some shared characteristics.

Segmentation is performed in order to give an organization an ability to understand their subject base (or customer base, or client base) by cohorting individuals together so that they may be generalized for analysis.

A challenge with conventional segmentation is that it is very difficult to segment users who have been recently added, or who have a limited amount of data (such as transaction data) associated with them in order to identify their segment.

Metrics 2102 may be generated from the one of more data sets of the explainable prediction system. These metrics can include current behavior of one or more initiating subjects such as transaction behavior. For example, this can include current data on transactions including prescription data of the initiating subject.

The metrics 2102, features determined of the initiating subjects (HCPs), attributes of the initiating subjects, and other CRM data sets may be used as input into one or more generated predictive models 2104 for the initiating subjects. The one or more generated predictive models 2104 may generate a current behavior 2106 and a predicted behavior 2107 for a future time period. The current behavior can include a volume percentile of the initiating subject, a market share percentile of the initiating subject, or other current behaviors of the initiating subject. The predicted behavior 2107 can include a volume increase, volume count, and other behaviors as described herein for a future time period. The current behavior 2106 and the predicted behavior 2107 may have a score 2108 associated with them. The score may include DLD and non-DLD scores for data in the current behavior 2106 and the predicted behavior 2107.

The current behaviors 2106, the predicted behaviors 2107, and the associated scores 2108 may be provided as input to the lookalike model 2116. The lookalike model 2116 may generate lookalike transaction data (such as lookalike prescription data).

The lookalike transaction data from the lookalike model 2116, initiating subject attributes (for example, HCP attributes), features determined based on the lookalike model output, and other CRM data sets may be used again as input into one or more generated predictive models 2104 for the lookalike subjects. The predictive models 2104 generate lookalike current behavior 2112 and predicted lookalike behavior 2114 (for a future time period). The lookalike current behavior 2112 and predicted lookalike behavior 2114 (for a future time period) may be used as described herein to identify predictive segments 2110 based on the lookalike model 2116 output.

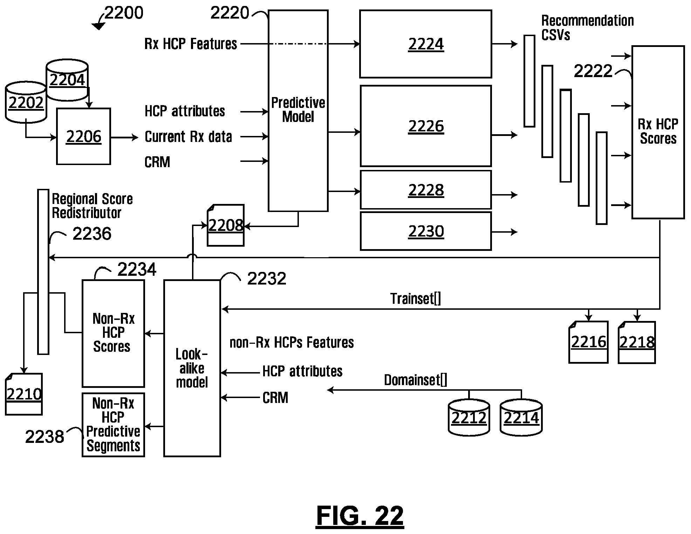

Reference is next made to FIG. 22, which shows a predictive scoring diagram 2200 in accordance with one or more embodiments.

Database 2202 and database 2204 provide data to generate at least one metric 2206. Database 2202 may be a data warehouse, for example, database 902 in FIG. 9. Database 2204 may be, for example, database 926 in FIG. 9. The at least one metric 2206 may include current transaction data. This could be for an initiating subject, a product, a geography, etc.

The metrics 2206, features generated based on data relating to an initiating subject, initiating subject attributes, and other CRM data may be input into at least one predictive model 2220.

The at least one predictive model 2220 may determine current behavior 2224 and predicted behavior 2226, a confidence interval 2228, and one or more predictive segments 2230. The output of the at least one predictive model 2220 may include a set of recommendations (for example, as indicated "recommendation CSVs"). The output of the at least one predictive model 2220 may be used as input to a scoring algorithm 2222 for identifying scores associated with the behaviors, the predicted behaviors, etc.

The identified scores 2222 may be for initiating subjects with substantial data in the one or more data sets, sufficient to provide an accurate prediction and scoring associated with their performance. The identified scores 2222 may be used for reports 2218, including ROI reports 2216. In one embodiment, the identified scores 2222 may be used as a training set for the lookalike model 2232.

The identified scores 2222 may be complemented by the lookalike model 2232, which may itself generate a set of lookalike HCP scores 2234 and lookalike predictive segments 2238. The lookalike HCP scores 2234 may be used instead of, or in combination with, the identified scores 2222. For example, for a particular initiating subject who lacks a substantial amount of data in the one or more datasets, the lookalike score 2234 and lookalike predictive segment 2238 may be used instead of the generated identified score 2222. For other initiating subjects or other entities, the lookalike model 2232 may augment or combine scores 2234 identified for matching "lookalike" individuals or groups to the identified score 2222.

The lookalike model 2232 may also receive attributes and input features relating to the initiating subjects. The lookalike HCP scores 2234 and lookalike predictive segments 2238 may be combined with the identified scores 2222 at redistributor 2236. The explainable output 2210 may include the scoring from the identified scores 2232, the lookalike HCP scores 2234 and lookalike predictive segments 2238.

Reference is next made to FIG. 58, showing another method diagram 5800 in accordance with one or more embodiments. The method 5800 is for providing explainable predictions, in accordance with one or more embodiments.

At 5802, a prediction objective is received from a user. The prediction objective may be received over a network connection from an application running on a client device, a web browser running on a client device connecting to the user applications 110 or 112 (see e.g. FIG. 1), or by an API call. The prediction objective can include references to one or more entities, such as CRM users, clients and customers within the CRM data, sales and marketing staff in the CRM data, organizational units or geographies in the CRM, initiating subjects such as healthcare providers, products, patients, etc. as generally described by entity based data set 302 (see FIG. 3). The prediction objective may be a business objective. The prediction objective may be a value of interest related to an initiating subject, such as change in prescription volume, change in prescribing share, volume or share. The prediction objective may correspond to one or more objective labels (see e.g. FIGs. 11, 12, 13, 14, 15, and 20).

At 5804, at least one data set from at least one data source is provided at a memory. The at least one data source may be, for example, the one or more data sources storing one or more data sets in FIG. 3.

At 5806, at a processor in communication with the memory, at least one activity is determined from the at least one data set, the at least one activity comprising a feature of the corresponding data set. The at least one activity may include an activity label. The at least one activity may include an objective label.

At 5808, at the processor, at least one attribution model is generated from the at least one feature, the at least one attribution model operative to provide a prediction and an associated explanation. An attribution model may be generated as described at attribution modelling 404 (and related steps 434 - 444) in FIG. 4. The at least one attribution model may be stored in the memory.

Optionally, the generating the at least one attribution model from the at least one feature may include: determining a plurality of time-indexed activity sequences associated with the prediction outcome; identifying at least one matching activity sub-sequence in the plurality of time-indexed activity sequences, the at least one matching activity sub-sequence including a preceding sequence of actions based on a candidate activity label; and generating an attribution model based on the one or more matching sub-sequences associated with the prediction outcome.

Optionally, the preceding sequence of actions may be a variable length activity wi ndow.

Optionally, the identifying the at least one matching sub-sequence may include: determining a plurality of candidate subsequences in the time-indexed sequence of actions, each of the plurality of candidate subsequences based on the candidate activity label and the preceding sequence; generating a trend model based on the at least one matching sub-sequence; wherein the determined metric may be a lift metric for each of the plurality of candidate subsequences; wherein the at least one matching sub-sequence may be selected based on the lift metrics of each candidate subsequence.

Optionally, the method may further include executing a SPMF algorithm.

Optionally, the method may further include: generating a binary classification model based on the at least one matching sub-sequence and the associated lift metric; wherein the generating the at least one attribution model from the at least one feature includes generating the at least one attribution model based on the output of the SPMF algorithm, the binary classification model, and the trend model; and wherein the attribution model may be one of a Shapley model or a Markov model.

At 5810, at the processor, generating an explainable prediction comprising a prediction and at least one prediction rationale corresponding to the prediction, the prediction rationale is determined based on the prediction objective received from the user and the at least one attribution model.

Optionally, the determining the at least one activity may further include: determining at least one activity label based on the at least one data set, the at least one activity label includes a time-series activity label based on time series data in the at least one data set; and associating the at least one activity label with an initiating subject, wherein the initiating subject is optionally a healthcare provider.

Optionally, the at least one activity label may include: an activity label based on the at least one data set, the at least one static label comprising one of a trend label, a frequency label, a market driver label, a loyalty label; a prediction outcome determined from the prediction objective, the prediction outcome may include one of market share, sales volume, and patient count; and a metric of the prediction outcome, the metric comprising a numerical value corresponding to an increase value, a decrease value, or a neutral value of the prediction outcome.

Optionally, the method may further include: determining an initiation model for each of a plurality of initiating subjects, each initiation model based on the at least one activity of the corresponding initiating subject and comprising a regression model; generating a predicted metric for a future time period based on the initiation model for the corresponding initiating subject; using an explanatory algorithm to generate a prediction explanation based on the at least one attribution model; and wherein the predicted metric may include a numerical prediction and the prediction explanation.

Optionally, the explanatory algorithm may include at least one selected from the group of a Local Interpretable Model-Agnostic Explanation algorithm and a SHapley Additive explanations (SHAP) algorithm.

Optionally, the regression model may be one of an ARIMA model or an XGBoost model. When prediction quality isn't satisfactory, a time-series forecasting model may be used it if yields better results.

Optionally, the method may further comprise: determining a segment label for each corresponding initiating subject based on the predicted metric for the future time period.

Optionally, the segment label may be determined based on an odds ratio model.

Optionally, the segment label may be determined based on a classifier.

Optionally, the segment label may comprise a rising star label, a grower label, a shrinker label, or a switcher label.

Optionally, the determining the segment label may include: determining an embedding vector based on data from the at least one data source associated with the initiating subject; and generating at least one matching seed in a plurality of seed entries, the at least one matching seed entry based on the embedding vector, the at least one matching seed entry corresponding to a predicted segment label.

Optionally, the method may further include: identifying a distance metric for each of the at least one matching seed entry; and ranking the at least one matching seed entry based on the distance metric.

Optionally, the predicted segment label may be a lookalike segment label for the initiating subject based on the at least one matching seed entry.

Optionally, the method may further include performing a semi-supervised learning algorithm.

Optionally, the prediction objective from the user may be received in a prediction request at a network device in communication with the processor, the method further including: transmitting, using the network device, a prediction response comprising the explainable prediction to the user.

### Next Best Audience

As described herein, audience may refer to an initiating subject, for example, a healthcare provider who may initiate prescriptions for patients or who may recommend products for patients to purchase. Initiating subjects may further include other types of subjects who are not healthcare professionals, for example, salespeople who may sell or resell a manufacturer's products (on a commission basis, for example). The audiences may be human persons, groups of human people, or organizations themselves.

Reference is next made to FIG. 17, which shows an audience reporting diagram 1700 in accordance with one or more embodiments. The audience reporting diagram 1700 includes an objective-driven process 1702, a next best audience task 1704, a database 1706, a subject database 1708, a feature file 1712, an object storage service 1710, an objective static labelling task 1714 and an audience assembler-driven process 1716.

The objective-driven process 1702 may be executed when the user creates a new objective through user applications 110 and 112 shown in FIG. 1. The objective-driven process 1702 may receive an audience prediction objective from the user that includes fields such as user group, an objective identifier, an entity code (such as a subject code or an HCP code or identifier), one or more values corresponding to the entity code, one or more metrics, a window length, and a time interval. The entity code may be for a product, a product class, a geographic area, a subject (also referred to herein as an initiating subject). The one or more values corresponding to the entity code may be identified values of the entity code, for example, product a and product b. The time period may be daily, monthly, quarterly, yearly, etc. The metric may be volume, volume change, market share, market share change, etc. as described herein. The objective-driven process 1702 may be executed on a cloud service (not shown) such as AWS^{®} Lambda, Fission, Azure^{®} Functions and Google@ Cloud Functions.

The next best audience container 1704 may generate next best audience predictions based on the objective received from the objective-driven process 1702 and data from the database 1706, the subject database 1708 and the object storage service 1710. The next best audience container 1704 may output a feature file 1712 to be stored in object storage service 1710. The next best audience container 1704 may include analysis-driven processes 1718, a look-alike package 1720 and a data prediction model package 1722.

The analysis-driven processes 1718 may include an analysis-driven process for "DLD" data and an analysis-driven process for "non-OLD" data.

The analysis-driven process for "non-OLD" data may initiate the look-alike package 1720. The look-alike package 1720 may segment non-DLD HCP data base on learned patterns from DLD HCP data. The look-alike package 1720 may be the predictive user segmentation package 1608 (see FIG. 16).

The analysis-driven process for "DLD" data may initiate the data prediction model package 1722. The data prediction model package 1722 may include data retrieval, feature engineering, model processing and quality metrics. The data retrieval function of the data prediction model package 1722 may retrieve data from database 1706 and subject database 1708. The data retrieval function of the data prediction model package 1722 may send data to and receive data from the objective static labelling task 1714.

The objective static labelling task 1714 may generate static labels such as volume short term trend, volume long term trend, share short term trend, share long term trend, market driver short term trend, market driver long term trend, frequency, loyalty short term trend and loyalty long term trend. The objective static labelling task 1714 may be the objective static labelling task 1316 (see FIG. 13).

The next best audience container 1704 may output data to the audience assembler-driven process 1716. The audience assembler-driven process 1716 may generate an explainable prediction report. For example, the audience assembler-driven process 1716 may output a list of audience IDs and audience scores. Audience scores may include predicted target values and prediction intervals. Audience scores may be numerical scores or categorical scores. The output may further include a plurality of audience predictions in a ranked list ranked based on the corresponding audience scores, a ranked list of audience segments, a change in the audience score of a changing audience prediction, audience data, prediction rationale corresponding to the candidate audience prediction, contact timeline data and previous audience scores for prior time periods. Each audience prediction may correspond to an initiating subject such as a healthcare provider.

The database 1706, the object storage service 1710 and the subject database (e.g. physician database) 1708 may be provided in database 218 shown in FIG. 2. The database 1706, the object storage service 1710 and the subject database (e.g. physician database) 1708 may be provided by a server at the explainable prediction system, or may be provided as services by, for example, Microsoft@ Azure^{®} or Amazon^{®} AWS^{®}.

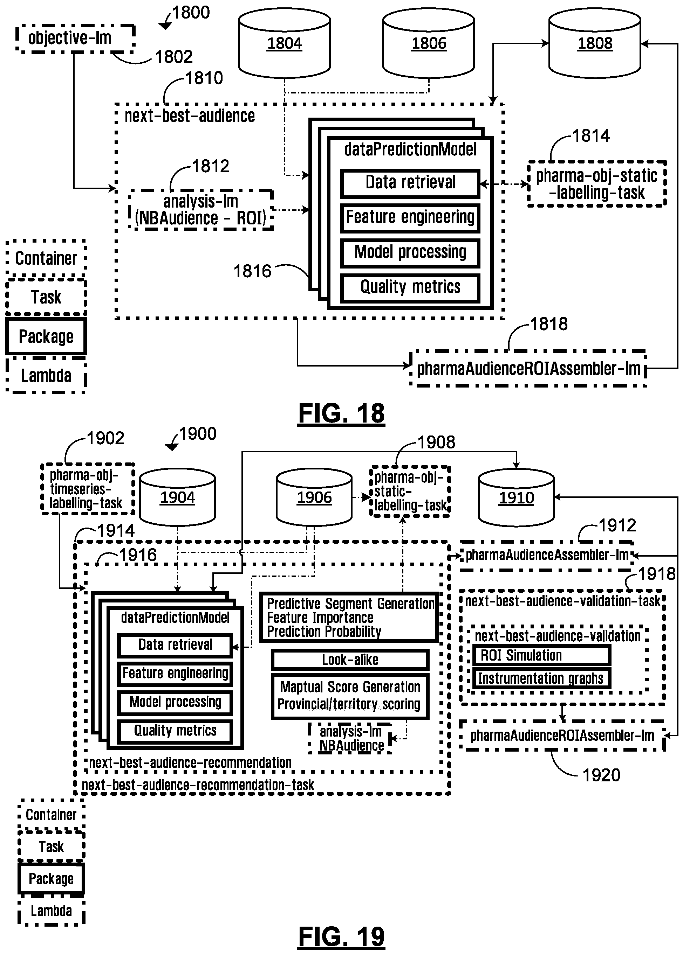

Reference is next made to FIG. 18, which shows an audience reporting simulation diagram 1800 in accordance with one or more embodiments. The audience reporting simulation diagram 1800 includes an objective-driven process 1802, a next best audience task 1810, a database 1804, a subject database 1806, an object storage service 1808, an objective static labelling task 1814 and an audience ROI assembler-driven process 1818. The audience reporting simulation diagram 1800 may be tailored to generate ROI calculations and insights.

The objective-driven process 1802 may be the objective-driven process 1702 (see FIG. 17). The database 1804 may be the database 1706 (see FIG. 17). The subject database 1806 may be the subject database 1708 (see FIG. 17). The object storage service 1808 may be the object storage service 1710 (see FIG. 17). The objective static labelling task 1814 may be the objective static labelling task 1714 (see FIG. 17).

The next best audience container 1810 may generate next best audience predictions based on the objective received from the objective-driven process 1802 and data from the database 1804, the subject database 1806 and the object storage service 1808. The next best audience container 1810 may include an analysis-driven process 1812 and data prediction model packages 1816.

The analysis-driven process 1812 may initiate one or more data prediction model packages 1816. The analysis-driven process 1812 may be configured to analyze an ROI of next best audience predictions. The ROI may be the return on investment against the main metric of the target objective (e.g. number of prescriptions) and may be scaled nationally or to a particular region.

The data prediction model packages 1816 may each include data retrieval, feature engineering, model processing and quality metrics. The data retrieval function of the data prediction model packages 1816 may retrieve data from database 1804 and subject database 1806. The data retrieval function of the data prediction model packages 1816 may send data to and receive data from the objective static labelling task 1814.

The next best audience container 1810 may output data to the audience assembler-driven process 1818. The audience assembler-driven process 1818 may generate the explainable prediction report. For example, the audience assembler-driven process 1818 may output a list of user IDs and predicted target values with prediction intervals. The output may be summarized into one score. The audience assembler-driven process 1818 may generate audiences for DLD HCP data which is optimized for ROI.

Reference is next made to FIG. 19, which shows an audience reporting recommendation diagram 1900 in accordance with one or more embodiments. The audience reporting recommendation diagram 1900 includes an objective time series
labelling task 1902, a next best audience recommendation task 1914, a next best audience recommendation container 1916, a database 1904, a subject database 1906, an object storage service 1910, an objective static labelling task 1908, an audience assembler-driven process 1912, a next best audience validation task 1918 and an audience ROI assembler-driven process 1920.

The objective time series labelling task 1902 may generate time series labels 1334 and 1336 (see FIG. 13). The time series labels may include monthly normalized market-driver percentile and NAN percentile. The objective time series labelling task 1902 may send time series label data to the next best audience recommendation container 1916.

The next best audience recommendation task 1914 may generate data about the next best target for marketing and sales activities. The next best audience task 1914 may generate a current next best audience or a predicted next best audience. The next best audience task 1914 may be performed on the reporting engine 230 shown in FIG. 2. The next best audience task 1914 may contain the next best audience recommendation container 1916.

The next best audience recommendation container 1916 may include data prediction model packages, a predictive segment generation package, a feature importance package, a prediction probability package, a look-alike package, a score generation package, a provincial/territory scoring package and a next best audience analysis-driven process.

The data prediction model packages may each include data retrieval, feature engineering, model processing and quality metrics packages. The data prediction model packages may receive data from database 1904, subject database 1906 and object storage service 1910. The data prediction model packages may also send data to object storage service 1910.

The predictive segment generation package, the feature importance package and the prediction probability package may send data to the data retrieval package and to the objective static labelling task 1908.

The objective static labelling task 1908 may generate static labels such as volume short term trend, volume long term trend, share short term trend, share long term trend, market driver short term trend, market driver long term trend, frequency, loyalty short term trend and loyalty long term trend. The objective static labelling task 1714 may be the objective static labelling task 1316 (see FIG. 13).

The score generation package and the provincial/territory scoring package may send score data to the next best audience analysis-driven process. The next best audience analysis driven process may generate a ranked list of next best audiences.

The next best audience task 1914 may output data to the audience assembler-driven process 1912. The audience assembler-driven process 1912 may receive data from the next best audience recommendation task and the object storage service 1910. The audience assembler-driven process 1912 may generate an explainable prediction report. For example, the audience assembler-driven process 1912 may output a list of audience IDs and audience scores. Audience scores may include predicted target values and prediction intervals. Audience scores may be numerical scores or categorical scores. The output may further include a plurality of audience predictions in a ranked list ranked based on the corresponding audience scores, a ranked list of audience segments, a change in the audience score of a changing audience prediction, audience data, prediction rationale corresponding to the candidate audience prediction, contact timeline data and previous audience scores for prior time periods. Each audience prediction may correspond to an initiating subject such as a healthcare provider. The audience assembler-driven process 1912 may be the audience assembler-driven process 1716.

The next best audience validation task 1918 may be operable to check if the audience predictions fulfill the input objective. The next best audience validation task 1918 may include a next best audience validation container. The next best audience validation container may include an ROI simulation package and an instrumentation graphing package. The ROI simulation package may simulate a future sequence of actions and outcomes related to each next best audience selection and related ROI data. The instrumentation graphing package may create visual representations of the simulated future sequence of actions and outcomes related to each next best audience selection. The audience predictions may be validated by checking whether the simulated future sequence of actions and outcomes related to each next best audience selection fulfill the input objective. The next best audience validation task 1918 may send validation data to the audience ROI assembler-driven process 1920.

The audience ROI assembler-driven process 1920 may compile data from the next best audience validation task 1918 and the object storage service 1910. The audience ROI assembler-driven process 1920 may generate an explainable prediction report related to audience predictions and ROI data.

The database 1904, the object storage service 1910 and the subject database (e.g. physician database) 1906 may be provided in database 218 shown in FIG 2. The database 1904, the object storage service 1910 and the subject database (e.g. physician database) 1906 may be provided by a server at the explainable prediction system, or may be provided as services by, for example, Microsoft@ Azure^{®} or Amazon^{®} AWS^{®}.

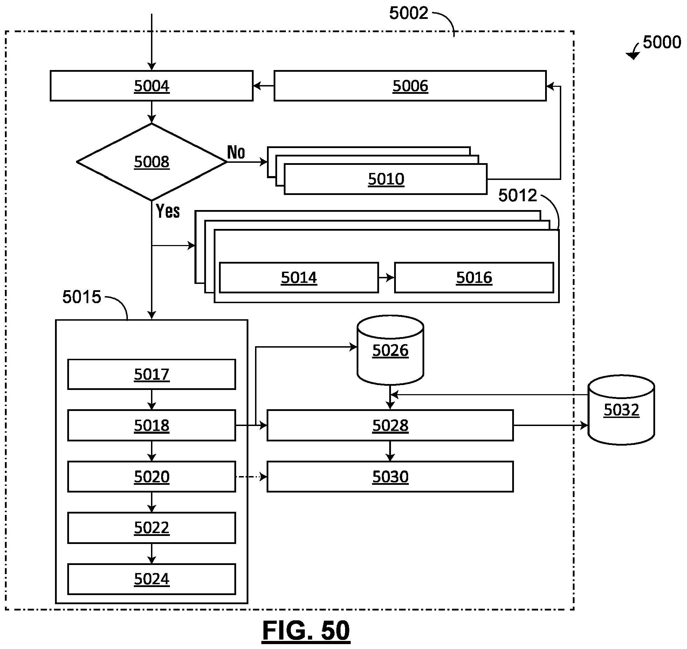

Reference is next made to FIG. 50, which shows an audience diagram 5000 in accordance with one or more embodiments. Audience diagram 5000 includes a next best audience container 5002, a next best audience preprocessing task 5004, a static labelling task 5010, a next best audience model training task 5012, a next best audience task 5015, an audience database 5026, a segment activity generation task 5028, a segment label generation task 5030 and a database 5032.

The next best audience preprocessing task 5004 may be initiated by next best audience task 2316 (see FIG. 23). The next best audience preprocessing task 5004 may perform quality assessment, cleaning, transformation and reduction of data such as objective data.

At 5008, the data output from the next best audience preprocessing task 5004 may be checked for the presence of static labels. Static labels may include short-term trends, long-term trends, frequency, market driver and loyalty. If the data output from the next best audience preprocessing task 5004 does not include static labels, the data will be routed to static labeling task 5010.

Static labeling task 5010 may generate new static labels for data. Static labeling task 5010 may send data and associated static labels to the static labeling check task 5006. There may be more than one static labeling task 5010.

The static labeling check task 5006 may check the appropriateness of the static labels generated for the data by static labeling task 5010. The static labeling check task 5006 may then send data and associated checked static labels to the next best audience preprocessing task 5004.

If, at 5008, the data output from the next best audience preprocessing task 5004 includes static labels, the data will be routed to the next best audience model training task 5012 and the next best audience task 5015.

The next best audience model training task 5012 may train the predictive and explanatory components of the next best audience model when the system is first setup or it may retrain the predictive and explanatory components of the next best audience model each time new data is received at the next best audience container 5002. The next best audience model training task 5012 may include a next best audience model training package 5014 and a next best audience model explainability package 5016. The next best audience model training package 5014 may train the predictive components of the next best audience model (e.g. audience score generating components) and send data to the next best audience model explainability package 5016. The next best audience model explainability package 5016 may train the explanatory components of the next best audience model.

The next best audience task 5015 may generate data about the next best target for marketing and sales activities. The next best audience task 5015 may generate a current next best audience or a predicted next best audience. The next best audience task 5015 may be performed on the reporting engine 230 shown in FIG. 2. The next best audience task 5015 may include a next best audience check package 5016, a next best audience ingestion package 5018, a next best audience recommendation package 5020, a next best audience validation package 5022 and a next best audience scoring package 5024.

The next best audience check package 5016 may check whether the received data are within expected values. The checked data is then sent to the next best audience ingestion package 5018.

The next best audience ingestion package 5018 may send data to the audience database 5026, the segment activity generation task 5028 and the next best audience recommendation package 5020. The data from the next best audience ingestion package 5018 may be used elsewhere as input for the explanation system (see e.g. FIG. 4).

The next best audience recommendation package 5020 may generate segment recommendations. The recommendation of which subject to target is generated from the score itself or the change in score. The next best audience recommendation package 5020 may send recommendation data to the segment label generation task 5030 and the next best audience validation package 5022.

The next best audience validation package 5022 may be operable to check if the recommendations fulfill the input objective. The next best audience validation package 5022 may send validation data to the next best audience scoring package 5024.

The next best audience scoring package 5024 may generate an audience score. The audience score may be a numerical score associated with an audience to enable a user to compare the relative ranking of different audiences.

The segment activity generation task 5028 may identify activities in the data. The activities may include marketing and sales activities such as a call or an e-mail. The segment activity generation task 5028 may receive data from the next best audience ingestion package 5018, audience database 5026 and database 5032. The segment activity generation task may send segment activity data to database 5032 and segment label generation task 5030. The segment activity generation task 5028 may be segment activity generation task 2308 (see FIG. 23).

The segment label generation task 5030 may identify a segment label for the entities in the data. The segment label generation task 5030 may be performed by segment label generator 4222 (see FIG. 42).

The audience database 5026 may store audience data such as audience predictions. The database 5032 may store segment activity data. The audience database 5026 and database 5032 may be provided in database 218 shown in FIG 2. The audience database 5026 and database 5032 may be provided by a server at the explainable prediction system, or may be provided as services by, for example, Microsoft^{®} Azure^{®} or Amazon^{®} AWS^{®}.

Reference is next made to FIG. 47, which shows a user interface diagram 4700 in accordance with one or more embodiments. User interface diagram 4700 includes graphical representation 4702, key insights 4704a, 4704b, 4704c and 4704d and noticeable insights 4706a, 4706b and 4706c. User interface diagram 4700 may display data of the types described in FIG. 14. User interface diagram 4700 may be provided by user applications 110 and 112 (see FIG. 1) on user devices.

The graphical representation 4702 may show the relative occurrences of trends within an entity of interest. For example, the entity may be relevant physicians and the trends may include increasing physicians, decreasing physicians and neutral physicians.

Key insight 4704a may indicate the total number of entity members. For example, key insight 4704a may indicate the total number of relevant physicians. Key insights 4704b, 4704c and 4704d may indicate the number of entity members who belong to a trend.

Noticeable insights 4706a, 4706b and 4706c may elaborate on key insights 4704a, 4704b and 4704c by providing statistics for each trend group. For example, noticeable insight 4706a may indicate the number of increasing physicians that belong to a physician specialty, a territory, a volume pattern, a volume level and a to-market ratio.

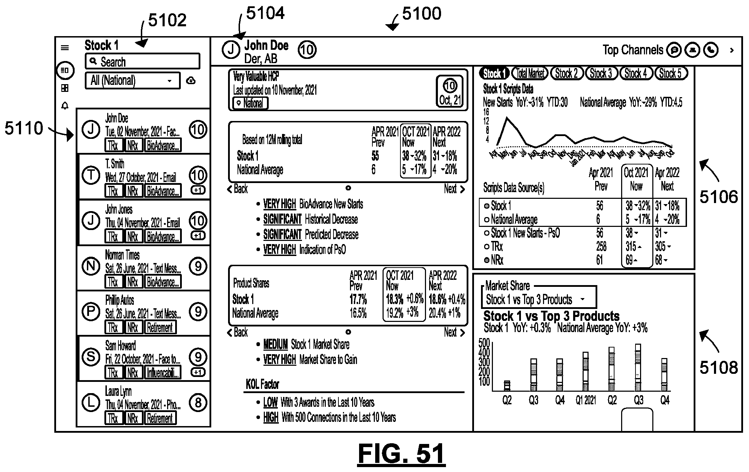

Reference is next made to FIG. 51, which shows another user interface diagram 5100 in accordance with one or more embodiments. User interface diagram 5100 includes an entity ranking panel 5102, a selected entity identifier panel 5104, a trend visualizer panel 5106, and a market share visualizer panel 5108. User interface diagram 5100 may be provided by user applications 110 and 112 (see FIG. 1) on user devices.

The entity ranking panel 5102 may display all relevant entities (audience members, or subjects in this case) ranked based on their score. The information displayed for each entity may include a name, user segments, a photograph, history of engagement, a numerical or categorical score and explanatory factors of the entity's score. For example, the entity ranking panel 5102 may display a list of health care providers and their audience score out of ten, including audience member or subject 5110. Audience member or subject 5110 may include the subject's name, history of engagement, user segments, and an audience score of 10. The audience score may be generated by the next best audience container 1704 (see FIG. 17) or the next best audience task 1912 (see FIG. 19). At the top of the entity ranking panel 5102 there may be provided functionalities to search for an entity, filter the ranked list of entities and download the ranked list of entities. The user may select an entity from entity ranking panel 5102.

The selected entity identifier panel 5104 may display information about the user-selected entity. The displayed entity information may include a name, a photograph, a specialty, a location, a score and top channels associated with the entity. Top channels associated with the entity may be the best marketing channels to reach the entity such as chat, phone call and e-mail.

The trend visualizer panel 5106 may display trend data for products of interest (also referred to herein as stocks). For example, the trend visualizer panel 5106 may display the trend of pharmaceutical product prescription new starts in graphical format and in table format. The user may toggle between the trend data for different products at the top of the trend visualizer panel 5106.

The market share visualizer panel 5108 may display market share data for products of interest. For example, the market share visualizer panel 5108 may display the market share of a pharmaceutical product of interest compared to the top three increasing competitor pharmaceutical products in graphical format and in table format.

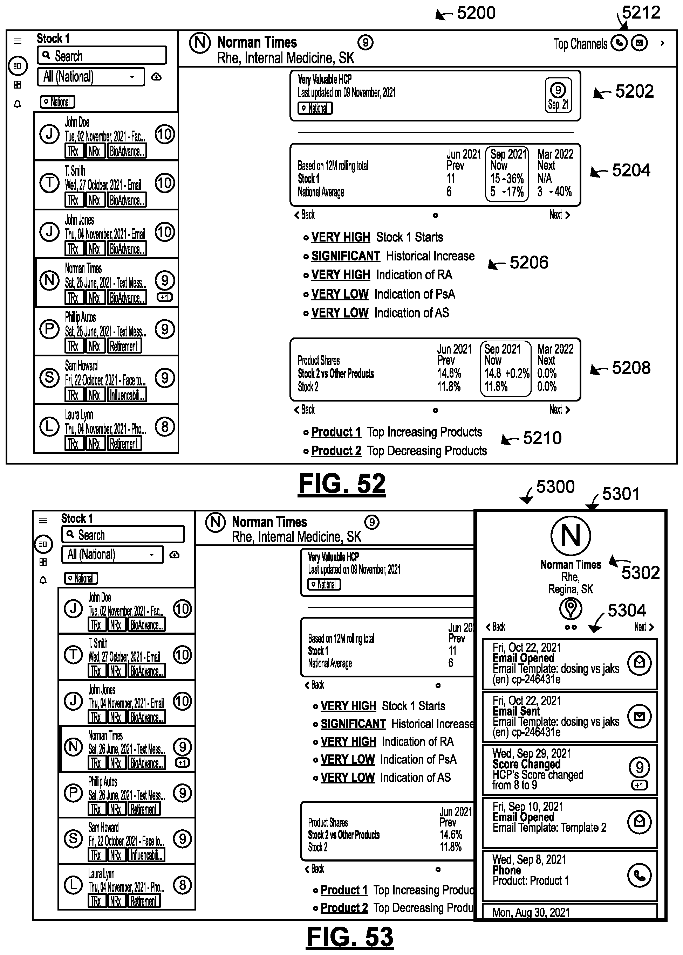

Reference is next made to FIG. 52, which shows another user interface diagram 5200 in accordance with one or more embodiments. User interface diagram 5200 includes an entity overview panel 5202, a product trend data panel 5204, a segment labels list 5206, a product shares data panel 5208 and an entity-related products list 5210. User interface diagram 5200 may be provided by user applications 110 and 112 (see FIG. 1) on user devices.

The entity overview panel 5202 may display data related to the entity such as a main label, a last update date, a territory or geographical location tag, and a score. The score may be an audience score generated by the next best audience container 1704 (see FIG. 17) or the next best audience task 1912 (see FIG. 19).

The product trend data panel 5204 may display key statistics about products related to the entity. For example, the product trend data panel 5204 may display the number of prescriptions for a pharmaceutical product written by the selected health care provider for three time periods compared to the national average. The user may toggle to different products using the "back" and "next" arrows at the bottom of the product trend data panel 5204.

The segment labels list 5206 may indicate segment labels related to the entity and the product trend data panel 5204. The segment labels may indicate a measure of new starts, historical increases, historical decreases, indication of pathologies and other predictions. The segment labels may include a rising star label, a grower label, a shrinker label or a switcher label. The segment labels may be generated by segment label generator 4222 (see FIG. 42).

The product share data panel 5208 may display market share information about products related to the entity. For example, the product share data panel 5208 may display the percent market share of a pharmaceutical product for three time periods compared to other products. The user may toggle to different products using the "back" and "next" arrows at the bottom of the product share data panel 5208.

The entity-related products list 5210 may display notable products and their labels. For example, the entity-related products list 5210 may display the top 3 increasing pharmaceutical products and the top 3 decreasing pharmaceutical products for the selected health care provider.

Reference is next made to FIG. 53, which shows another user interface diagram 5300 in accordance with one or more embodiments. User interface diagram 5300 includes an entity details panel 5301. User interface diagram 5300 may be provided by user applications 110 and 112 (see FIG. 1) on user devices.

Entity details panel 5301 may be used to track the engagement and changes of an entity over time. Entity details panel 5301 may include entity identifiers 5302 and a history of engagement 5304. Entity identifiers 5302 may include name, photograph, specialty and location. The history of engagement 5302 may include information about each interaction between the entity and the user. The information about interactions may include the date of interaction, the time of interaction, the channel, the communications, the entity's response and any resulting predictions, recommendations or score changes. For example, the history of engagement 5302 may list all interactions between the user and a health care provider such as e-mails and phone calls. The history of engagement 5302 may create a new list item when the audience score of a health care provider changes.

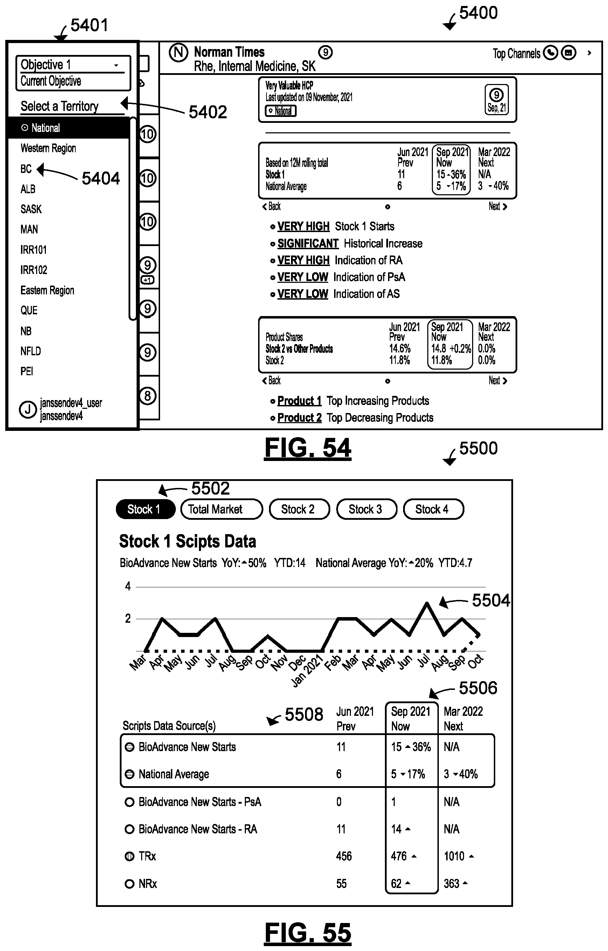

Reference is next made to FIG. 54, which shows another user interface diagram 5400 in accordance with one or more embodiments. User interface diagram 5400 includes an objective builder panel 5401. User interface diagram 5400 may be provided by user applications 110 and 112 (see FIG. 1) on user devices.

The user may interact with objective builder panel 5401 to create an objective such as a next best audience prediction objective. The objective input by the user will direct the analysis and determine the results shown to the user in entity ranking panel 5102 (see FIG. 51). The objective builder panel 5401 may include an objective element 5402 and an objective element option 5404.

Objective element 5402 may be any type of data that the user would like to add to the objective. The objective element 5402 may be an entity such as a product, a product class, a geographic area or a subject. The objective element 5402 may be any type of data shown in FIG. 3. There may be more than one objective element 5402 in the objective builder panel 5401.

Objective element option 5404 may be an instance of the objective element 5402. The user may select an objective element option 5404 to specify the scope of the objective. For example, the user may select a province for the objective when the objective element is a territory.

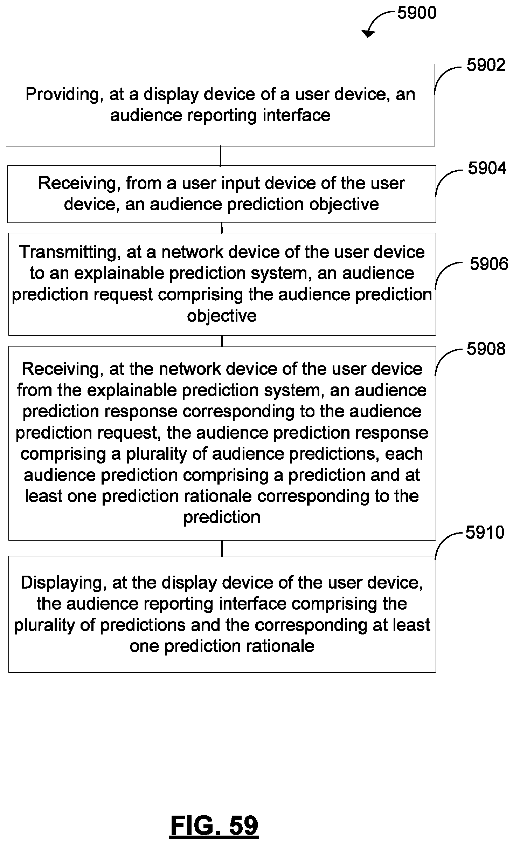

Reference is next made to FIG. 59, showing another method diagram 5900 in accordance with one or more embodiments. The method diagram 5900 provides for prediction and reporting of next-best audience recommendations.

At 5902, at a display device of a user device, providing an audience reporting interface. The audience reporting interface may be, for example, the one shown in FIGs. 47, 51, 52, 53, and 54.

At 5904, a user input device of the user device, receives an audience prediction objective. The audience prediction objective may be received from a user using user applications 110 and 112 (see FIG. 1), or by an API call. The prediction objective can include references to one or more entities, such as CRM users, clients and customers within the CRM data, sales and marketing staff in the CRM data, organizational units or geographies in the CRM, initiating subjects such as healthcare providers, products, patients, etc. as generally described by entity based data set 302 (see FIG. 3). The prediction objective may be a business objective. The prediction objective may be a value of interest related to an initiating subject, such as change in prescription volume, change in prescribing share, volume or share. The prediction objective may correspond to one or more objective labels (see e.g. FIGs. 12, 13, 14, 15, and 20).

At 5906, an audience prediction request is transmitted at a network device of the user device to an explainable prediction system, the audience prediction request comprising the audience prediction objective.

At 5908, an audience prediction response is received at the network device of the user device from the explainable prediction system, the audience prediction response corresponding to the audience prediction request, the audience prediction response comprising a plurality of audience predictions, each audience prediction comprising a prediction and at least one prediction rationale corresponding to the prediction.

At 5910, the audience reporting interface is displayed at the display device of the user device, the audience reporting interface comprising the plurality of predictions and the corresponding at least one prediction rationale.

Optionally, each of the plurality of audience predictions may include an audience score; and the audience reporting interface may display the plurality of audience predictions in a ranked list ranked based on the corresponding audience scores.

Optionally, each of the plurality of audience predictions may correspond to an initiating subject, optionally a healthcare provider.

Optionally, each of the plurality of audience predictions may include one or more audience segments, and the method may further include: displaying, at the display device of the user device, the one or more audience segments on the ranked list on the audience reporting interface.

Optionally, the method may further include displaying, at the display device of the user device, a change in the audience score of a changing audience prediction in the plurality of audience predictions.

Optionally, the audience score may be a numerical score corresponding to an audience subject.

Optionally, the audience score may be a categorical score corresponding to an audience subject.

Optionally, each of the plurality of audience predictions may be an audience identifier, and the method may further include: receiving, from the user input device of the user device, a selection of a candidate audience prediction in the plurality of audience predictions; and displaying, at the display device of the user device, the audience reporting interface comprising audience data corresponding to the audience identifier associated with the candidate audience prediction.

Optionally, the method may further include: displaying, at the display device of the user interface, the audience reporting interface comprising the prediction rationale corresponding to the candidate audience prediction.

Optionally, the prediction rationale may include at least one explanation for the candidate prediction.

Optionally, the method may further include: receiving, from the user input device of the user device, a selection of a candidate audience prediction in the plurality of audience predictions; and displaying, at the display device of the user device, the audience reporting interface comprising contact timeline data corresponding to the audience identifier associated with the candidate audience prediction.

Optionally, the method may further include: receiving, from the user input device of the user device, a note input corresponding to an entry of the contact timeline data; and transmitting, from the network device to the explainable prediction system, the note input corresponding to an entry of the contact timeline data.

Optionally, each of the plurality of audience predictions may include at least two corresponding audience scores, the at least two corresponding audience scores comprising a first audience score for a prior time period and a second audience score for a current time period, and the method may further include: receiving, from the user input device of the user device, a selection of a candidate audience prediction in the plurality of audience predictions; and displaying, at the display device of the user device, the audience reporting interface comprising the first audience score for the prior time period and the second audience score for the current time period.

Optionally, the audience reporting interface may further comprise a channel communication prediction, the channel communication prediction corresponding to the audience identifier associated with the candidate audience prediction. Referring to FIG. 52, the channel communication prediction 5212 may be displayed on the audience reporting interface. The channel communication prediction 5212 may include one or more types of channel communication predictions 5212. The channel predictions 5212 may correspond to a preferred channel of communication with the audience subject. Other channels may be included in the prediction, as are known.

Referring back to FIG. 59, optionally, the channel communication prediction may comprise one of a face-to-face meeting channel prediction, a telephone call channel prediction, an email channel prediction, an advertisement channel prediction, a lunch and learn channel prediction, a learning channel prediction and a sample drop channel prediction. Other channels may be included in the prediction, as are known.

### Next Best Channel

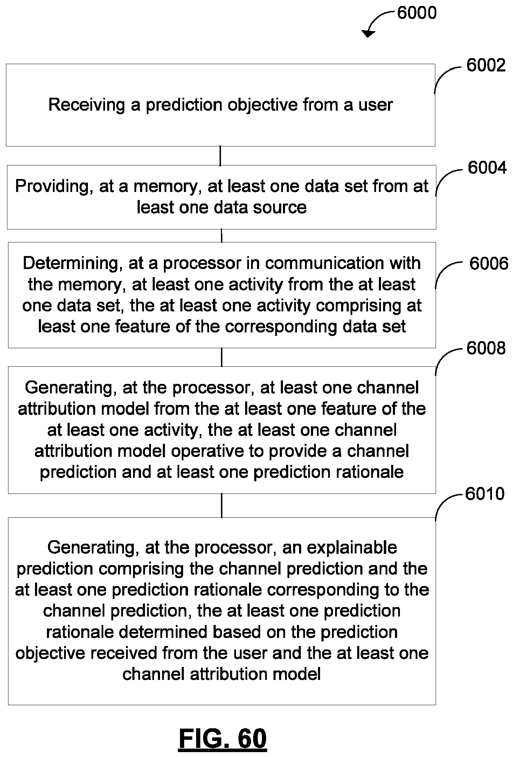

Reference is next made to FIG. 60, showing another method diagram 6000 in accordance with one or more embodiments. The method diagram 6000 is a computer-implemented method for providing explainable predictions.

At 6002, a prediction objective is received from a user. The prediction objective may be received over a network connection from an application running on a client device, a web browser running on a client device connecting to the user applications 110 or 112 (see e.g. FIG. 1), or by an API call. The prediction objective can include references to one or more entities, such as CRM users, clients and customers within the CRM data, sales and marketing staff in the CRM data, organizational units or geographies in the CRM, initiating subjects such as healthcare providers, products, patients, etc. as generally described by entity based data set 302 (see FIG. 3). The prediction objective may be a business objective. The prediction objective may be a value of interest related to an initiating subject, such as change in prescription volume, change in prescribing share, volume or share. The prediction objective may correspond to one or more objective labels (see e.g. FIGs. 11, 12, 13, 14, 15, and 20).

At 6004, at least one data set from at least one data source is provided at a memory. The at least one data source may be, for example, the one or more data sources storing one or more data sets in FIG. 3.

At 6006, at least one activity is determined at a processor in communication with the memory, from the at least one data set, the at least one activity comprising at least one feature of the corresponding data set.

At 6008, generating, at the processor, at least one channel attribution model from the at least one feature of the at least one activity, the at least one channel attribution model operative to provide a channel prediction and at least one prediction rationale.

Optionally, the generating the at least one channel attribution model from the at least one feature of the at least one activity comprises: determining a time-indexed activity sequence associated with the prediction outcome; determining a lift metric of each of at least two channels, each of the at least two channels corresponding to an activity from the time-indexed activity sequence; and generating the channel attribution model based on the at least one matching activity sub-sequence associated with the prediction outcome.

The at least one channel attribution model may operate to provide channel predictions for an initiating subject.

The lift metric may be generated for each of at least two channels. The lift metric may be a measure of the performance of a particular channel in view of marketing activities connected to the prediction objective. Lift may be the ratio of target response divided by average response.

Optionally, the determining the lift metric of each of at least two channels includes: determining a subject conversion ratio for each of the at least two channels; determining a control subject group; determining a control conversion ratio for each of the at least two channels based on the control subject group; and determining the lift metric for each of the at least two channels based on the subject conversion ratio and the control conversion ratio.

Optionally, the lift metric for each of the at least two channels may include a weighted combination such as a 65% weighting of the subject conversion ratio and a 35% weighting of the control conversion ratio.

Optionally, the determining a control subject group may include: determining a lookalike subject group based on the subject identifier and a lookalike subject model; determining the control subject group based on the lookalike subject group and a propensity score determined for each subject of the lookalike subject group.

The lookalike subject group may be determined based on the lookalike model as described in FIGs. 16, 21 and 22. The lookalike group may determine one or more subjects that may be similar to the subject identified with the subject identifier (see e.g. FIG. 48).

At 6010, generating, at the processor, an explainable prediction comprising the channel prediction and the at least one prediction rationale corresponding to the channel prediction, the at least one prediction rationale determined based on the prediction objective received from the user and the at least one channel attribution model.

Optionally, each of the at least two channels may include one of a face-to-face meeting channel, a telephone call channel, an email channel, an advertisement channel, a lunch and learn channel, a learning channel, a sample drop channel. These different channels may correspond to interactions between one or more salespersons (or users of the explainable prediction system).

Optionally, the time-indexed activity sequence may be a predetermined length of time.

Optionally, the predetermined length of time may be 6 months.

Optionally, the prediction objective from the user may be received in a prediction request at a network device in communication with the processor, and the method may further include: transmitting, using the network device, a prediction response comprising the explainable prediction to the user.

### User Interfaces

Reference is next made to FIG. 55, which shows another user interface diagram 5500 in accordance with one or more embodiments. User interface diagram 5500 may show a user interface provided by software application 110 and 112 (see FIG. 1) for providing reports on product entities 5502. Product entities 5502 may include information on "Stock 1", "Stock 2", "Stock 3", "Stock 4", and "Total Market". The selected product "Stock 1" may have data shown related to its market performance 5508 in terms of "New Starts" or new patient courses. For example, the Stock 1 product may include data such as "New Starts" of the product, and a comparison with the national or geographic average. The market performance 5508 may be broken down over different time frames 5506 as shown.

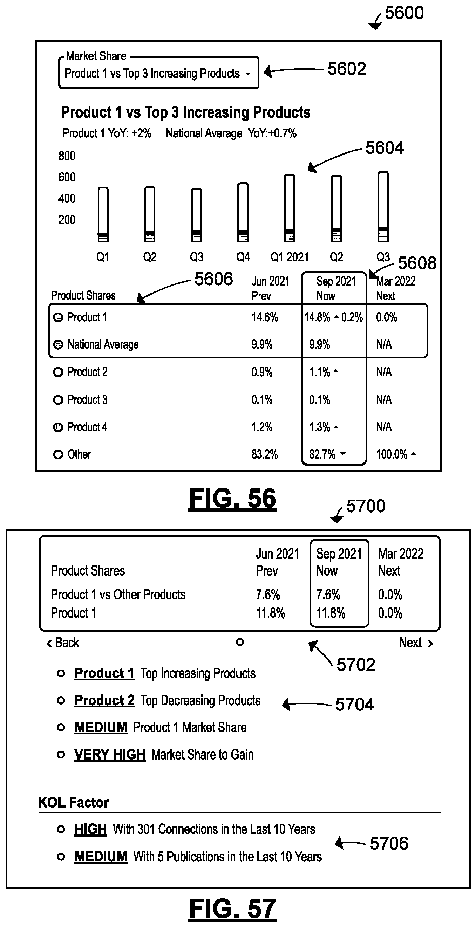

Reference is next made to FIG. 56, which shows another user interface diagram 5600 in accordance with one or more embodiments. User interface diagram 5600 may show a user interface provided by software application 110 and 112 (see FIG. 1) for providing reports on product entities including market share reports 5602 comparing a first product entity with the top three increasing products. The user interface 5600 may include a quarter-by-quarter breakdown 5604 showing a comparison 5606 in terms of market share for Product 1 compared to a national or geographic average. The market share performance 5606 may be broken down over different time frames 5608 as shown.

Reference is next made to FIG. 57, which shows another user interface diagram 5700 in accordance with one or more embodiments. The user interface diagram 5700 shows a prediction rationale 5704, and further a key opinion leader rationale 5706. The prediction rationale 5704 may indicate one or more explanations for a prediction related to a product. Key opinion leader rationale 5706 may indicate one or more explanations for a prediction related to the products connections with key opinion leaders (or initiating subjects).

The present invention has been described herein by way of example only. Various modification and variations may be made to these exemplary embodiments without departing from the spirit and scope of the invention, which is limited only by the appended claims.

## Claims

1. A computer-implemented method for providing explainable predictions, comprising:
receiving a prediction objective from a user;
providing, at a memory, at least one data set from at least one data source;
determining, at a processor in communication with the memory, at least one activity from the at least one data set, the at least one activity comprising at least one feature of the corresponding data set;
generating, at the processor, at least one attribution model from the at least one feature of the at least one activity, the at least one attribution model operative to provide a prediction and at least one prediction rationale; and
generating, at the processor, an explainable prediction comprising the prediction and the at least one prediction rationale corresponding to the prediction, the at least one prediction rationale determined based on the prediction objective received from the user and the at least one attribution model.

2. The method of claim 1, wherein the determining the at least one activity further comprises:
- determining at least one activity label corresponding to the at least one activity, the at least one activity label comprises a time-series activity label based on time series data in the at least one data set; and
- associating the at least one activity label with an initiating subject, wherein the initiating subject is optionally a healthcare provider.

3. The method of claim 2, wherein the at least one activity label comprises:
- a static activity label based on the at least one data set, the static activity label comprising one of a trend label, a frequency label, a market driver label and a loyalty label;
- a prediction outcome determined from the prediction objective, the prediction outcome comprising one of market share, sales volume, and patient count; and
- a metric of the prediction outcome, the metric comprising a numerical value corresponding to an increase value, a decrease value, or a neutral value of the prediction outcome.

4. The method of claim 3, wherein the generating the at least one attribution model from the at least one feature of the at least one activity comprises:
- determining a plurality of time-indexed activity sequences associated with the prediction outcome;
- identifying at least one matching activity sub-sequence in the plurality of time-indexed activity sequences, the at least one matching activity sub-sequence including a preceding sequence of actions based on a candidate activity label; and
- generating an attribution model based on the at least one matching activity sub-sequence associated with the prediction outcome.

5. The method of claim 4 wherein the preceding sequence of actions is a variable length activity window.

6. The method of claim 4, wherein the identifying the at least one matching activity sub-sequence comprises:
- determining a plurality of candidate subsequences in a plurality of time-indexed activity sequences, each of the plurality of candidate subsequences based on the candidate activity label and the preceding sequence of actions;
- generating a trend model based on the at least one matching activity sub-sequence;
- wherein the determined metric is a lift metric associated with each of the plurality of candidate subsequences; and
- wherein the at least one matching activity sub-sequence is selected based on the lift metric associated with each of the plurality of candidate subsequences.

7. The method of claim 6 further comprising:
- generating a binary classification model based on the at least one matching activity sub-sequence and the associated lift metric;
- wherein the generating the at least one attribution model from the at least one feature of the at least one activity comprises generating the at least one attribution model based on an output of the SPMF algorithm, the binary classification model, and the trend model; and
- wherein the attribution model is one of a Shapley model, and a Markov model.

8. The method of claim 7, further comprising:
- determining an initiation model for each of a plurality of initiating subjects, each initiation model based on the at least one activity of the corresponding initiating subject and comprising a regression model;
- generating a predicted metric for a future time period based on the initiation model for the corresponding initiating subject;
- using an explanatory algorithm to generate a prediction explanation based on the at least one attribution model; and
- wherein the predicted metric comprises a numerical prediction and the prediction explanation; and
- wherein the explanatory algorithm comprises at least one of a Local Interpretable Model-Agnostic Explanation algorithm or a SHapley Additive explanations (SHAP) algorithm.

9. The method of claim 8, further comprising:
- determining a segment label for each corresponding initiating subject based on the predicted metric for the future time period; and
wherein the regression model is one of an ARIMA model or an XGBoost model.

10. The method of claim 9 wherein:
- the segment label is determined based on an odds ratio model or a classifier; and
- the segment label comprises a rising star label, a grower label, a shrinker label, or a switcher label.

11. The method of claim 9, wherein the determining the segment label comprises:
- determining an embedding vector based on data from the at least one data source associated with the initiating subject; and
- generating at least one matching seed, the at least one matching seed based on the embedding vector, the at least one matching seed corresponding to a predicted segment label.

12. The method of claim 11, wherein the predicted segment label is a lookalike segment label for the initiating subject based on the at least one matching seed.

13. A computer-implemented system for providing explainable predictions, comprising:
- a memory, the memory storing at least one attribution model;
- a network device;
- a processor in communication with the memory and the network device, the processor configured to:
- receive a prediction objective from a user via the network device;
- receive at least one data set from at least one data source via the network device;
- determine at least one activity from the at least one data set, the at least one activity comprising at least one feature of the corresponding data set;
- generate at least one attribution model from the at least one feature of the at least one activity, the at least one attribution model operative to provide a prediction and at least one prediction rationale; and
- generate an explainable prediction comprising the prediction and the at least one prediction rationale based on the prediction objective received from the user and the at least one attribution model.

14. The computer-implemented system of claim 13, wherein the generating the at least one attribution model from the at least one feature of the at least one activity comprises:
- determining a plurality of time-indexed activity sequences associated with the prediction outcome;
- identifying at least one matching activity sub-sequence in the plurality of time-indexed activity sequences, the at least one matching activity sub-sequence including a preceding sequence of actions based on a candidate activity label; and
- generating an attribution model based on the at least one matching activity sub-sequence associated with the prediction outcome.

15. The computer-implemented system of claim 14, wherein the processor is further configured to:
- generate a binary classification model based on the at least one matching activity sub-sequence and the associated lift metric;
- wherein the generating the at least one attribution model from the at least one feature of the at least one activity comprises generating the at least one attribution model based on an output of a SPMF algorithm, the binary classification model, and the trend model; and
- wherein the attribution model is one of a Shapley model, and a Markov model.
